# EUROPÄISCHE PATENTSCHRIFT

(11) **EP 0 905 180 B1**
(45) Veröffentlichungstag und Bekanntmachung des Hinweises auf die Patenterteilung: **21.05.2003**
(21) Anmeldenummer: 98810950.0
(22) Anmeldetag: 22.09.1998
(51) Int. Cl.: C08K 5/00, C08K 9/08, C08J 3/20

(54) **Staubfreie epoxidhaltige Stabilisatorgranulate und Verfahren zur Herstellung**
Dust free stabiliser granules containing epoxide and process of their preparation
Granules de stabilisateur exempts de poussière contenant de l'epoxide et procédé de leur préparation

(30) Priorität: 29.09.1997 EP 97810712
(43) Veröffentlichungstag der Anmeldung: 31.03.1999
(73) Patentinhaber: Ciba Specialty Chemicals Holding Inc., 4057 Basel (CH)
(72) Erfinder: Hoffmann, Kurt, 79585 Weitenau-Steinen (DE); Herbst, Heinz, 64646 Heppenheim (DE); Pfaendner, Rudolf, 64668 Rimbach (DE)

(56) Entgegenhaltungen:
- EP-A- 0 295 534
- EP-A- 0 719 824
- WO-A-94/29377
- GB-A- 1 358 637
- US-A- 4 446 086

## Beschreibung

Die vorliegende Erfindung betrifft staubarme Granulate von Kunststoff-Additiven (Stabilisatoren), welche feste Epoxide enthalten, ein Verfahren zur Herstellung dieser Granulate und die Verwendung dieser Granulate zur Stabilisierung von Polymeren.

Organische Polymere (Kunststoffe), im besonderen Polyolefine, benötigen im allgemeinen den Zusatz von Additiven, um verarbeitet werden zu können und um die Gebrauchseigenschaften über den Nutzungszeitraum beizubehalten. Schädigend für organische Polymere sind neben Licht und Wärme auch Reste der zur Herstellung verwendeten Katalysatoren. Aus dem Stand der Technik sind die verschiedenartigsten Stoffklassen bekannt, welche als Additive und Stabilisatoren verwendet werden können. Wegen der vielfältigen und nicht immer im einzelnen bekannten Prozesse der Schädigung von organischen Polymeren, werden häufig Mischungen aus mehreren Additiven eingesetzt.

Im allgemeinen liegen die Additive in Pulverform vor. Additivmischungen in Pulverform haben jedoch eine Reihe von Nachteilen, wie Staubentwicklung bis hin zur Staubexplosion, Neigung zum Entmischen und auch Dosierschwierigkeiten. Deshalb wird nach Handelsformen gesucht, welche diese Nachteile nicht aufweisen. Es werden hierzu beispielsweise Agglomerationsverfahren (wässrig und gegebenenfalls mit einem Dispergator), Mischverfahren mit Bindemittel oder Kompaktierung mit einer Pelletpresse beschrieben. Die so erhältlichen Handelsformen zeigen jedoch in den meisten Fällen bisher noch keine ausreichenden mechanischen Eigenschaften. Häufig enthalten die Handelsformen noch Wasser oder Bindemittel, was bei der nachfolgenden Einarbeitung in ein organisches Polymer Störungen verursachen kann oder besondere Massnahmen erfordert.

Es besteht daher der Wunsch nach granulatförmigen, lagerstabilen Additivmischungen, welche keine Bindemittel enthalten, die das Polymer, in das sie eingearbeitet werden, nachteilig beeinflussen. Ein solches Granulat ist auch unter dem immer mehr an Bedeutung gewinnenden ökologischen Aspekt (geringe Staubbelastung, Materialeinsparung) wünschenswert.

Überraschenderweise erhält man ein Granulat von Kunststoff-Additiven, das den Anforderungen der Technik in hohem Masse genügt, indem man einzelne Kunststoff-Additive oder eine Mischung von Kunststoff-Additiven und mindestems eine bei Raumtemperatur feste multifunktionelle Epoxidverbindung soweit erwärmt, dass die Epoxidverbindung im wesentlichen aufgeschmolzen ist, die Temperatur jedoch für eine Vernetzungsreaktion der Epoxidgruppen noch nicht ausreichend hoch ist und die anschliessende Formgebung im plastischen Zustand durchgeführt werden kann.

Die erfindungsgemässen Granulate von Kunststoff-Additiven sind sehr uniform und zeichnen sich durch ausgezeichnete Schüttguteigenschaften, insbesondere Staubarmut, Rieselfähigkeit und Abriebfestigkeit, sowie eine gute Lagerstabilität aus. Sie lassen sich sehr gut den zu stabilisierenden organischen Polymeren zudosieren und weisen ein günstigeres Homogenisierungs- und Einarbeitungsverhalten auf als die herkömmlichen Pulvermischungen.

Epoxidhaltige Zusammensetzungen können die Langzeit- und/oder Gebrauchseigenschaften von Polymeren zusätzlich verbessern, insbesondere von Polymerrecyclaten oder gefüllten Systemen. Die WO 94/29377 liefert hierfür Beispiele.

Überraschend wurde gefunden, dass die erfindungsgemäss hergestellten staubarmen Granulate zu einer weiteren Verbesserung der Schlagzähigkeit nach thermischer Belastung führen, im Vergleich zu einer rein physikalischen Mischung der einzelnen Komponenten.

Die Erfindung betrifft ein staubarmes Granulat von Kunststoff-Additiven, enthaltend
a) ein phenolisches Antioxidans, ein organisches Phosphit oder Phosphonit, ein Phosphonat, ein sterisch gehindertes Amin oder einen UV-Absorber einzeln oder ein Gemisch dieser Verbindungen und
b) mindestens eine bei Raumtemperatur feste Epoxidverbindung.

Im Rahmen der vorliegenden Erfindung wird unter staubarmem Granulat ein Granulat verstanden, dessen Staubemission im Heubachtest geringer als 0,15 Gew.-% (nach 5 Minuten) ist.

Bevorzugt ist ein Granulat, welches als Komponente b) ein multifunktionelles Epoxid enthält.

In einer bevorzugten Ausführungsform besteht das erfindungsgemässe Granulat zu mindestens 10-90 Gew.-%, besonders bevorzugt zu mindestens 20-80 Gew.-% und ganz besonders bevorzugt 50-80 Gew.-% aus einer Epoxidverbindung.

Bevorzugte feste multifunktionelle Epoxide sind Verbindungen mit einem Erweichungspunkt von 40-150° C. Diesen festen Epoxiden können in geringem Umfang flüssige Epoxide beigemischt sein. Soweit nur geringe Mengen beigefügt sind, wird die Rieselfähigkeit und Granulierbarkeit des Gemisches nicht beeinträchtigt.

Die nach ISO 3435 definierte Korngrössenverteilung der erfindungsgemässen Granulate liegt bevorzugt zwischen 1 mm bis 6mm, besonders bevorzugt zwischen 2mm und 6mm.

Bevorzugt ist die lose Schüttdichte grösser 500g/l, wobei die lose Schüttdichte von der Dichte der Gesamtmischung abhängt und bei Mischungen deren Dichte stark von dem des Epoxids abweicht auch höher oder tiefer liegen kann. Die angegebenen Werte beziehen sich daher auf Mischungen bei denen die Dichte nicht mehr als 10% von der des Epoxides abweicht. Bei grösseren Abweichungen der Dichte der Mischung ist die lose Schüttdichte mit dem Faktor aus dem Verhältnis der Dichte von Epoxid zu der Dichte der Mischung zu korrigieren.

Die Rieselfähigkeit wird nach DIN 53492 bestimmt und beträgt bevorzugt kleiner 15s (tR15), besonders bevorzugt kleiner 10s (tR15).

Die Bestimmung der Staubemission erfolgt, wie vorstehend erwähnt, durch den Heubachtest in einem praxisnahen Versuchsaufbau, wobei das Testmaterial in Bewegung gehalten wird, um auch die Staubungsneigung durch Abrieb zu erfassen. Die verwendete Apparatur wird von der Firma Heubach Engineering GmbH, Langelsheim, DE, hergestellt. Im einzelnen wird das Testmaterial (Einwaage 50g) in einem Staubentwicklungsgerät von 2,51 Inhalt, in dem drei Schikanen in einem Winkel von 45° zur Gehäusewand in Drehrichtung angeordnet sind, 5 Minuten bei 30U/min (entsprechend einer Umfangsgeschwindigkeit von 19cm/sec) bewegt, währenddessen ein Luftstrom von 0,32l/sec den Feinanteil auf einem Filter abscheidet. Der so ermittelte Feinanteil übersteigt bevorzugt nicht mehr als 0,1 Gew.-%.

Als weitere Kunststoff-Additive, die im Granulat enthalten sein können, kommen Verbindungen aus der Gruppe der Hydrotalcite, Metalloxide oder -carbonate, Metallseifen wie z. B. Ca-Stearat, Antistatika, Antiblockmittel, Flammschutzmittel, Thioester, interne und externe Gleitmittel, Verarbeitungshilfsmittel oder Pigmente in Frage.

Weiterhin kann das Granulat auch zusätzliche Stoffe wie beispielsweise thermoplastische Polymere (z.B. Polyolefine oder Polyolefinwachse) enthalten.

Diese weiteren Kunststoff-Additive, die im Granulat vorhanden sein können, sind für sich allein oder auch in verschiedenen Kombinationen bekannt. Viele der im folgenden beschriebenen Kunststoff-Additive sind kommerziell erhältlich. Die weiteren Kunststoff-Additive lassen sich nach bekannten Verfahren herstellen und liegen unter Normalbedingungen als Feststoffe (z.B. Pulver oder Granulate), Schmelzen (z.B. direkt aus der Synthesestufe) oder auch Flüssigkeiten vor.

Ein weiterer Gegenstand der Erfindung ist ein Verfahren zur Herstellung von Granulat von Kunststoff-Additiven, dadurch gekennzeichnet, dass man
a) ein phenolisches Antioxidans, ein organisches Phosphit oder Phosphonit, ein Phosphonat, ein sterisch gehindertes Amin oder einen UV-Absorber einzeln oder ein Gemisch dieser Verbindungen und
b) mindestens eine bei Raumtemperatur feste Epoxidverbindung
soweit erwärmt, dass mindestens 80 Gew.-% der Epoxidverbindung geschmolzen ist, die Schmelze durch eine mit Düsen oder Löchern versehene Platte, wobei der Düsen- oder Lochdurchmesser zwischen 1 und 10 mm beträgt, presst und die so erhaltenen Stränge im plastischen Zustand zu Granulaten schneidet.

Bevorzugt beträgt die Temperatur vor der Austrittsdüse (am Düsenkopf) zwischen 60-160° C, besonders bevorzugt 80-120°C.

Bevorzugt beträgt der Düsen- oder Lochdurchmesser zwischen 2 und 6mm.

Vorteilhaft werden die Kunststoff-Additive und die Epoxidverbindung in einem Ein- oder Zweiwellenextruder aufgeschmolzen; solche Extruder sind in der kunststoffverarbeitenden Industrie bekannt und werden beispielsweise von den Firmen Buss (CH), Brabender (DE), Werner und Pfleiderer (DE) oder Bühler (CH) vertrieben. Die Kunststoff-Additive werden hierbei im allgemeinen als Feststoffe eingesetzt (z.B. Pulver oder Granulate), es können jedoch auch Schmelzen, wässrige Suspensionen oder in untergeordneten Mengen flüssige Additive eingesetzt werden. Nach oder auch während des im noch weichen Zustand erfolgenden Schneidens der Pressstränge, nach Durchgang durch eine Düse beziehungsweise Lochplatte, erfolgt die Kühlung der Granulatteilchen. Die Kunlung kann als Nasskühlung mit Wasser (beispielsweise im Wasser, durch einen Wasser-Film, Wasser-Ring usw.) oder vorzugsweise mit Luft (beispielsweise Luft-Film, Luft-Wirbel usw.) oder auch kombiniert erfolgen. Im Falle einer Kühlung mit Wasser ist eine anschliessende Entwässerung und Trocknung (vorzugsweise in einem Wirbel- oder Fliessbett-Trockner) erforderlich. Die genannten Kühlungstechniken sind bekannt in ihren technischen Ausführungsformen. Wesentlich ist, dass die Granulierung noch im plastischen Zustand vor dem eigentlichen Kühlungsschritt erfolgt, im Unterschied zu der in der Technik üblichen Stranggranulation und Mahlverfahren.

Bei der Herstellung der Epoxid/Kunststoff-Additivschmelze wird üblicherweise nicht bei einer einzigen konstanten Temperatur gearbeitet, sondern die Masse durchläuft in einem kontinuierlichen Verfahren ein Temperaturprofil. Zweckmässig wird hierbei eine Spitzentemperatur von maximal 160°C nicht überschritten. Die genannten Temperaturen beziehen sich auf die Temperatur der Masse.

Weiterhin bevorzugt ist ein Verfahren bei dem eine Entgasung zusätzlich angewendet wird. Bei der Durchführung des Verfahrens ist diese Entgasungsmöglichkeit bevorzugt in einem Bereich angebracht in welchem die Epoxidverbindung geschmolzen wird oder in einem nachgeordneten Bereich.

Die nach dem beschriebenen Verfahren erhältlichen Kunststoff-Additiv-Granulate sind ebenfalls ein Gegenstand der vorliegenden Erfindung. Die beschriebenen Bevorzugungen gelten hierbei analog.

Eine besonders bevorzugte Ausführung der Erfindung ist die Kombination von 30-80 Gew.- % Epoxidverbindung mit 5-25 Gew.-% eines Antioxidans vom Typ der sterisch gehinderten Phenole, 5-25 Gew.-% eines Phosphits oder Phosphonits, 10-40 Gew.-% CaO und 1-5 Gew.-% Ca-Stearat.
Als Epoxidverbindung in dieser Granulatmischung ist ein Epoxid auf Basis Bisphenol-A-diglycidylether besonders bevorzugt.

Weiterhin besonders bevorzugt ist die Kombination von 50-80 Gew.-% Epoxidverbindung mit 50-20 Gew.-% eines Phosphonats.

Die Antioxidantien vom Typ der sterisch gehinderten Phenole sind allgemein bekannt als Antioxidantien für organische Materialien und werden für die Stabilisierung von Polymeren häufig verwendet. Vorzugsweise enthalten diese Verbindungen mindestens eine Gruppe der Formel(X) 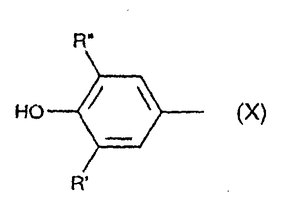 worin R' Wasserstoff, Methyl oder tert.Butyl und R" gegebenenfalls substituiertes Alkyl oder substituiertes Alkylthioalkyl bedeutet.

Besonders bevorzugt sind Verbindungen, die mindestens eine Gruppe der Formel 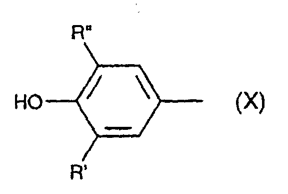 enthalten, worin R' Methyl oder tert.Butyl und R" gegebenenfalls substituiertes Alkyl oder substituiertes Alkylthioalkyl bedeutet.

Beispiele für solche Phenol-Antioxidantien sind:
1. Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'yl)-phenol und Mischungen davon.
2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenöl, 2,6-Di-dodecylthiomethyl-4-nonylphenol.
3. Hydrochinone und alkylierte Hydrochinone, z.B. 2,6-Di-tert-butyl-4-methoxyphenol, 2,5-Ditert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.
4. Tocopherole, z.B. α-Tocopherol, β-Tocopherol, γ-Tocopherol, δ-Tocopherol und Mischungen davon (Vitamin E).
5. Hydroxylierte Thiodiphenylether, z.B. 2,2'-Thio-bis-(6-tert-butyl-4-methylphenol), 2,2'-Thiobis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)-disulfid.
6. Alkyliden-Bisphenole, z.B. 2,2'-Methylen-bis-(6-tert-butyl-4-methylphenol), 2,2'-Methylenbis-(6-tert-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)-butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methyl-phenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.
7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid, Isooctyl-3,5-di-tert-butyl-4-hydroxybenzylmercaptoacetat.
8. Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis-(3,5-di-tert-butyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.
9. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.
10. Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)- 1,3,5-triazin, 2,4,6-Tris-(3,5-ditert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.
11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
12. Ester der β-(3,5-Di-tert-butyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
13. Ester der β-(5-tert-Butyl-4-hydroxy-3-methylphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis--(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicydo-[2.2.2]-octan.
14. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
15. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
16. Amide der β-(3,5-Di-tert-butyl-4-hydroxyphenyl)-propionsäure, wie z.B. N,N'-Bis-(3,5-ditert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

Bevorzugt sind die oben unter den Punkten 7, 9, 10, 12, 13, 14 und 16 insbesondere Punkt 7, 9, 10 und 12, aufgeführten Antioxidantien.

Weitere besonders bevorzugte Verbindungen sind: 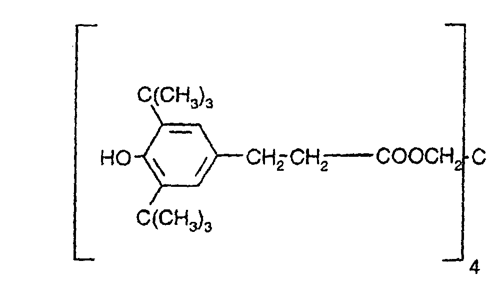 β-(3,5-Di-tert.-butyl-4-hydroxyphenyl) propionsäureester von Pentaerythrit 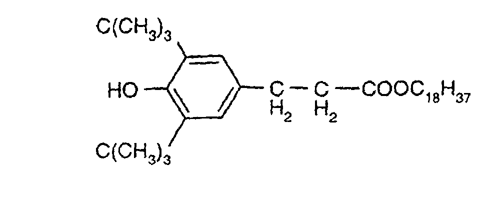 β-(3,5-Di-tert.-butyl-4-hydroxyphenyl) propionsäureoctadecylester 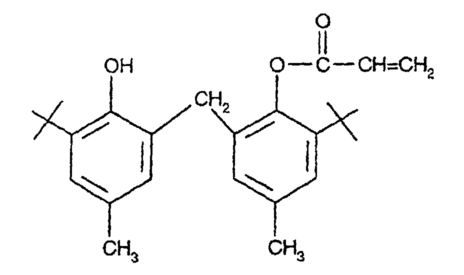 {2-Propensäure-2-(1,1-dimethylethyl)-6-[[3-(1,1-dimethylethyl)-2-hydroxy-5-methylphenyl]-methyl]-4-methylphenylester}; 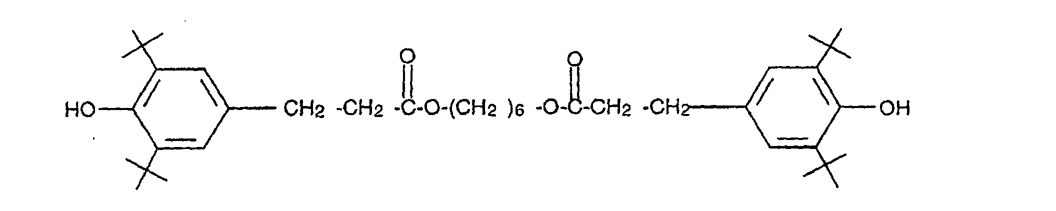 {3,5-Bis(1,1-dimethyl-ethyl)-4-hydroxy-phenylpropansäure-1,6-hexandiylester}; 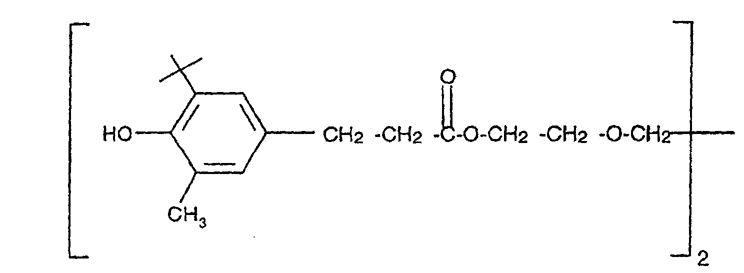 {3-(1,1-Dimethylethyl)-4-hydroxy-5-methyl-phenylpropansäure-1,2-ethandiylbis(oxy-2,1-ethandiyl)ester}; 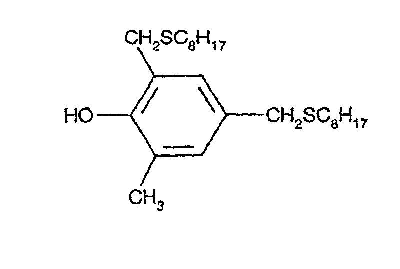 {2-Methyl-4,6-bis[(octylthio)methyl]-phenol}; 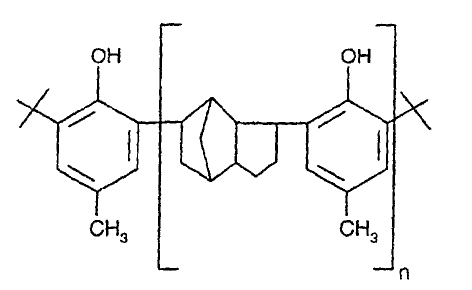 Butyliertes Reaktionsprodukt von para Kresol und Dicyclopentadien (mittleres Molekulargewicht 600-700) 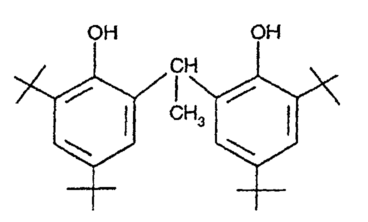 {2,2'-Ethyliden-bis-(4,6-di-tert.butylphenol)}; 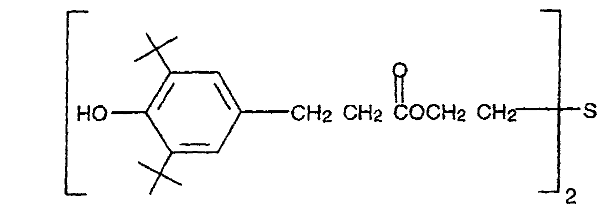 {3,5-Bis(1,1-dimethylethyl)-4-hydroxy-phenylpropansäure-thiodi-2,1-ethandiylester}; 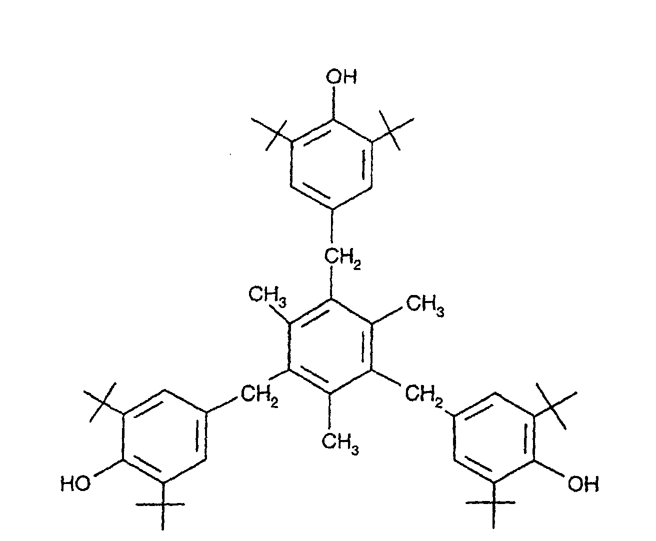 {4,4',4"-[(2,4,6-Trimethyl-1,3,5-phenyltriyl)tris-(methylen)]tris[2,6-bis(1,1-dimethylethyl)phenol]}; 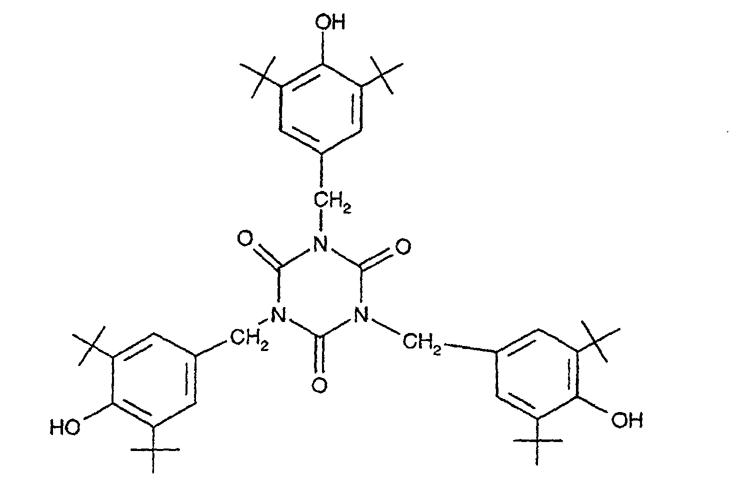 {1,3,5-Tris[[3,5-bis(1,1-dimethylethyl)-4-hydroxyphenyl]methyl]-1,3,5-triazin-2,4,6(1H,3H,5H)-trion}.

Die Menge der Antioxidantien vom Typ der sterisch gehinderten Phenole richtet sich nach der beabsichtigten Verwendung des Kunststoff-Additiv-Granulates, zweckmässig enthält das Granulat 0-90Gew.-%, bevorzugt 3-60Gew.-% Antioxidans vom Typ der sterisch gehinderten Phenole.

Beispiele für Phosphonate sind solche der Formel I 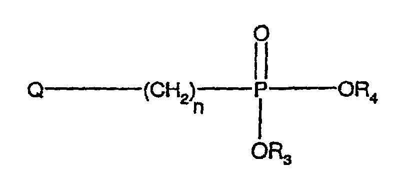 (I), worin
R₃ H, C₁-C₂₀-Alkyl, unsubstituiertes oder durch C₁-C₄-Alkyl substituiertes Phenyl oder Naphthyl bedeutet,
R₄ Wasserstoff, C₁-C₂₀-Alkyl, unsubstituiertes oder durch C₁-C₄-Alkyl substituiertes Phenyl oder Naphthyl; oder M^{r+} / r darstellt,
M^{r+} ein r-wertiges Metallkation oder das Ammoniumion ist,
n 0, 1, 2, 3, 4, 5 oder 6 bedeutet, und
r 1, 2, 3 oder 4 darstellt;
Q Wasserstoff, -X-C(O)-OR₇, oder einen Rest 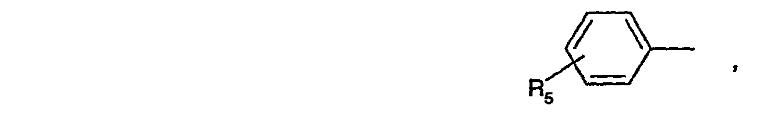 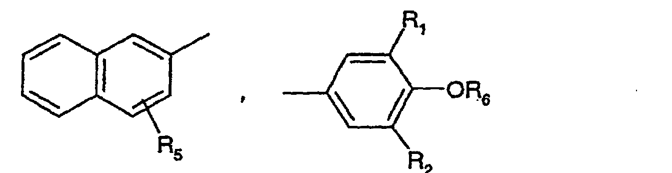 bedeutet,
R₁ iso-Propyl, tert-Butyl, Cyclohexyl oder mit 1-3 C₁-C₄-Alkylgruppen substituiertes Cyclohexyl bedeutet,
R₂ Wasserstoff, C₁-C₄-Alkyl, Cyclohexyl oder mit 1-3 C₁-C₄-Alkylgruppen substituiertes Cyclohexyl darstellt,
R₅, H, C₁-C₁₈-Alkyl, OH, Halogen oder C₃-C₇-Cycloalkyl ist;
R₆ H, Methyl, Trimethylsilyl, Benzyl, Phenyl, Sulfonyl oder C₁-C₁₈-Alkyl ist;
R₇ H, C₁-C₁₀-Alkyl oder C₃-C₇-Cycloalkyl ist;und
X Phenylen, mit C₁-C₄-Alkylgruppen substituiertes Phenylen oder Cyclohexylen bedeutet.

Bevorzugt sind sterisch gehinderte Hydroxyphenyl-alkyl-phosphonsäureester bzw. -halbester wie sie beispielsweise aus US-A-4778840 bekannt sind.

Besonders bevorzugt sind Verbindungen der Formel la 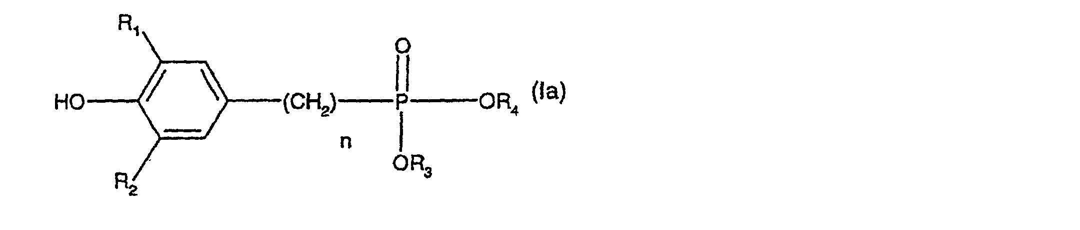 worin
R₁ H, iso-Propyl, tert-Butyl, Cyclohexyl oder mit 1-3 C₁-C₄-Alkylgruppen substituiertes Cyclohexyl bedeutet,
R₂ Wasserstoff, C₁-C₄-Alkyl, Cyclohexyl oder mit 1-3 C₁-C₄-Alkylgruppen substituiertes Cyclohexyl bedeutet,
R₃ C₁-C₂₀-Alkyl, unsubstituiertes oder durch C₁-C₄-Alkyl substituiertes Phenyl oder Naphthyl bedeutet,
R₄ Wasserstoff, C₁-C₂₀-Alkyl, unsubstituiertes oder durch C₁-C₄-Alkyl substituiertes Phenyl oder Naphthyl; oder M^{r+} / r darstellt,
M^{r+} ein r-wertiges Metallkation ist,
n 1, 2, 3, 4, 5 oder 6 bedeutet, und
r 1, 2, 3 oder 4 darstellt.

Halogen bedeutet Fluor, Chlor, Brom oder lod.

Bedeuten Substituenten Alkyl mit bis zu 18 Kohlenstoffatomen, so kommen hierfür die Reste wie Methyl, Ethyl, Propyl, Butyl, Pentyl, Hexyl und Octyl, Stearyl sowie entsprechende verzweigte Isomere in Frage, bevorzugt sind C₂-C₄-Alkyl.

Durch C₁-C₄-Alkyl substituiertes Phenyl oder Naphthyl, das vorzugsweise 1 bis 3, insbesondere 1 oder 2 Alkylgruppen enthält, bedeutet beispielsweise o-, m- oder p-Methylphenyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 2-Methyl-6-ethylphenyl, 4-tert-butylphenyl, 2-Ethylphenyl, 2,6-Diethylphenyl, 1-Methylnaphthyl, 2-Methylnaphthyl, 4-Methyhaphthyl, 1,6-Dimethylnaphthyl oder 4-tert-Butylnaphthyl.

Durch C₁-C₄-Alkyl substituiertes Cyclohexyl, das vorzugsweise 1 bis 3, insbesondere 1 oder 2 verzweigte oder unverzweigte Alkylgruppen-Reste enthält, bedeutet beispielsweise Cyclopentyl, Methylcyclopentyl, Dimethylcyclopentyl, Cyclohexyl, Methylcyclohexyl, Dimethylcyciohexyl, Trimethylcyclohexyl oder tert-Butylcyclohexyl.

Ein ein-, zwei-, drei- oder vier-wertiges Metallkation ist vorzugsweise ein Alkalimetall-, Erdalkalimetall-, Schwermetall- oder Aluminium-Kation, beispielsweise Na⁺, K⁺, Mg⁺⁺, Ca⁺⁺, Ba⁺⁺, Zn⁺⁺, Al⁺⁺⁺, oder Ti⁺⁺⁺⁺. Speziell bevorzugt ist Ca⁺⁺.

Bevorzugte Verbindungen der Formel I sind diejenigen, welche mindestens eine tert-Butylgruppe als Rest R₁ oder R₂ aufweisen. Ganz besonders bevorzugt sind Verbindungen worin R₁ und R₂ gleichzeitig tert-Butyl bedeutet.

Bevorzugt bedeutet n 1 oder 2 und ganz besonders bevorzugt 1.

Ebenfalls bevorzugt sind die Verbindungen der Formel II, III, IV, V und VI 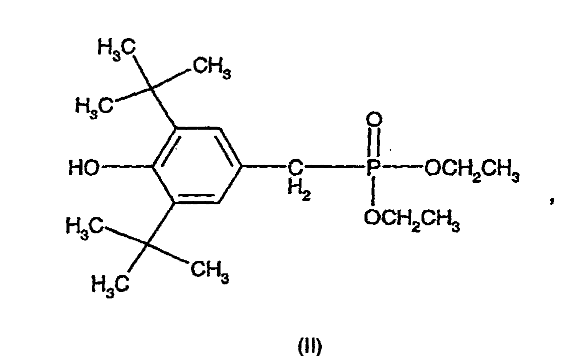 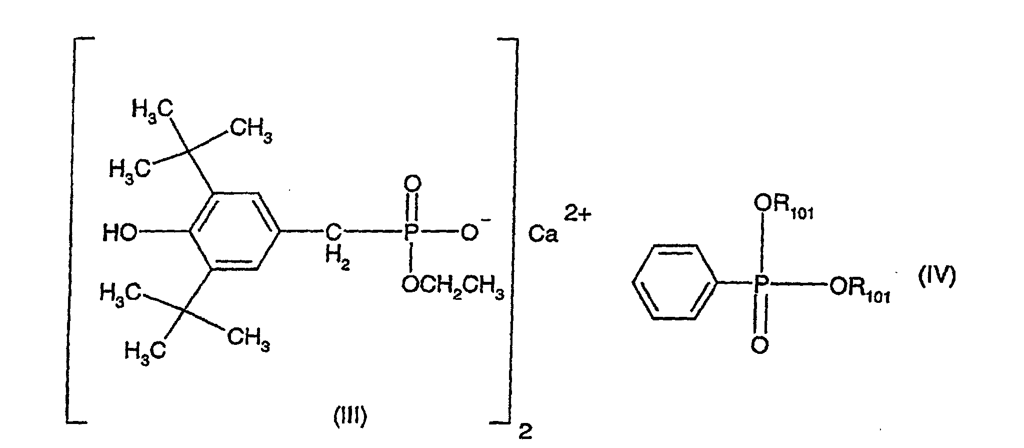 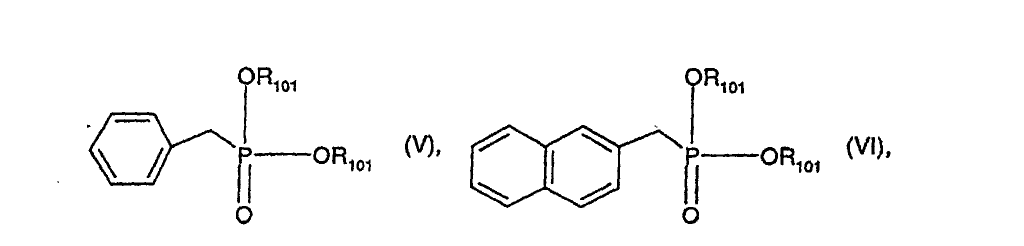 worin die R₁₀₁ unabhängig voneinander Wasserstoff oder M^{r+} / r bedeuten. Bedeutungen für M^{r+} / r sind bereits vorstehend angegeben

Die Verbindung der Formel II ist im Handel unter dem Namen Irganox®1222 (Ciba Spezialitätenchemie) und diejenige der Formel III unter dem Namen Irganox®1425 (Ciba Spezialitätenchemie) erhältlich.

Die Verbindungen IV, V und VI sind teilweise im Handel erhältlich oder nach Standardverfahren herstellbar.

Besonders bevorzugte Phosphonate sind Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäuremonoethylesters. Ganz besonders bevorzugt ist Diethyl-3,5-di-tert-butyl-4-hydroxybenzylphosphonat .

Die organischen Phosphite und Phosphonite sind ebenfalls als Stabilisatoren für Kunststoffe bekannt. Sie werden insbesondere als Verarbeitungsstabilisatoren für Polyolefine verwendet.

Es handelt sich hierbei vorwiegend um aromatische Phosphite und Phosphonite. Beispiele hierfür sind Triphenylphosphit, Diphenylalkylphosphite, Phenyldialkylphosphite, Tris(diphenylalkylphosphit)amine, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butyl-4-methylphenoxy)-2,4,8,10-tetraoxa-3,9-diphosphaspiro[5.5]undecan, 3,9-Tris-(2,4,6-tris-tert.butylphenoxy)-2,4,8,10-tetraoxa-3,9-diphosphaspiro[5,5]undecan, 2,4,6-Tris tert.butylphenyl-2-butyl-2 ethyl-1,3-propandiolphosphit und 2,2'-Ethyliden-bis-(4,6-ditert.butylphenyl)-fluorophosphit.

Besonders bevorzugt werden die folgenden Phosphite verwendet:
Tris-(2,4-di-tert.butylphenyl)-phosphit,

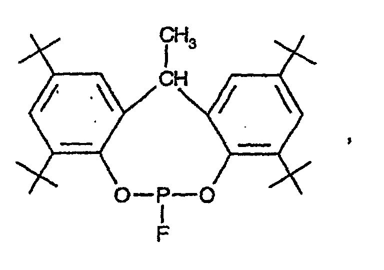

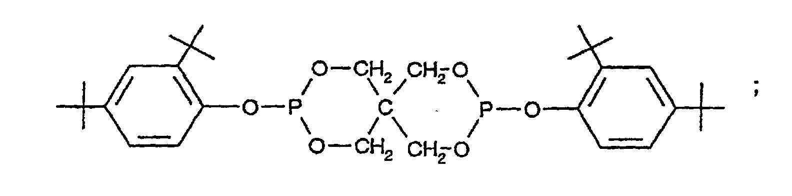

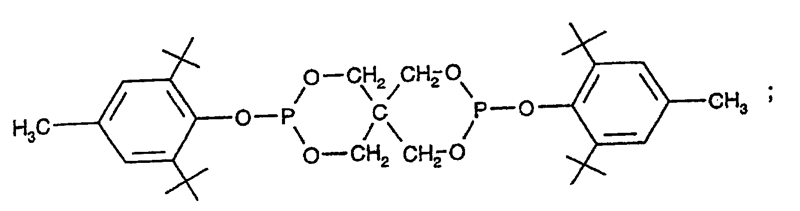

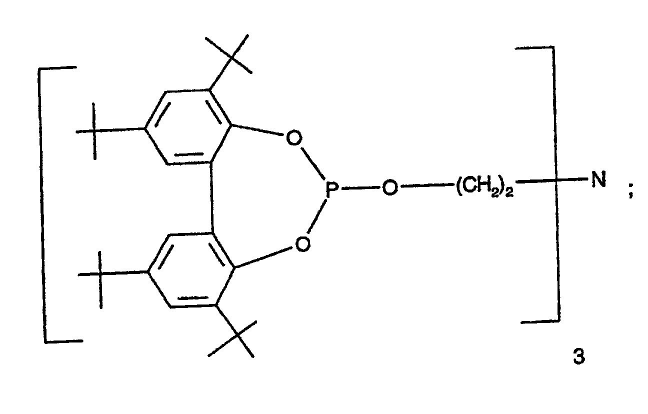

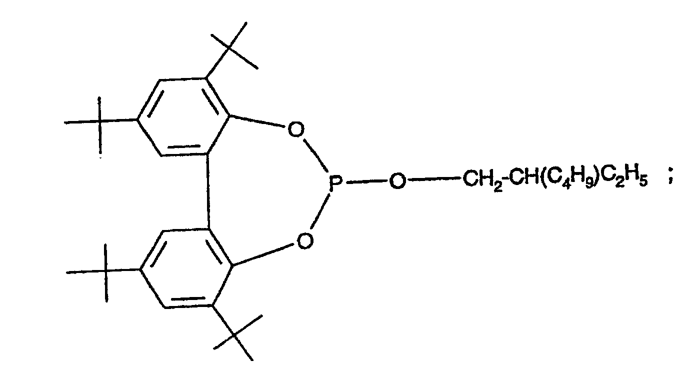

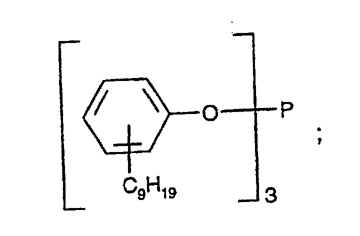

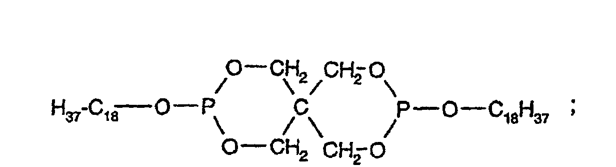

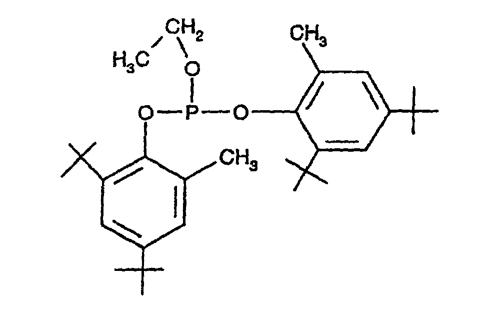

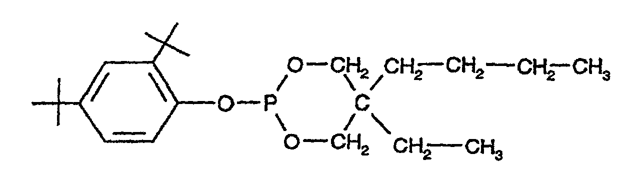

Ganz besonders bevorzugt verwendet man Tris-(2,4-di-tert.butylphenyl)-phosphit.

Die Menge der Phosphite oder Phosphonite richtet sich nach der beabsichtigten Verwendung des Kunststoff-Additiv-Granulates, zweckmässig enthält das Granulat 0-90 Gew.-%, bevorzugt 3-70 Gew.-% Phosphit oder Phosphonit.

Bevorzugt enthalten die Additivgranulate neben einem sterisch gehinderten Phenol auch ein organisches Phosphit bzw. Phosphonit. Bevorzugt beträgt dann das Gewichtsverhältnis von sterisch gehindertem Phenol:Phosphit bzw. Phosphonit von 20:1 bis 1:20, wobei ein Gewichtsverhältnis von 10:1 bis 1:10 besonders bevorzugt ist und ein Verhältnis von 4:1 - 1:4 ganz besonders bevorzugt ist.

Von besonderem Interesse sind Zusammensetzungen enthaltend mindestens eine Verbindung aus der Gruppe der sterisch gehinderten Amine der unter (a') bis (g') beschriebenen Klasse von Verbindungen, die mindestens einen Rest der Formel XII oder XIII enthalten.

(a') Verbindungen der Formel Xlla 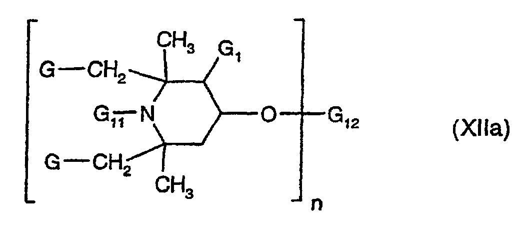 worin n eine Zahl von 1 bis 4 bedeutet,
G₁ und G₁ unabhängig voneinander Wasserstoff oder Methyl darstellen,
G₁₁ Wasserstoff, O⁻, Hydroxy, NO, -CH₂CN, C₁-C₁₈-Alkyl, C₃-C₈-Alkenyl, C₃-C₈-Alkinyl, C₇-C₁₂-Aralkyl, C₁-C₁₈-Alkoxy, C₅-C₈-Cycloalkoxy, C₇-C₉-Phenylalkoxy, C₁-C₈-Alkanoyl, C₃-C₅-Alkenoyl, C₁-C₁₈-Alkanoyloxy, Benzyloxy, Glycidyl oder eine Gruppe -CH₂CH(OH)-Z bedeutet, wobei G₁₁ vorzugsweise Wasserstoff, C₁-C₄-Alkyl, Allyl, Benzyl, Acetyl oder Acryloyl ist,
Z Wasserstoff, Methyl oder Phenyl darstellt, und
   wenn n 1 ist,
G₁₂ Wasserstoff, gegebenenfalls durch ein oder mehrere Sauerstoffatome unterbrochenes C₁-C₁₈-Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 Kohlenstoffatomen, einer cycloaliphatischen Carbonsäure mit 7 bis 15 Kohlenstoffatomen, einer α,β-ungesättigten Carbonsäure mit 3 bis 5 Kohlenstoffatomen oder einer aromatischen Carbonsäure mit 7 bis 15 Kohlenstoffatomen bedeutet, wobei die Carbonsäure jeweils im aliphatischen, cycloaliphatischen oder aromatischen Teil mit 1 bis 3 -COOZ₁₂ substituiert sein kann,
Z₁₂ Wasserstoff, C₁-C₂₀-Alkyl, C₃-C₁₂-Alkenyl, C₅-C₇-Cycloalkyl, Phenyl oder Benzyl ist, und
   wenn n 2 ist,
G₁₂ C₂-C₁₂-Alkylen, C₄-C₁₂-Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 Kohlenstoffatomen, einer cycloaliphatischen oder aromatischen Dicarbonsäure mit 8 bis 14 Kohlenstoffatomen oder einer aliphatischen, cycloaliphatischen oder aromatischen Dicarbaminsäure mit 8 bis 14 Kohlenstoffatomen bedeutet, wobei die Dicarbonsäure jeweils im aliphatischen, cycloaliphatischen oder aromatischen Teil mit 1 oder 2 Gruppen -COOZ₁₂ substituiert sein kann, und
   wenn n 3 ist,
G₁₂ einen dreiwertigen Rest einer aliphatischen, cycloaliphatischen oder aromatischen Tricarbonsäure, der im aliphatischen, cycloaliphatischen oder aromatischen Teil mit -COOZ₁₂ substituiert sein kann, einer aromatischen Tricarbaminsäure oder einer Phosphor enthaltenden Säure oder einen dreiwertigen Silylrest bedeutet, und
   wenn n 4 ist,
G₁₂ einen vierwertigen Rest einer aliphatischen, cycloaliphatischen oder aromatischen Tetracarbonsäure bedeutet.

Unter den angegebenen Carbonsäureresten sind dabei jeweils Reste der Formel (-CO)ₙR, wobei die Bedeutung von n oben angegeben ist, und sich die Bedeutung von R aus der angegebenenen Definition ergibt.

Bedeuten etwaige Substituenten C₁-C₁₂-Alkyl, so stellen sie z.B. Methyl, Ethyl, n-Propyl, n-Butyl, sek-Butyl, tert-Butyl, n-Hexyl, n-Octyl, 2-Ethyl-hexyl, n-Nonyl, n-Decyl, n-Undecyl oder n-Dodecyl dar.

In der Bedeutung von C₁-C₁₈-Alkyl kann G₁₁ oder G₁₂ z.B. die oben angeführten Gruppen und dazu noch beispielsweise n-Tridecyl, n-Tetradecyl, n-Hexadecyl oder n-Octadecyl darstellen.

Wenn G₁₁ C₂-C₈-Alkenyl bedeutet, so kann es sich z.B. um 1-Propenyl, Allyl, Methallyl, 2-Butenyl, 2-Pentenyl, 2-Hexenyl, 2-Octenyl oder 4-tert-Butyl-2-butenyl handeln.

G₁₁ ist als C₃-C₈-Alkinyl bevorzugt Propargyl.

Als C₇-C₁₂-Aralkyl ist G₁₁ insbesondere Phenethyl und vor allem Benzyl.

G₁₁ ist als C₁-C₈-Alkanoyl beispielsweise Formyl, Propionyl, Butyryl, Octanoyl, aber bevorzugt Acetyl und als C₃-C₅-Alkenoyl insbesondere Acryloyl.

Bedeutet G₁₂ einen einwertigen Rest einer Carbonsäure, so stellt G₁₂ beispielsweise einen Essigsäure-, Capronsäure-, Stearinsäure-, Acrylsäure-, Methacrylsäure-, Benzoe- oder β-(3,5-Di-tert-butyl-4-hydroxy-phenyl)-propionsäure-Rest dar.

Bedeutet G₁₂ einen einwertigen Silylrest, so stellt G₁₂ beispielsweise einen Rest der Formel - (CⱼH₂ⱼ)-Si(Z')₂Z" dar, worin j eine ganze Zahl aus dem Bereich von 2 bis 5, und Z' und Z" unabhängig voneinander C₁-C₄-Alkyl oder C₁-C₄-Alkoxy bedeuten.

Bedeutet G₁₂ einen zweiwertigen Rest einer Dicarbonsäure, so stellt G₁₂ beispielsweise einen Malonsäure-, Bernsteinsäure-, Glutarsäure-, Adipinsäure-, Korksäure-, Sebacinsäure-, Maleinsäure-, ltaconsäure-, Phthalsäure-, Dibutylmalonsäure-, Dibenzylmalonsäure-, Butyl-(3,5-di-tert-butyl-4-hydroxybenzyl)-malonsäure- oder Bicycloheptendicarbonsäure-Rest dar.

Stellt G₁₂ einen dreiwertigen Rest einer Tricarbonsäure dar, so bedeutet G₁₂ beispielsweise einen Trimellitsäure-, Citronensäure- oder Nitrilotriessigsäure-Rest.

Stellt G₁₂ einen vierwertigen Rest einer Tetracarbonsäure dar, so bedeutet G₁₂ beispielsweise den vierwertigen Rest von Butan-1,2,3,4-tetracarbonsäure oder von Pyromellitsäure.

Bedeutet G₁₂ einen zweiwertigen Rest einer Dicarbaminsäure, so stellt G₁₂ beispielsweise einen Hexamethylendicarbaminsäure- oder einen 2,4-Toluylen-dicarbaminsäure-Rest dar.

Bevorzugt sind Verbindungen der Formel Xlla, worin G Wasserstoff ist, G₁₁ Wasserstoff oder Methyl ist, n 2 ist und G₁₂ der Diacylrest einer aliphatischen Dicarbonsäure mit 4 bis 12 Kohlenstoffatomen ist.

Beispiele für Polyalkylpiperidin-Verbindungen dieser Klasse sind folgende Verbindungen:
1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert-Butyl-2-butenyl)-4-hydroxy-2,2,6,6-tetramethylpiperidin
5) 4-Stearoyloxy-2,2,6,6-tetramethylpiperidin
6) 1-Ethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-β-(3,5-di-tert-butyl-4-hydroxyphenyl)-propionat
9) Di-(1-benzyl-2,2,6,6-tetramethylpiperidin-4-yl)-maleinat
10) Di-(2,2,6,6-tetramethylpiperidin-4-yl)-succinat
11) Di-(2,2,6,6-tetramethylpiperidin-4-yl)-glutarat
12) Di-(2,2,6,6-tetramethylpiperidin-4-yl)-adipat
13) Di-(2,2,6,6-tetramethylpiperidin-4-yl)-sebacat
14) Di-(1,2,2,6,6-pentamethylpiperidin-4-yl)-sebacat
15) Di-(1,2,3,6-tetramethyl-2,6-diethyl-piperidin-4-yl)-sebacat
16) Di-(1-allyl-2,2,6,6-tetramethylpiperidin-4-yl)-phthalat
17) 1-Hydroxy-4-β-cyanoethyloxy-2,2,6,6-tetramethylpiperidin
18) 1-Acetyl-2,2,6,6-tetramethylpiperidin-4-yl-acetat
19) Trimellitsäure-tri-(2,2,6,6-tetramethylplperidin-4-yl)-ester
20) 1-Acryloyl-4-benzyloxy-2,2,6,6-tetramethylpiperidin
21) Diethylmalonsäure-di(2,2,6,6-tetramethylpiperidin-4-yl)-ester
22) Dibutyl-malonsäure-di-(1,2,2,6,6-pentamethylpiperidin-4-yl)-ester
23) Butyl-(3,5-di-tert-butyl-4-hydroxybenzyl)-malonsäure-di-(1,2,2,6,6-pentamethylpiperidin-4-yl)-ester
24) Di-(1-octyloxy-2,2,6,6-tetramethylpiperidin-4-yl)-sebacat
25) Di-(1-cyclohexyloxy-2,2,6,6-tetramethylpiperidin-4-yl)-sebacat
26) Hexan-1',6'-bis-(4-carbamoyloxy-1-n-butyl-2,2,6,6-tetramethyl-piperidin)
27) Toluol-2',4'-bis-(4-carbamoyloxy-1-n-propyl-2,2,6,6-tetramethyl-piperidin)
28) Dimethyl-bis-(2,2,6,6-tetramethylpiperidin-4-oxy)-silan
29) Phenyl-tris-(2,2,6,6-tetramethylpiperidin-4-oxy)-silan
30) Tris-(1-propyl-2,2,6,6-tetramethylpiperidin-4-yl)-phosphit
31) Tris-(1-propyl-2,2,6,6-tetramethylpiperidin-4-yl)phosphat
32) Phenyl-[bis-(1,2,2,6,6-pentamethylpiperidin-4-yl)]-phosphonat
33) 4-Hydroxy-1,2,2,6,6-pentamethylpiperidin
34) 4-Hydroxy-N-hydroxyethyl-2,2,6,6-tetramethylpiperidin
35) 4-Hydroxy-N-(2-hydroxypropyl)-2,2,6,6-tetramethylpiperidin
36) 1-Glycidyl-4-hydroxy-2,2,6,6-tetramethylpiperidin

(b') Verbindungen der Formel XIIb 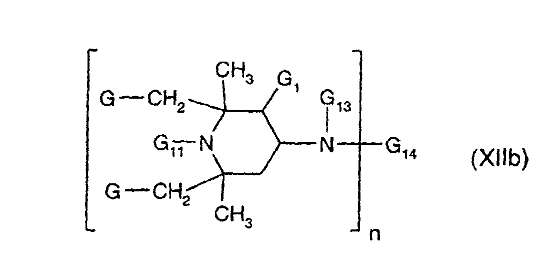 worin n die Zahl 1 oder 2 bedeutet,
G, G₁ und G₁₁ die unter (a') angegebene Bedeutung haben,
G₁₃ Wasserstoff, C₁-C₁₂-Alkyl, C₂-C₅-Hydroxyalkyl, C₅-C₇-Cycloalkyl, C₇-C₈-Aralkyl, C₂-C₁₈-Alkanoyl, C₃-C₅-Alkenoyl, Benzoyl oder eine Gruppe der Formel 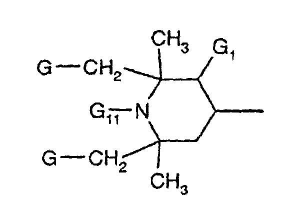 ist, und
   wenn n 1 ist,
G₁₄ Wasserstoff, C₁-C₁₈-Alkyl, C₃-C₈-Alkenyl, C₅-C₇-Cycloalkyl, mit einer Hydroxy-, Cyano-, Alkoxycarbonyl- oder Carbamidgruppe substituiertes C₁-C₄-Alkyl; Glycidyl, eine Gruppe der Formel -CH₂-CH(OH)-Z oder der Formel -CONH-Z ist, worin Z Wasserstoff, Methyl oder Phenyl bedeutet, und
   wenn n 2 ist,
G₁₄ C₂-C₁₂-Alkylen, C₆-C₁₂-Arylen, Xylylen, eine -CH₂-CH(OH)-CH₂-Gruppe oder eine Gruppe -CH₂-CH(OH)-CH₂-O-D-O- bedeutet, worin D C₂-C₁₀-Alkylen, C₆-C₁₅-Arylen, C₆-C₁₂-Cycloalkylen ist, oder vorausgesetzt, dass G₁₃ nicht Alkanoyl, Alkenoyl oder Benzoyl bedeutet, G₁₄ auch 1-Oxo-C₂-C₁₂-alkylen, einen zweiwertigen Rest einer aliphatischen, cycloaliphatischen oder aromatischen Dicarbonsäure oder Dicarbaminsäure oder auch die Gruppe -CObedeuten kann, oder,
   wenn n 1 ist,
G₁₃ und G₁₄ zusammen den zweiwertigen Rest einer aliphatischen, cycloaliphatischen oder aromatischen 1,2- oder 1,3-Dicarbonsäure bedeuten können.

Stellen etwaige Substituenten C₁-C₁₂- oder C₁-C₁₈-Alkyl dar, so haben sie die bereits unter (a') angegebene Bedeutung.

Bedeuten etwaige Substituenten C₅-C₇-Cycloalkyl, so stellen sie insbesondere Cyclohexyl dar.

Als C₇-C₈-Aralkyl ist G₁₃ insbesondere Phenylethyl oder vor allem Benzyl. Als C₂-C₅-Hydroxyalkyl ist G₁₃ insbesondere 2-Hydroxyethyl oder 2-Hydroxypropyl.

G₁₃ ist als C₂-C₁₈-Alkanoyl beispielsweise Propionyl, Butyryl, Octanoyl, Dodecanoyl, Hexadecanoyl, Octadecanoyl, aber bevorzugt Acetyl und als C₃-C₅-Alkenoyl insbesondere Acryloyl.

Bedeutet G₁₄ C₂-C₈-Alkenyl, dann handelt es sich beispielsweise um Allyl, Methallyl, 2-Butenyl, 2-Pentenyl, 2-Hexenyl oder 2-Octenyl.

G₁₄ als mit einer Hydroxy-, Cyano-, Alkoxycarbonyl- oder Carbamidgruppe substituiertes C₁-C₄-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten C₂-C₁₂-Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten C₆-C₁₅-Arylen, so stellen sie z.B. o-, m- oder p-Phenylen, 1,4-Naphthylen oder 4,4'-Diphenylen dar.

Als C₆-C₁₂-Cycloalkylen ist insbesondere Cyclohexylen zu nennen.

Bevorzugt sind Verbindungen der Formel 1b, worin n 1 oder 2 ist, G Wasserstoff ist, G₁₁ Wasserstoff oder Methyl ist, G₁₃ Wasserstoff, C₁-C₁₂-Alkyl oder eine Gruppe der Formel 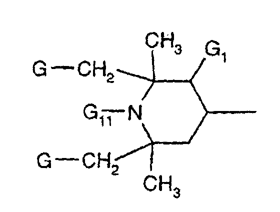 ist und G₁₄ im Fall von n=1 Wasserstoff oder C₁-C₁₂-Alkyl ist, und im Fall von n=2 C₂-C₈-Alkylen oder 1-Oxo-C₂-C₈-alkylen ist.

Beispiele für Polyalkylpiperidin-Verbindungen dieser Klasse sind folgende Verbindungen:
37) N,N'-Bis-(2,2,6,6-tetramethylpiperidin-4-yl)-hexamethylen-1,6-diamin
38) N,N'-Bis-(2,2,6,6-tetramethylpiperidin-4-yl)-hexamethylen-1,6-di-acetamid
39) Bis-(2,2,6,6-tetramethylpiperidin-4-yl)-amin
40) 4-Benzoylamino-2,2,6,6-tetramethylpiperidin
41) N,N'-Bis-(2,2,6,6-tetramethylpiperidin-4-yl)-N,N'-dibutyl-adipamid
42) N,N'-Bis-(2,2,6,6-tetramethylpiperidin-4-yl)-N,N'-dicyclohexyl-2-hydroxypropylen-1,3-diamin
43) N,N'-Bis-(2,2,6,6-tetramethylpiperidin-4-yl)-p-xylylen-diamin
44) N,N'-Bis-(2,2,6,6-tetramethylpiperidin-4-yl)-succindiamid
45) N-(2,2,6,6-Tetramethylpiperidin-4-yl)-β-aminodipropionsäure-di-(2,2,6,6-tetramethylpiperidin-4-yl)-ester
46) Die Verbindung der Formel 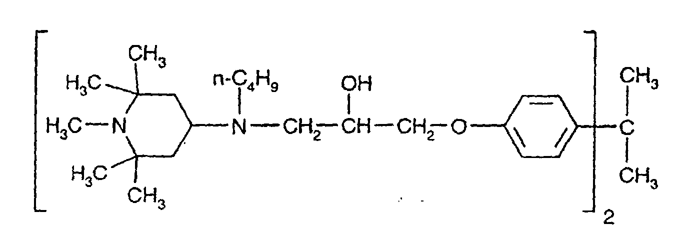
47) 4-(Bis-2-hydroxyethyl-amino)-1,2,2,6,6-pentamethylpiperidin
48) 4-(3-Methyl-4-hydroxy-5-tert-butyl-benzoesäureamido)-2,2,6,6-tetra-methylpiperidin
49) 4-Methacrylamido-1,2,2,6,6-pentamethylpiperidin

(c') Verbindungen der Formel Xllc 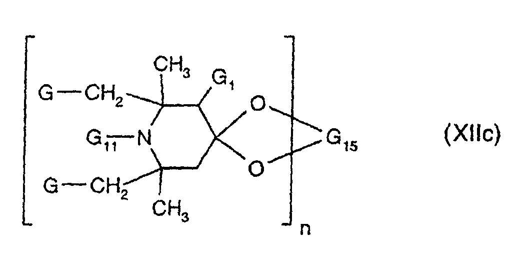 worin n die Zahl 1 oder 2 bedeutet, G, G₁ und G₁₁ die unter (a') angegebene Bedeutung haben, und
wenn n 1 ist,
G₁₅ C₂-C₈-Alkylen oder C₂-C₈-Hydroxyalkylen oder C₄-C₂₂-Acyloxyalkylen ist, und
   wenn n 2 ist,
G₁₅ die Gruppe (-CH₂)₂C(CH₂-)₂ bedeutet.

Bedeutet G₁₅ C₂-C₈-Alkylen oder C₂-C₈-Hydroxyalkylen, so stellt G₁₅ beispielsweise Ethylen, 1-Methyl-ethylen, Propylen, 2-Ethyl-propylen oder 2-Ethyl-2-hydroxymethylpropylen dar.

Als C₄-C₂₂-Acyloxyalkylen bedeutet G₁₅ beispielsweise 2-Ethyl-2-acetoxymethylpropylen.

Beispiele für Polyalkylpiperidin-Verbindungen dieser Klasse sind folgende Verbindungen:
50) 9-Aza-8,8,10,10-tetramethyl-1,5-dioxaspiro[5.5]undecan
51) 9-Aza-8,8,10,10-tetramethyl-3-ethyl-1,5-dioxaspiro[5.5]undecan
52) 8-Aza-2,7,7,8,9,9-hexamethyl-1,4-dioxaspiro[4.5]decan
53) 9-Aza-3-hydroxymethyl-3-ethyl-8,8,9,10,10-pentamethyl-1,5-dioxaspiro[5.5]undecan
54) 9-Aza-3-ethyl-3-acetoxymethyl-9-acetyl-8,8,10,10-tetramethyl-1,5-dioxaspiro[5.5]undecan
55) 2,2,6,6-Tetramethylpiperidin-4-spiro-2'-(1',3'-dioxan)-5'-spiro-5"-(1",3"-dioxan)-2"-spiro--4"'-(2"',2"',6"',6"'-tetramethylpiperidin);

(d') Verbindungen der Formeln XIId, Xlle und Xllf, wobei Verbindungen der Formel Xllf bevorzugt sind, 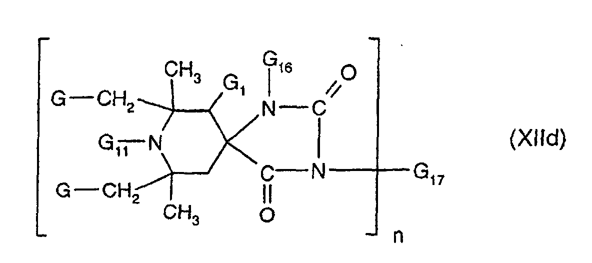 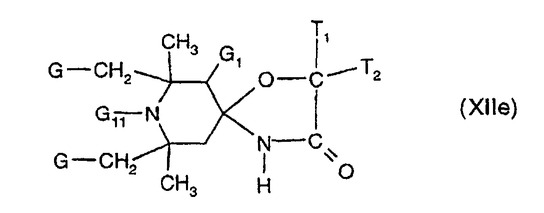 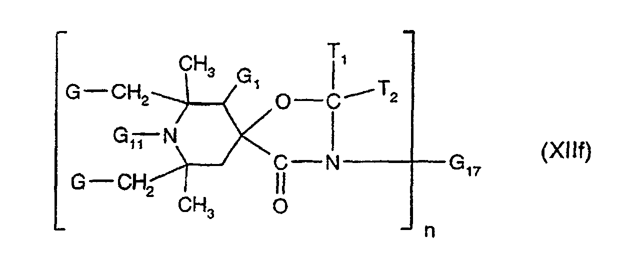 worin n die Zahl 1 oder 2 bedeutet, G, G₁ und G₁₁ die unter (a') angegebene Bedeutung haben,
G₁₆ Wasserstoff, C₁-C₁₂-Alkyl, Allyl, Benzyl, Glycidyl oder C₂-C₆-Alkoxyalkyl ist, und wenn n 1 ist,
G₁₇ Wasserstoff, C₁-C₁₂-Alkyl, C₃-C₅-Alkenyl, C₇-C₉-Aralkyl, C₅-C₇-Cycloalkyl, C₂-C₄-Hydroxyalkyl, C₂-C₆-Alkoxyalkyl, C₆-C₁₀-Aryl, Glycidyl oder eine Gruppe der Formel -(CH₂)p-COO-Q oder der Formel -(CH₂)p-O-CO-Q ist, worin p 1 oder 2 und Q C₁-C₄-Alkyl oder Phenyl ist, und
   wenn n 2 ist,
G₁₇ C₂-C₁₂-Alkylen, C₄-C₁₂-Alkenylen, C₆-C₁₂-Arylen, eine Gruppe -CH₂-CH(OH)-CH₂-O-D-O-CH₂-CH(OH)-CH₂-, worin D C₂-C₁₀-Alkylen, C₆-C₁₅-Arylen, C₆-C₁₂-Cycloalkylen ist, oder eine Gruppe -CH₂CH(OZ')CH₂-(OCH₂-CH(OZ')CH₂)₂- bedeutet, worin
Z' Wasserstoff, C₁-C₁₈-Alkyl, Allyl, Benzyl, C₂-C₁₂-Alkanoyl oder Benzoyl ist,
T₁ und T₂ unabhängig voneinander Wasserstoff, C₁-C₁₈-Alkyl oder gegebenenfalls durch Halogen oder C₁-C₄-Alkyl substituiertes C₆-C₁₀-Aryl oder C₇-C₉-Aralkyl bedeuten oder T₁ und
T₂ zusammen mit dem Kohlenstoffatom and das sie gebunden sind einen C₅-C₁₄-Cycloalkanring bilden.

Bedeuten etwaige Substituenten C₁-C₁₂-Alkyl, so stellen sie z.B. Methyl, Ethyl, n-Propyl, n-Butyl, sek-Butyl, tert-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von C₁-C₁₈-Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten C₂-C₆-Alkoxyalkyl, so stellen sie z.B. Methoxymethyl, Ethoxymethyl, Propoxymethyl, tert-Butoxymethyl, Ethoxyethyl, Ethoxypropyl, n-Butoxyethyl, tert-Butoxyethyl, Isopropoxyethyl oder Propoxypropyl dar.

Stellt G₁₇ C₃-C₅-Alkenyl dar, so bedeutet G₁₇ beispielsweise 1-Propenyl, Allyl, Methallyl, 2-Butenyl oder 2-Pentenyl.

Als C₇-C₉-Aralkyl sind G₁₇, T₁ und T₂ insbesondere Phenethyl oder vor allem Benzyl. Bilden T₁ und T₂ zusammen mit dem Kohlenstoffatom einen Cycloalkanring, so kann dies z.B. ein Cyclopentan-, Cyclohexan-, Cyclooctan- oder Cyclododecanring sein.

Bedeutet G₁₇ C₂-C₄-Hydroxyalkyl, so stellt es z.B. 2-Hydroxyethyl, 2-Hydroxypropyl, 2-Hydroxybutyl oder 4-Hydroxybutyl dar.

Als C₆-C₁₀-Aryl bedeuten G₁₇, T₁ und T₂ insbesondere Phenyl, α- oder β-Naphthyl, die gegebenenfalls mit Halogen oder C₁-C₄-Alkyl substituiert sind.

Stellt G₁₇ C₂-C₁₂-Alkylen dar, so handelt es sich z.B. um Ethylen, Propylen, 2,2-Dimethylpropylen, Tetramethylen, Hexamethylen, Octamethylen, Decamethylen oder Dodecamethylen.

Als C₄-C₁₂-Alkenylen bedeutet G₁₇ insbesondere 2-Butenylen, 2-Pentenylen oder 3-Hexenylen.

Bedeutet G₁₇ C₆-C₁₂-Arylen, so stellt G₁₇ beispielsweise o-, m- oder p-Phenylen, 1,4-Naphthylen oder 4,4'-Diphenylen dar.

Bedeutet Z' C₂-C₁₂-Alkanoyl, so stellt es beispielsweise Propionyl, Butyryl, Octanoyl, Dodecanoyl, aber bevorzugt Acetyl dar.

D hat als C₂-C₁₀-Alkylen, C₆-C₁₅-Arylen oder C₆-C₁₂-Cycloalkylen die unter (b') angegebene Bedeutung.

Beispiele für Polyalkylpiperidin-Verbindungen dieser Klasse sind folgende Verbindungen:
56) 3-Benzyl-1,3,8-triaza-7,7,9,9-tetramethylspiro[4.5]decan-2,4-dion
57) 3-n-Octyl-1,3,8-triaza-7,7,9,9-tetramethylspiro[4.5]decan-2,4-dion
58) 3-Allyl-1,3,8-triaza-1,7,7,9,9-pentamethylspiro[4.5]decan-2,4-dion
59) 3-Glycidyl-1,3,8-triaza-7,7,8,9,9-pentamethylspiro[4.5]decan-2,4-dion
60) 1,3,7,7,8,9,9-Heptamethyl-1,3,8-triazaspiro[4.5]decan-2,4-dion
61) 2-lso-propyl-7,7,9,9-tetramethyl-1-oxa-3,8-diaza-4-oxo-spiro- [4.5]decan
62) 2,2-Dibutyl-7,7,9,9-tetramethyl-1-oxa-3,8-diaza-4-oxo-spiro-[4.5]-decan
63) 2,2,4,4-Tetramethyl-7-oxa-3,20-diaza-21-oxo-dispiro[5.1.11.2]-heneicosan
64) 2-Butyl-7,7,9,9-tetramethyl-1-oxa-4,8-diaza-3-oxo-spiro-[4.5]decan und bevorzugt:
65) 8-Acetyl-3-dodecyl-1,3,8-triaza-7,7,9,9-tetramethylspiro[4,5]-decan-2,4-dion
oder die Verbindungen der folgenden Formeln:

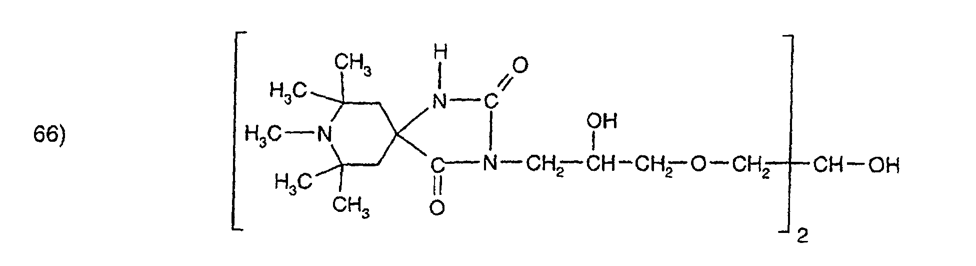

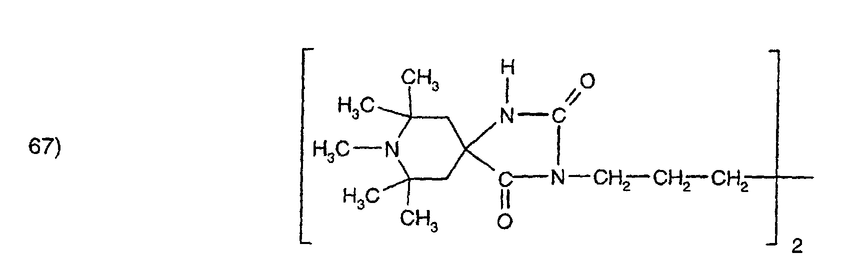

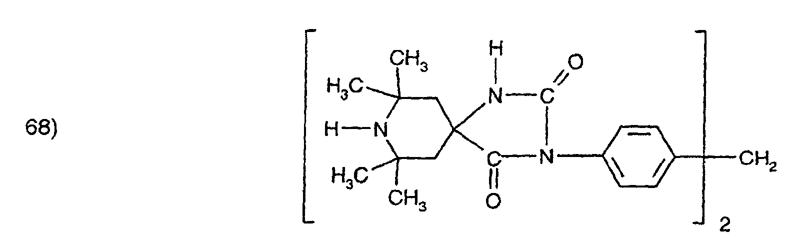

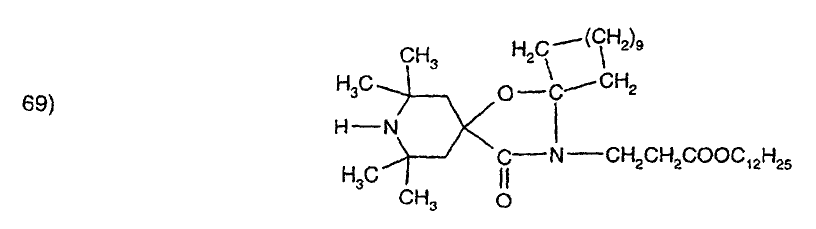

(e') Verbindungen der Formel XIIg, die ihrerseits bevorzugt sind, 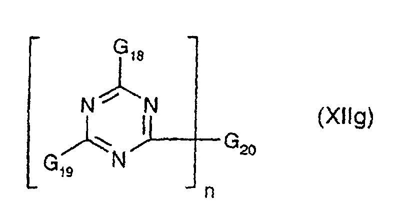 worin n die Zahl 1 oder 2 ist und G₁₈ eine Gruppe einer der Formeln 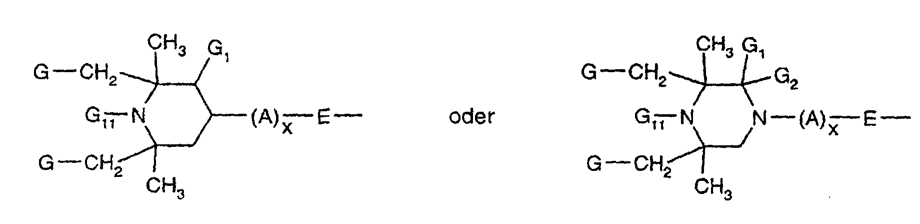 bedeutet, worin G und G₁₁ die unter (a') angegebene Bedeutung haben,
G₁ und G₂ Wasserstoff, Methyl oder gemeinsam einen Substituenten =O bedeuten,
E -O- oder -NG₁₃- ist,
A C₂-C₆-Alkylen oder -(CH₂)₃-O- darstellt,
x die Zahl O oder 1 bedeutet,
G₁₃ Wasserstoff, C₁-C₁₂-Alkyl, C₂-C₅-Hydroxyalkyl oder C₅-C₇-Cycloalkyl darstellt,
G₁₉ gleich G₁₈ oder eine der Gruppen -NG₂₁G₂₂, -OG₂₃, -NHCH₂OG₂₃ oder -N(CH₂OG₂₃)₂ ist,
G₂₀, wenn n = 1 ist, gleich G₁₈ oder G₁₉, und wenn n = 2 ist, G₂₀ eine Gruppe -E-B-E- ist,
worin B C₂-C₈-Alkylen oder durch 1 oder 2 Gruppen -N(G₂₁)- unterbrochenes C₂-C₈-Alkylen bedeutet,
G₂₁ C₁-C₁₂-Alkyl, Cyclohexyl, Benzyl oder C₁-C₄-Hydroxyalkyl oder eine Gruppe der Formel 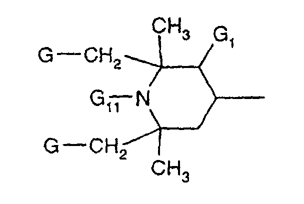 oder eine Gruppe der Formel 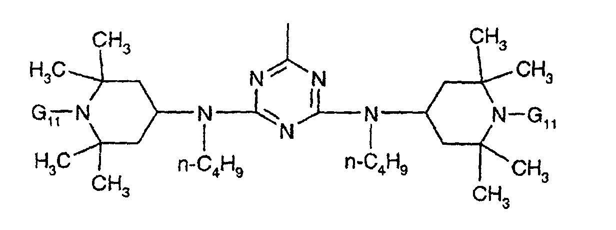 bedeutet,
G₂₂ C₁-C₁₂-Alkyl, Cyclohexyl, Benzyl oder C₁-C₄-Hydroxyalkyl darstellt, oder G₂₁ und G₂₂ zusammen C₄-C₅-Alkylen oder C₄-C₅-Oxaalkylen wie beispielsweise -CH₂CH₂OCH₂CH₂- oder eine Gruppe der Formel -CH₂CH₂N(G₁₁)CH₂CH₂- darstellen, und
G₂₃ Wasserstoff, C₁-C₁₂-Alkyl oder Phenyl bedeutet.

Bedeuten etwaige Substituenten C₁-C₁₂-Alkyl, so stellen sie beispielsweise Methyl, Ethyl, n-Propyl, n-Butyl, sek-Butyl, tert-Butyl, n-Hexyl, n-Octyl, 2-Ethylhexyl, n-Nonyl, n-Decyl, n-Undecyl oder n-Dodecyl dar.

Bedeuten etwaige Substituenten C₂-C₅-Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A C₂-C₆-Alkylen, so stellt es beispielsweise Ethylen, Propylen, 2,2-Dimethylpropylen, Tetramethylen oder Hexamethylen dar.

Stellen G₂₁ und G₂₂ zusammen C₄-C₅-Alkylen oder Oxaalkylen dar, so bedeutet dies beispielsweise Tetramethylen, Pentamethylen oder 3-Oxapentamethylen.

Beispiele für Polyalkylpiperidin-Verbindungen dieser Klasse sind die Verbindungen der folgenden Formeln: 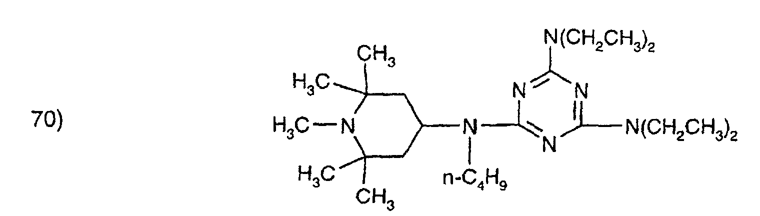 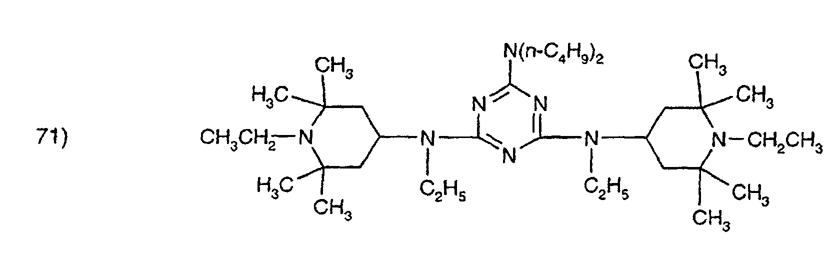 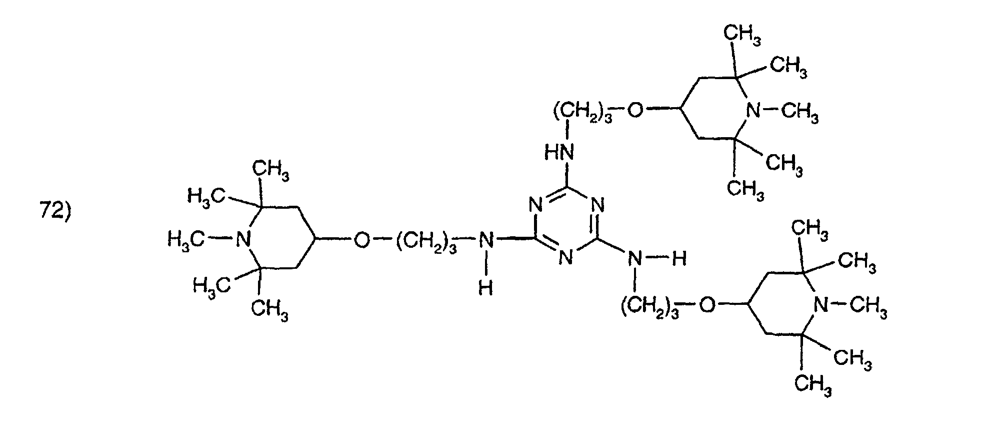 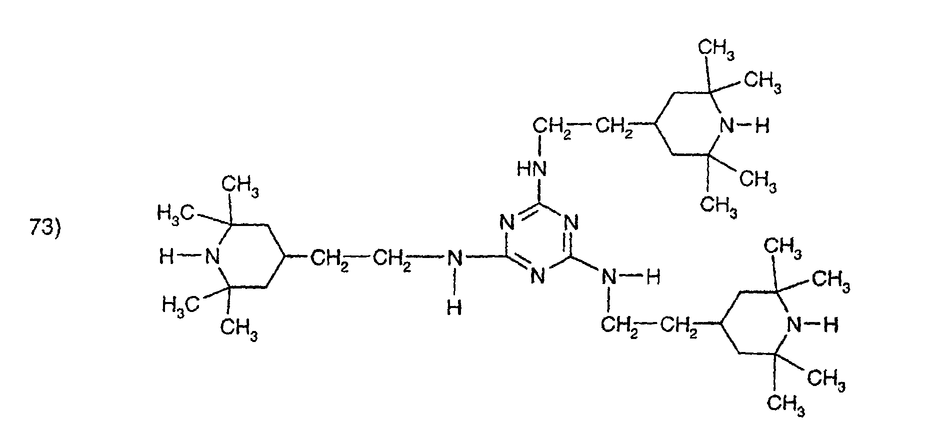 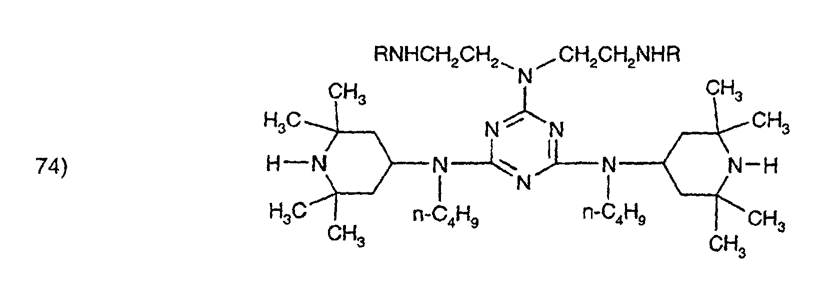 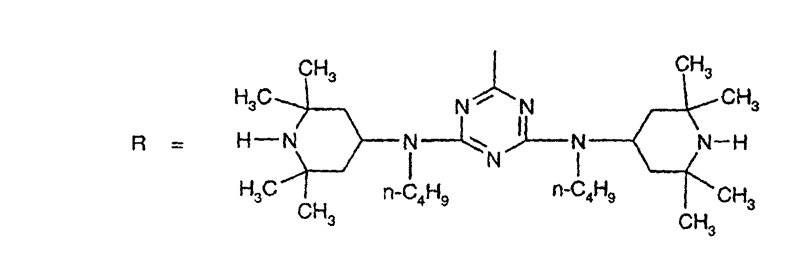 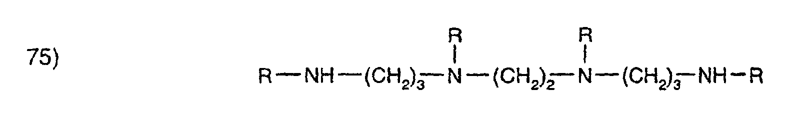 R hat die gleiche Bedeutung wie in Verbindung 74. 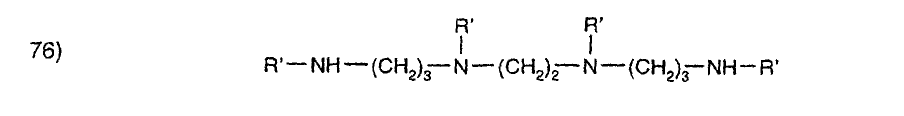 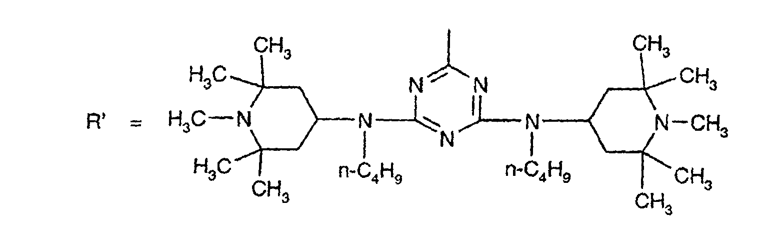 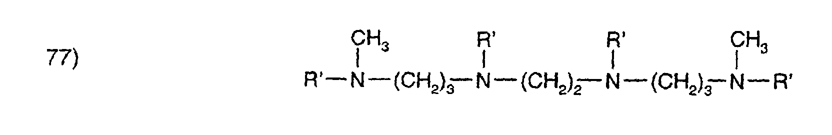 R' hat die gleiche Bedeutung wie in Verbindung 76.

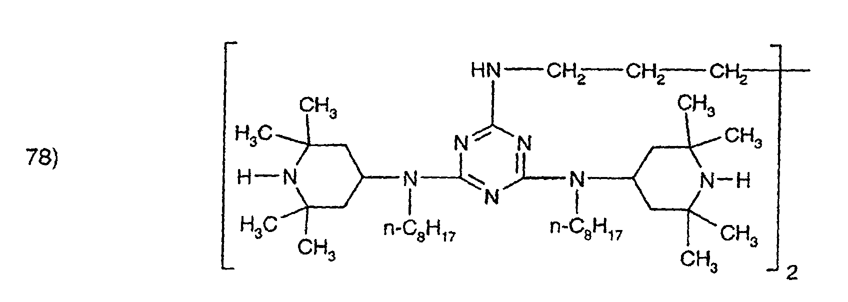

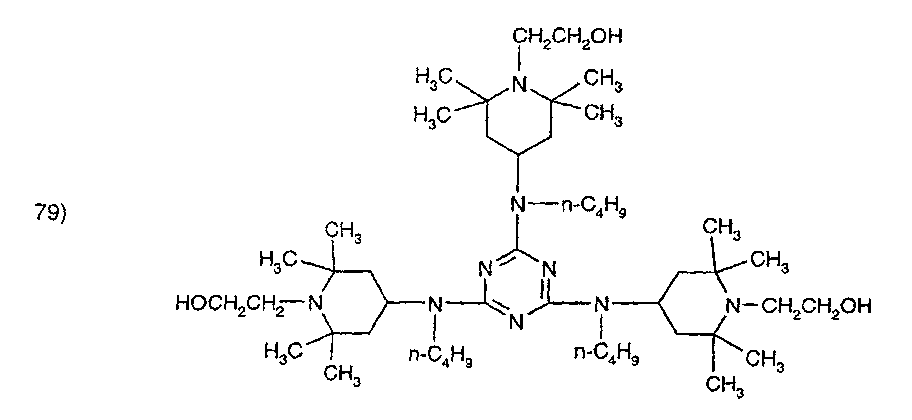

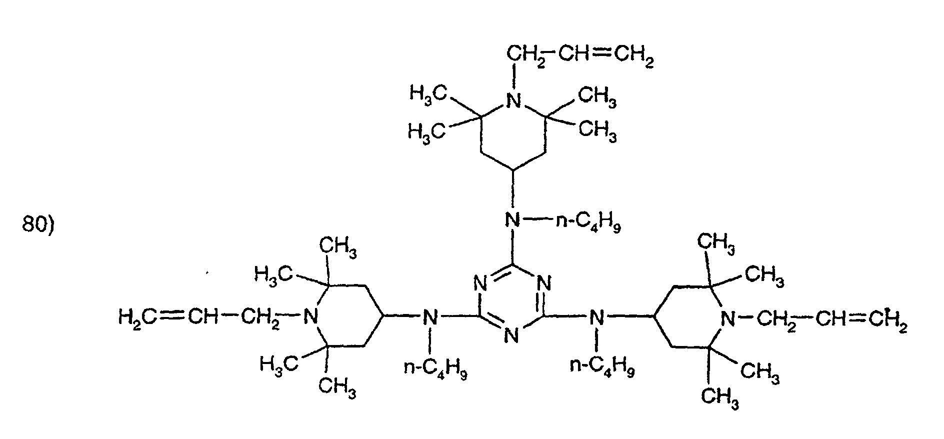

(f') Oligomere oder polymere Verbindungen, deren wiederkehrende Struktureinheit einen 2,2,6,6-Tetraalkylpiperidinrest enthält, insbesondere Polyester, Polyether, Polyamide, Polyamine, Polyurethane, Polyharnstoffe, Polyaminotriazine, Poly(meth)acrylate, Poly(meth)-acrylamide und deren Copolymere, die solche Reste enthalten.

Beispiele für 2,2,6,6-Polyalkylpiperidin-Verbindungen dieser Klasse sind die Verbindungen der folgenden Formeln, wobei m eine Zahl von 2 bis etwa 200 bedeutet. 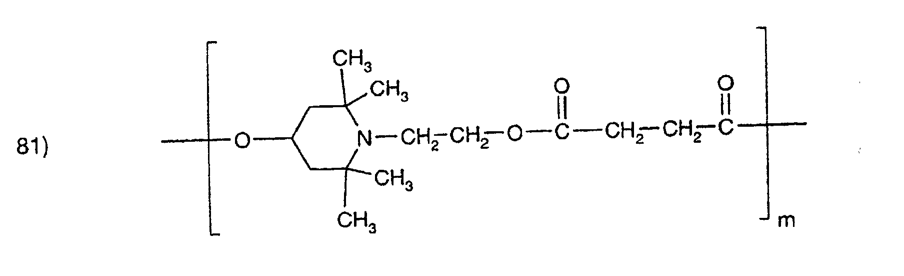 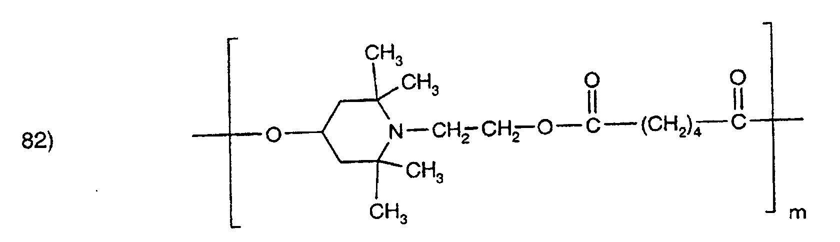 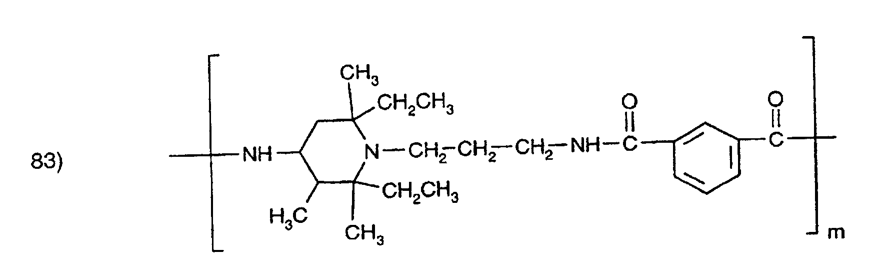 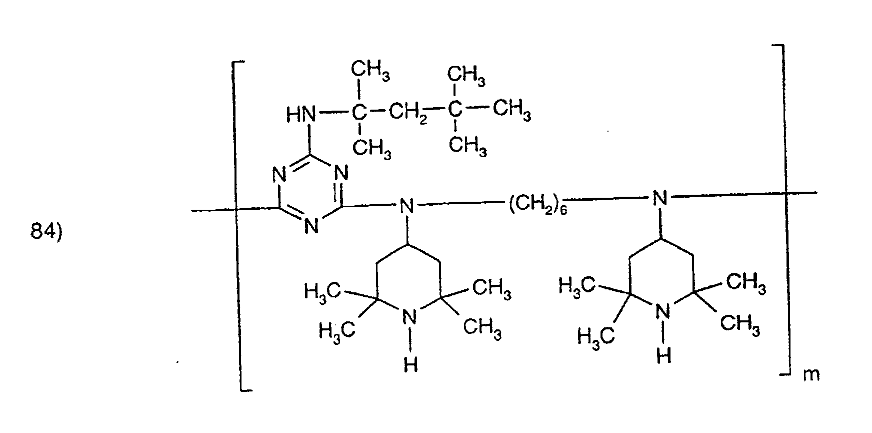 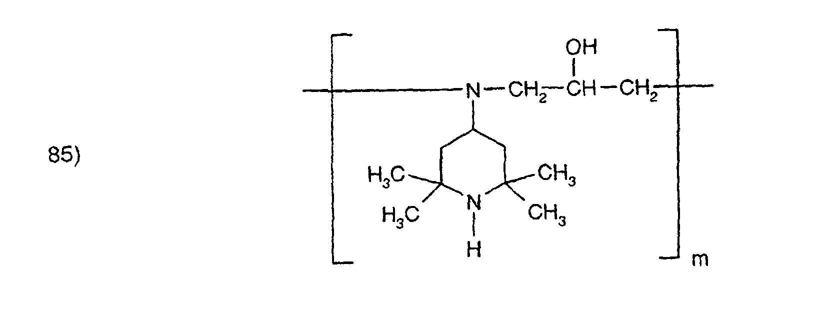 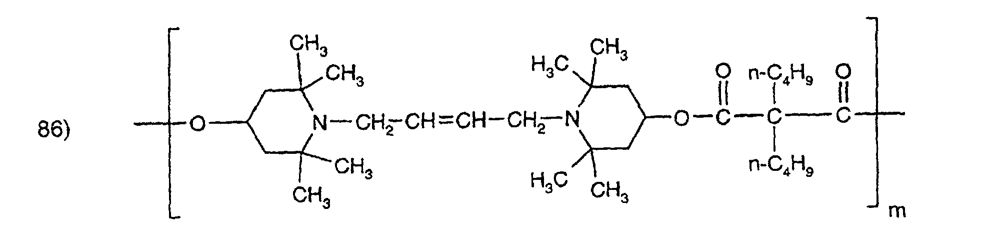 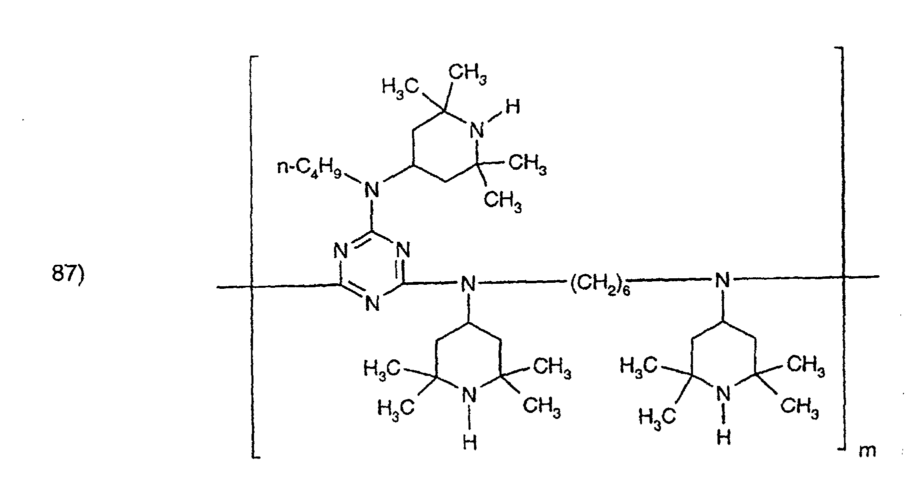 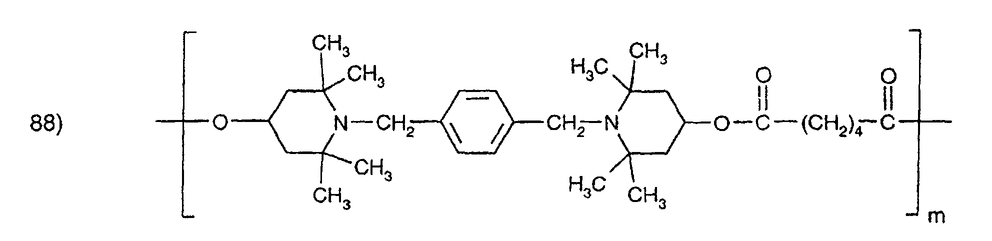 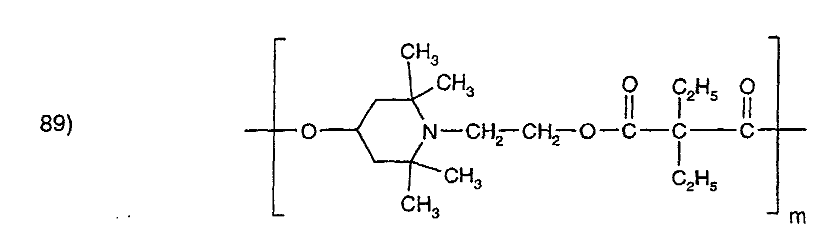 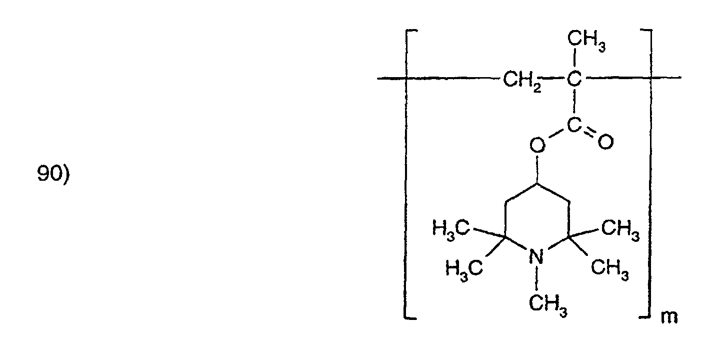 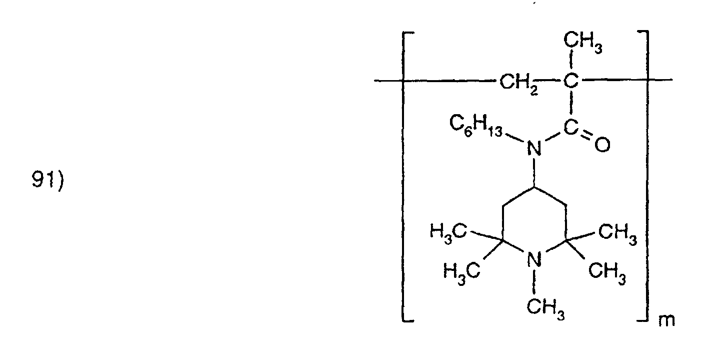 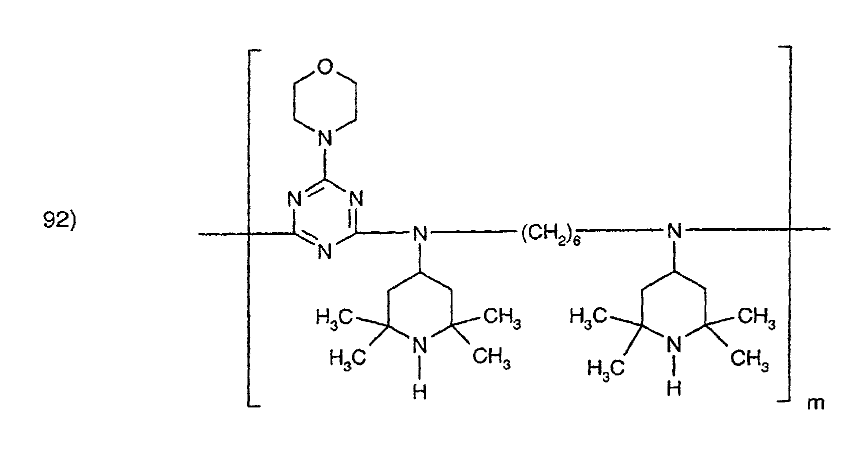 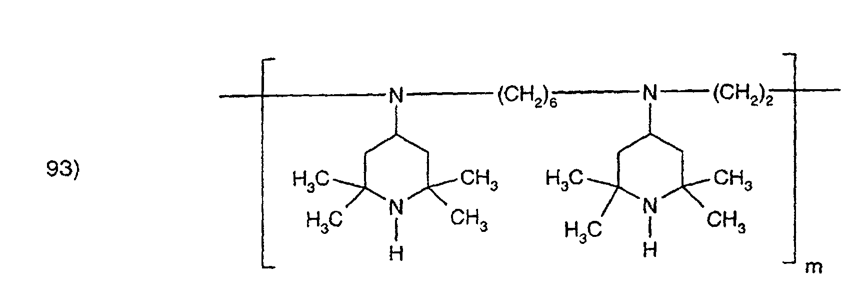 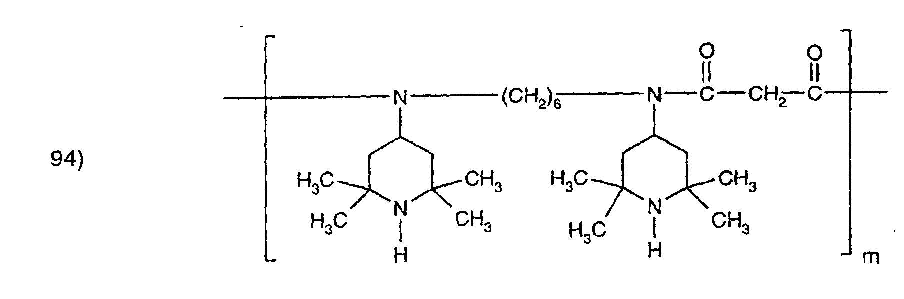 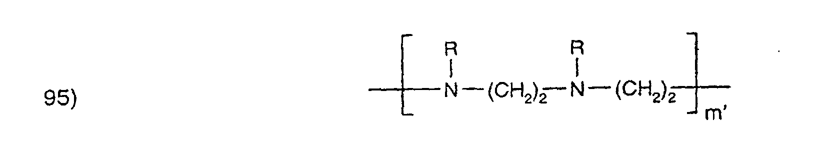 worin R einen Rest der Formel 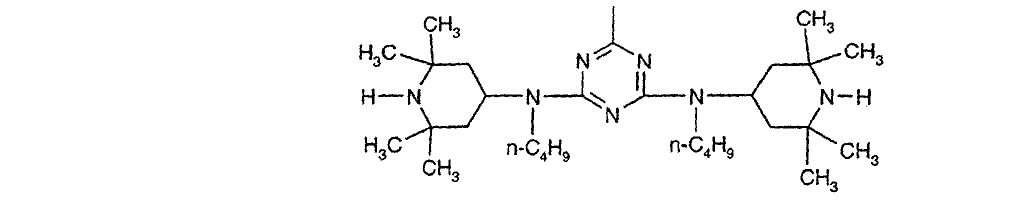 ist oder für eine Verzweigung der Kette 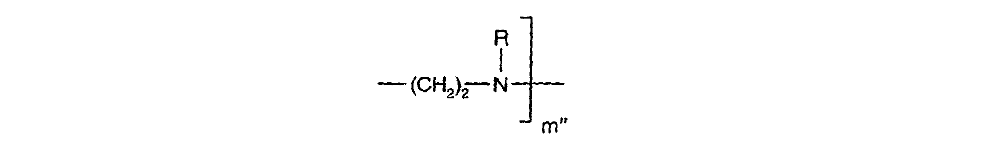 steht, m' und m" jeweils eine ganze Zahl aus dem Bereich von 0 bis 200 bedeuten, mit der Bedingung, dass m' + m" = m.

Weitere Beispiele für polymere Verbindungen sind Umsetzungsprodukte von Verbindungen der Formel 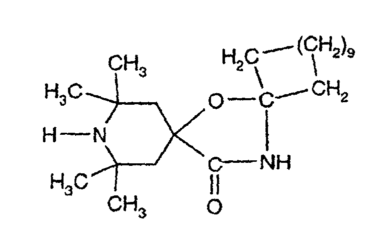 mit Epichlorhydrin; Polyester aus Butan-1,2,3,4-tetracarbonsäure mit einem bifunktionellen Alkohol der Formel 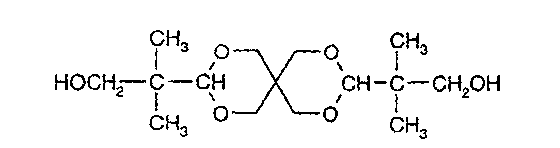 dessen von der Tetracarbonsäure stammenden Carboxyl-Seitenketten mit 2,2,6,6-Tetramethyl-4-hydroxy-piperidin verestert sind; Verbindungen der Formel 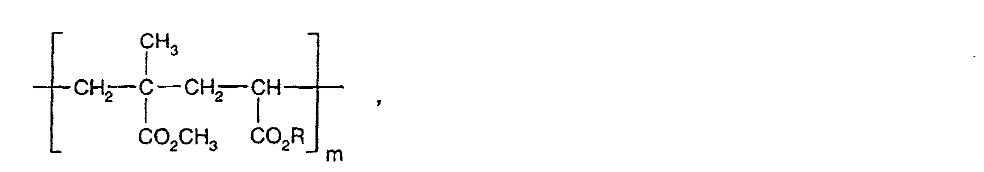 wobei ca. ein Drittel der Reste R die Bedeutung -C₂H₅ haben und die anderen 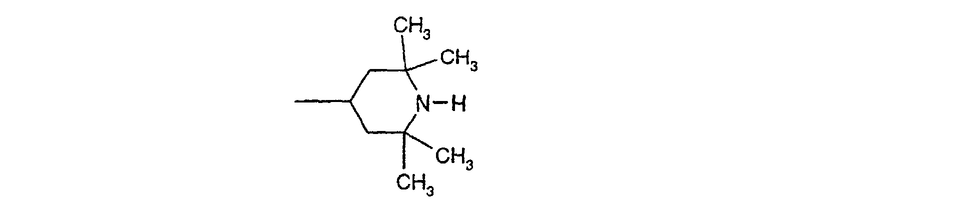 bedeuten, und m eine Zahl aus dem Bereich von 2 bis 200 ist; oder Copolymerisate, deren wiederkehrende Einheit aus zwei Einheiten 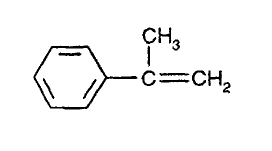 und jeweils einer Einheit 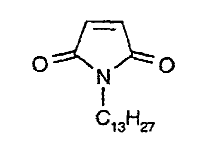 und einer Einheit 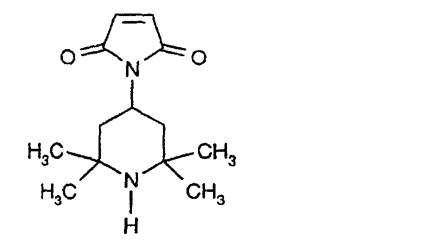 aufgebaut ist.

(g') Verbindungen der Formel XIIIa 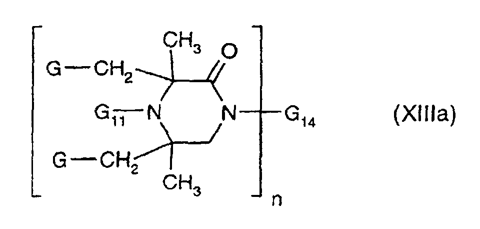 worin n die Zahl 1 oder 2 bedeutet und worin G und G₁₁ die unter (a'), und G₁₄ die unter (b') angegebenen Bedeutungen haben, wobei für G₁₄ die Bedeutungen -CONH-Z und -CH₂-CH(OH)-CH₂-O-D-O- ausgeschlossen sind.

Beispiele für solche Verbindungen sind:

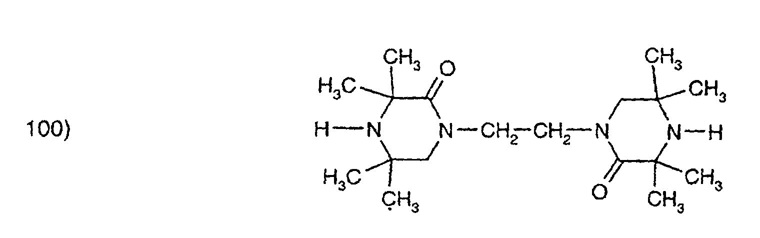

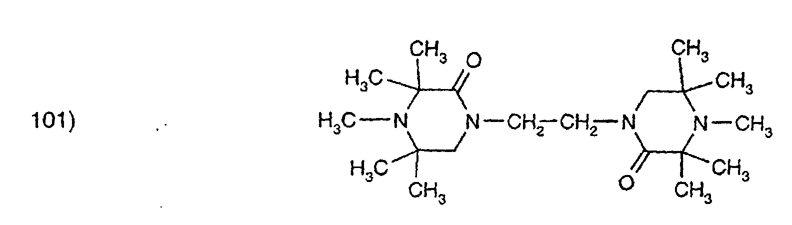

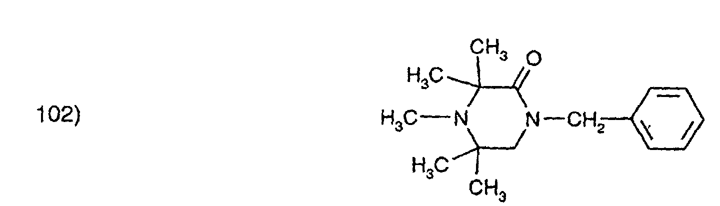

Von besonderem Interesse sind Zusammensetzungen enthaltend als Komponente (e) mindestens eine Verbindung der Formel H1, H2, H3, H4, H5 oder H6 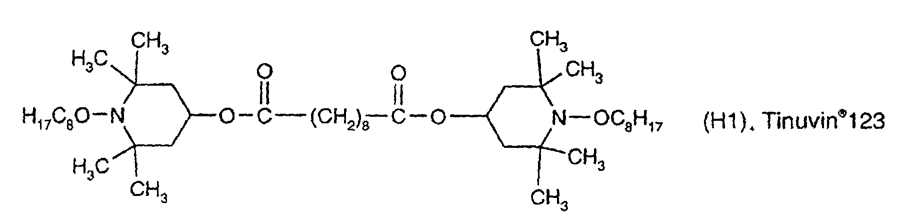 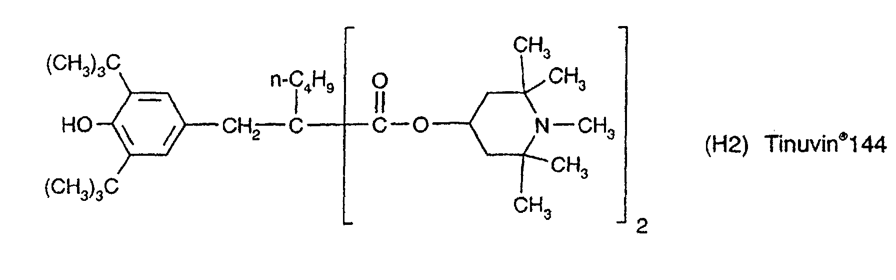 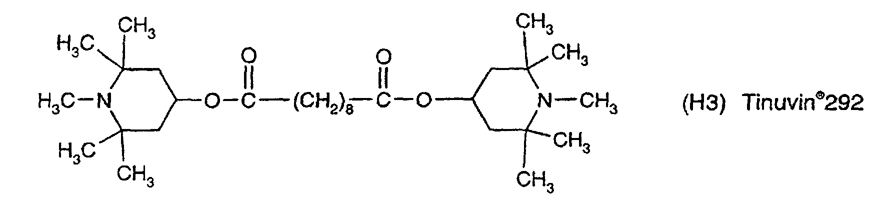 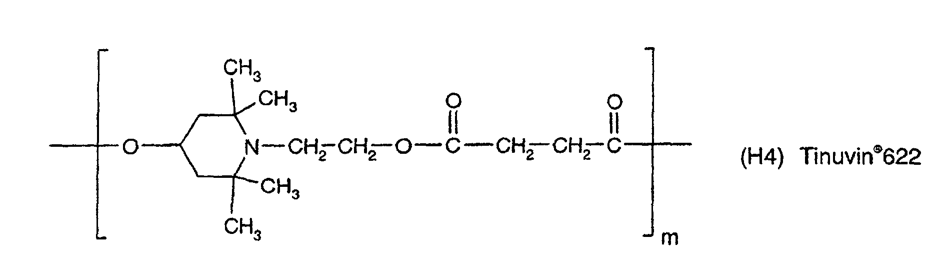 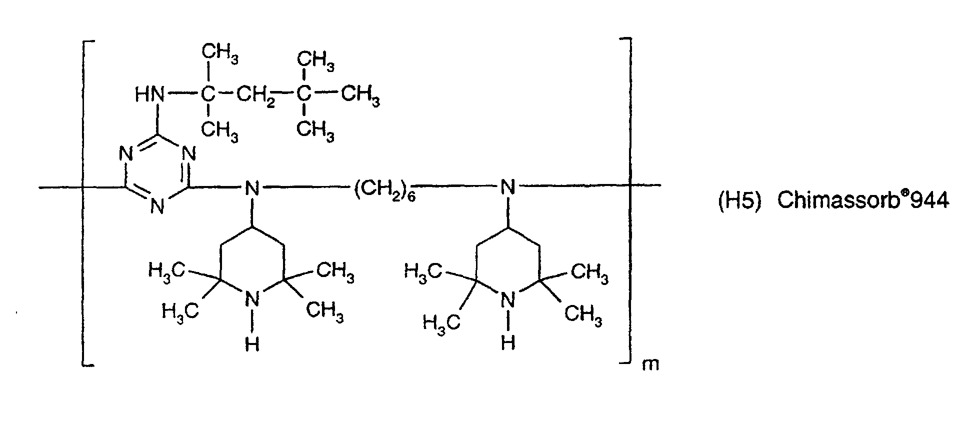 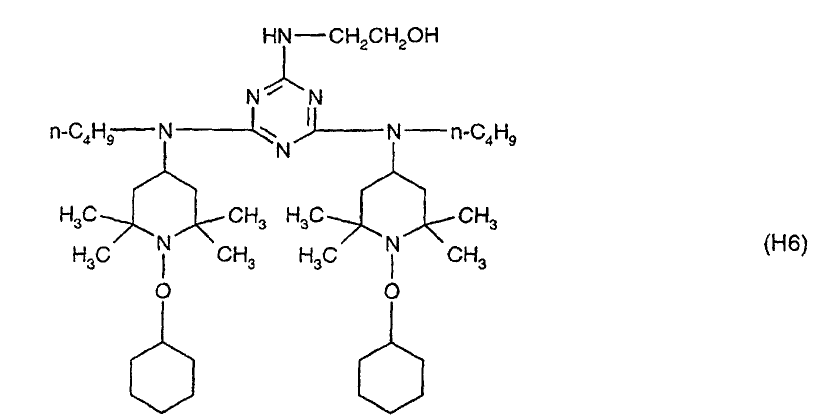 worin
m eine Zahl aus dem Bereich von 2 bis 200 darstellt.

Die Verbindungen vom Typ der sterisch gehinderten Amine sind bekannt und teilweise im Handel erhältlich.

Tinuvin®123, Tinuvin®144, Tinuvin®292, Tinuvin®622 und Chimassorb®944 sind geschützte Handelsnamen der Firma Ciba Spezialitätenchemie AG.

Von besonderem Interesse in der erfindungsgemässen Zusammensetzung ist auch Chimassorb®119 (Ciba Spezialitätenchemie AG). Chimassorb®119 bedeutet ein Kondensationsprodukt hergestellt aus 2-Chlor-4,6-di-(4-n-butylamino-1,2,2,6,6-pentamethylpiperidyl)-1,3,5-triazin und 1,2-Bis(3-aminopropylamino)ethan.

Als Komponente der erfindungsgemässen Zusammensetzung ist insbesondere der Zusatz solcher sterisch gehinderter Amine bevorzugt, deren Molekulargewicht bzw. mittleres Molekulargewicht Mₙ im Bereich von 500 bis 10'000, vor allem im Bereich von 1'000 bis 10'000 liegt. Darunter besonders hervorzuheben sind nochmals diejenigen sterisch gehinderten Amine, deren Molekulargewicht bzw. mittleres Molekulargewicht Mₙ im Bereich von 1'500 bis 10'000, bespielsweise im Bereich von 2'000 bis 7'500 liegt.

Als UV-Absorber sind vor allem zu nennen:

2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl-2'-hydroxy-5'-methylphenyl)-5-chlorbenzotriazol, 2-(3'-sec-Butyl-5'-tert-butyl-2'-hydroxyphenyl)-benzotriazol, 2-(2'-Hydroxy-4'octoxyphenyl)-benzotriazol, 2-(3',5'-Di-tert-amyl-2'-hydroxyphenyl)-benzotriazol, 2-(3',5'-Bis(α,α-dimethylbenzyl)-2'-hydroxyphenyl)-benzotriazol, Mischung aus 2-(3'-tert-Butyl-2'hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'hydroxy-5'-(2-methoxycarbonylethyl)phenyl)-5-chlor-benzotriazol, 2-(3'-tert-Butyl-2'-hydroxy--5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'hydroxyphenyl)-benzotriazol, 2-(3'-Dodecyl-2'-hydroxy-5'-methylphenyl)-benzotriazol, und 2-(3'-tert-Butyl-2'-hydroxy-5'-(2-isooctyloxycarbonylethyl)phenyl-benzotriazol, 2,2'-Methylenbis[4-(1,1,3,3-tetramethylbutyl)-6-benzotriazol-2-yl-phenol]; Umesterungsprodukt von 2-[3'tert-Butyl-5'-(2-methoxycarbonylethyl)-2'-hydroxy-phenyl]-benzotriazol mit Polyethylenglycol 300; (RCH₂CH₂COOCH₂CH₂-)₂ mit R = 3'-tert-Butyl-4'-hydroxy-5'-2H-benzotriazol-2-yl-phenyl.

2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Ditert-butyl-4-hydroxybenzoesäurehexadecylester, 3,5-Di-tert-butyl-4-hydroxybenzoesäureoctadecylester, 3,5-Di-tert-butyl-4-hydroxybenzoesäure-2-methyl-4,6-di-tert-butylphenylester.

Acrylate, wie z.B. α-Cyan-β,β-diphenylacrylsäure-ethylester bzw. -isooctylester, α-Carbo-methoxy-zimtsäuremethylester, α-Cyano-β-methyl-p-methoxy-zimtsäuremethylester bzw.- butylester, α-Carbomethoxy-p-methoxy-zimtsäure-methylester, N-(β-Carbomethoxy-β-cyanovinyl)-2-methyl-indolin.
Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'-ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.

2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin.

Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methylphenyl-undecylketoxim, Nickelkomplexe des 1-Phenyl-4-lauroyl-5-hydroxy-pyrazols, gegebenenfalls mit zusätzlichen Liganden.

Als weitere Zusätze können enthalten sein:

Hydroxylamine wie z.B. N,N-Dibenzylhydroxylamin, N,N-diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.

Nitrone wie z.B. N-Benzyl-alpha-phenyl-nitron, N-Ethyl-alpha-methyl-nitron, N-Octyl-alphaheptyl-nitron, N-Lauryl-alpha-undecyl-nitron, N-Tetradecyl-alpha-tridecyl-nitron, N-Hexadecyl-alpha-pentadecyl-nitron, N-Octadecyl-alpha-heptadecyl-nitron, N-Hexadecylalpha-heptadecyl-nitron, N-Octadecyl-alpha-pentadecyl-nitron, N-Heptadecyl-alphaheptadecyl-nitron, N-Octadecyl-alpha-hexadecyl-nitron, Nitrone abgeleitet von N,N-Dialkylhydroxylaminen hergestellt aus hydrierten Talgfettaminen.

Thiosynergisten wie z.B. Thiodipropionsäure-di-laurylester oder Thiodipropionsäure-distearylester.

Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrittetrakis(β-dodecylmercapto)-propionat.

Polyamidstabilisatoren, wie z.B. Kupfersalze in Kombination mit Jodiden und/oder Phosphorverbindungen und Salze des zweiwertigen Mangans.

Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkaliund Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("Ionomere").

Füllstoffe und Verstärkungsmittel, wie z.B. Calciumcarbonat, Silikate, Glasfasern, Glaskugeln, Asbest, Talk, Kaolin, Glimmer, Bariumsulfat, Metalloxide und -hydroxide, Ruß, Graphit, Holzmehl und Mehle oder Fasern anderer Naturprodukte, synthetische Fasern.

Sonstige Zusätze, wie z.B. Weichmacher, Gleitmittel, Emulgatoren, Pigmente, Rheologieadditive, Katalysatoren, Verlaufshilfsmittel, Optische Aufheller, Flammschutzmittel, Antistatika, Treibmittel.

Benzofuranone bzw. Indolinone, wie z.B. in US-A-4325863, US-A-4338244, US-A-5175312, US-A-5216052, US-A-5252643, DE-A-4316611, DE-A-4316622, DE-A-4316876, EP-A-0589839 oder EP-A-0591102 beschrieben, oder 3-[4-(2-Acetoxyethoxy)phenyl]-5,7-di-tert-butyl-benzofuran-2-on,5,7-Di-tert-butyl-3-[4-(2-stearoyloxyethoxy)phenyl]-benzofuran-2-on, 3,3'-Bis[5,7-di-tert-butyl-3-(4-[2-hydroxyethoxy]phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on.

Bevorzugt sind als Metalloxide die Oxide zweiwertiger Metalle. Besonders bevorzugt sind Oxide der Metalle der zweiten Haupt- oder Nebengruppe, wobei Zink-, Ca- und Magnesiumoxid ganz besonders bevorzugt sind.

Die Menge der Metalloxide richtet sich nach der beabsichtigten Verwendung des Kunststoff-Additiv-Granulates, zweckmässig enthält das Granulat 0-90Gew.-%, bevorzugt 5-60Gew.-%, Metalloxid.

Bevorzugt sind als Metallcarbonate die Carbonate zweiwertiger Metalle. Besonders bevorzugt sind Carbonate der Metalle der zweiten Haupt- oder Nebengruppe.

Die Menge der Metallcarbonate richtet sich nach der beabsichtigten Verwendung des Kunststoff-Additiv-Granulates, zweckmässig enthält das Granulat 0-90Gew.-%.

Eine Metallseife im Rahmen dieser Erfindung ist ein Metallsalz einer Fettsäure, wobei das Metall insbesondere ein Element der II.Haupt- oder Nebengruppe oder Zinn sein kann.

Es handelt sich hierbei insbesondere um Calcium-, Magnesium-, Zinn- oder Zinksalze aus der Reihe der aliphatischen gesättigten C₂-C₂₂-Carboxylate, der aliphatischen olefinischen C₃-C₂₂-Carboxylate, der aliphatischen C₂-C₂₂-Carboxylate, die mit wenigstens einer OH-Gruppe substituiert sind, der cyclischen oder bicyclischen C₅-C₂₂-Carboxylate, der aromatischen C₇-C₂₂-Carboxylate, der aromatischen C₇-C₂₂-Carboxylate, die mit wenigstens einer OH-Gruppe substituiert sind, der C₁-C₁₆-alkylsubstituierten Phenylcarboxylate und der Phenyl-C₁-C₁₆-alkylcarboxylate, wobei Stearate und Laurate und Behenate bevorzugt sind.

Die Menge der weiteren Metallseife richtet sich nach der beabsichtigten Verwendung des Kunststoff-Additiv-Granulates, zweckmässig enthält das Granulat 0-90Gew.-%, bevorzugt 5-60Gew.-%, einer weiteren Metallseife.

Die im Rahmen der Erfindung verwendbaren Epoxidverbindungen b) können eine aliphatische, aromatische, cycloaliphatische, araliphatische oder heterocyclische Struktur haben; sie enthalten Epoxidgruppen als Seitengruppen. Die Epoxidgruppen sind vorzugsweise als Glycidylgruppen über Ether- oder Esterbindungen mit dem Restmolekül verbunden, oder es handelt sich um N-Glycidylderivate von heterocyclischen Aminen, Amiden oder Imiden. Epoxidverbindungen dieser Typen sind allgemein bekannt und im Handel erhältlich.

Die Epoxidverbindungen enthalten Epoxyreste, insbesondere solche der Formel A 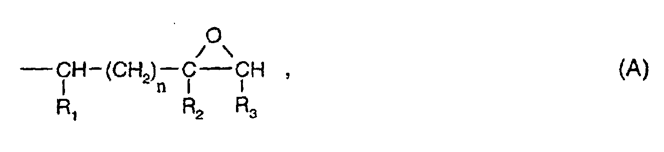 wobei diese direkt an Kohlenstoff, Sauerstoff-, Stickstoff- oder Schwefelatome gebunden sind, worin R₁ und R₃ beide Wasserstoff sind, R₂ Wasserstoff oder Methyl und n=0 ist, oder worin R₁ und R₃ zusammen -CH₂-CH₂- oder -CH₂-CH₂-CH₂- bedeuten, R₂ dann Wasserstoff und n=0 oder 1 ist.

Beispielhaft für Epoxidverbindungen sind zu erwähnen:

I) Polyglycidyl- und Poly-(β-methylglycidyl)-ester erhältlich durch Umsetzung einer Verbindung mit mindestens zwei Carboxylgruppen im Molekül und Epichlorhydrin bzw. Glycerindichlorhydrin bzw. β-Methyl-epichlorhydrin. Die Umsetzung erfolgt zweckmässig in der Gegenwart von Basen.

Als Verbindungen mit mindestens zwei Carboxylgruppen im Molekül können aliphatische Polycarbonsäuren verwendet werden. Beispiele für diese Polycarbonsäuren sind Glutarsäure, Adipinsäure, Pimelinsäure, Korksäure, Azelainsäure, Sebazinsäure oder dimerisierte bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.

Weiterhin können aromatische Polycarbonsäuren Verwendung finden, wie beispielsweise Phthalsäure, lsophthalsäure, Trimellitsäure oder Pyromellitsäure.

Ebenfalls können auch carboxylterminierte Addukte, z.B. von Trimellitsäure und Polyolen, wie beispielsweise Glycerin oder 2,2-Bis-(4-hydroxycyclohexyl)-propan verwendet werden.

II) Polyglycidyl- oder Poly-(β-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschliessender Alkalibehandlung.

Ether dieses Typs leiten sich beispielsweise ab von acyclischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Bistrimethylolpropan, Pentaerythrit, Sorbit, sowie von Polyepichlorhydrinen.

Sie leiten sich aber auch beispielsweise ab von cycloaliphatischen Alkoholen wie 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenylmethan.

Die Epoxidverbindungen können sich auch von einkernigen Phenolen ableiten, wie beispielsweise von Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.

III) Poly-(N-glycidyl)-Verbindungen erhältlich durch Dehydrochlorierung der Reaktionsprodukte von Epichlorhydrin mit Aminen, die mindestens zwei Aminowasserstoffatome enthalten. Bei diesen Aminen handelt es sich zum Beispiel um Anilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenol oder N,N,O-Triglycidyl-p-aminophenol.

Zu den Poly-(N-glycidyl)-Verbindungen zählen aber auch N,N'-Diglycidylderivate von Cycloalkylenharnstoffen, wie Ethylenharnstoff oder 1,3-Propylenharnstoff, und N,N'-Diglycidylderivate von Hydantoinen, wie von 5,5-Dimethylhydantoin.

IV) Poly-(S-glycidyl)-Verbindungen wie beispielsweise Di-S-glycidylderivate, die sich von Dithiolen, wie beispielsweise Ethan-1,2-dithiol oder Bis-(4-mercaptomethylphenyl)-ether ableiten.

V) Epoxidverbindungen mit einem Rest der Formel A, worin R₁ und R₃ zusammen -CH₂-CH₂bedeuten und n 0 ist, sind Bis-(2,3-epoxicyclopentyl)-ether, 2,3-Epoxicyclopentylglycidylether oder 1,2-Bis-(2,3-epoxicyclopentyloxy)-ethan. Ein Epoxidharz mit einem Rest der Formel A, worin R₁ und R₃ zusammen -CH₂-CH₂- sind und n 1 bedeutet, ist beispielsweise 3,4-Epoxi-6-methyl-cyclohexancarbonsäure-(3',4'-epoxi-6'-methyl-cyclohexyl)-methylester.

Geeignete Epoxide sind beispielsweise:
a) flüssige Bisphenol-A-diglycidylether wie Araldit®GY 240, Araldit®GY 250, Araldit®GY 260, Araldit®GY 266, Araldit®GY 2600, Araldit®MY 790;
b) feste Bisphenol-A-diglycidylether wie Araldit®GT 6071, Araldit®GT 7071, Araldit®GT 7072, Araldit®GT 6063, Araldit®GT 7203, Araldit®GT 6064, Araldit®GT 7304, Araldit®GT 7004, Araldit®GT 6084, Araldit®GT 1999, Araldit®GT 7077, Araldi®GT 6097, Araldit®GT 7097, Araldit®GT 7008, Araldit®GT 6099, Araldit®GT 6608, Araldit®GT 6609, Araldit®GT 6610;
c) flüssige Bisphenol-F-diglycidylether wie Araldit®GY 281, Araldit®GY282, Araldit®PY 302, Araldit®PY 306;
d) feste Polyglycidylether von Tetraphenylethan wie CG Epoxy Resin®0163;
e) feste und flüssige Polyglycidylether von Phenolformaldehyd Novolak wie EPN 1138, EPN 1139, GY 1180, PY 307;
f) feste und flüssige Polyglycidylether von o-Cresolformaldehyd Novolak wie ECN 1235, ECN 1273, ECN 1280, ECN 1299;
g) flüssige Glycidylether von Alkoholen wie Shell® Glycidylether 162, Araldit®DY 0390, Araldit®DY 0391;
h)flüssige Glycidylether von Carbonsäuren wie Shell®Cardura E Terephthalsäureester, Trimellithsäureester, Araldit®PY 284;
i) feste heterocyclische Epoxidharze (Triglycidylisocyanurat) wie Araldit® PT 810;
j) flüssige cycloaliphatische Epoxidharze wie Araldit®CY 179;
k) flüssige N,N,O-Triglycidylether von p-Aminophenol wie Araldit®MY 0510;
l) Tetraglycidyl-4,4'-methylenbenzamin oder N,N,N',N'-Tetraglycidyldiaminophenylmethan wie Araldit®MY 720, Araldit®MY 721.

Gegebenenfalls kann auch ein Gemisch von Epoxidverbindungen unterschiedlicher Struktur eingesetzt werden.

Vorzugsweise enthält die Komponente b) mindestens zwei Gruppen der Formel

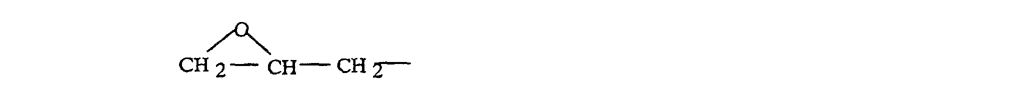

Besonders bevorzugt als Komponente b) sind Verbindungen der Typen(I) bis (III) bzw. Mischungen aus diesen 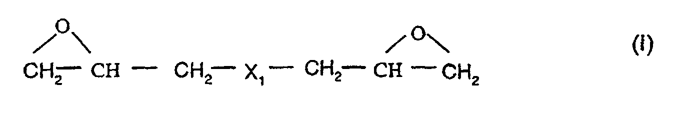 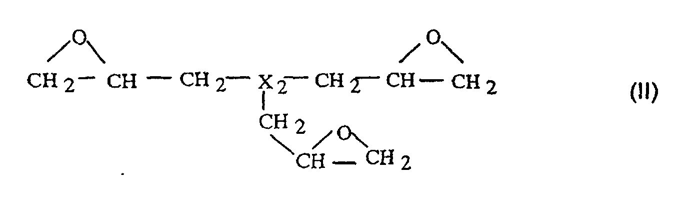 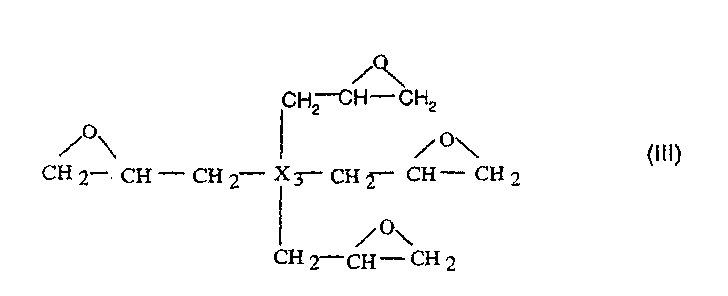 wobei X₁, X₂ und X₃ Cyclohexylen, Phenylen oder Naphthylen bedeuten, welche unsubstituiert oder substituiert sein können und X₁ zusätzlich noch einen unsubstituierten oder substituierten Rest der Formel 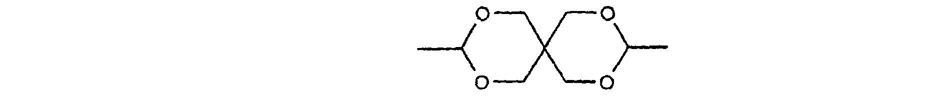 und X₂ zusätzlich noch einen unsubstituierten oder substituierten Rest der Formel 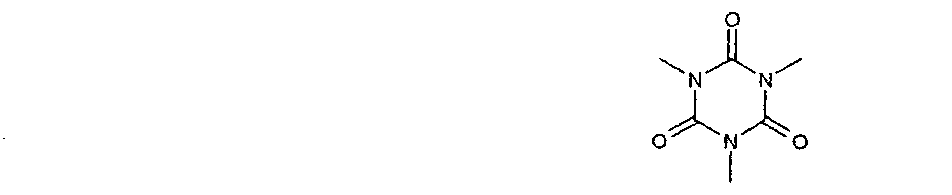 bedeutet.

Als Substituenten für die oben genannten Reste kommen -O-, -S-, -C(O)-, -C(O)O-, -S(O)-,-S(O₂)-, -C(CF₃)₂-, Alkyl, Alkylen, Aryl, Arylen, Alkoxy, Aryloxy oder Halogen in Frage, wobei auch gleiche oder verschiedene Substituenten mehrfach vorhanden sein können oder die Substituenten selbst wiederum substituiert sein können.

Als Alkylrest kommt beispielsweise ein C₁-C₁₈-Alkylrest, wie Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl, n-Dodecyl, n-Tridecyl, n-Tetradecyl, n-Hexadecyl oder n-Octadecyl sowie weitere verzweigte Isomere in Betracht.

Mögliche Alkylen- und Alkoxy-reste lassen sich formal von den oben genannten Alkylresten durch Entfernen eines weiteren H-Atomes bzw. Hinzufügen eines O-Atomes ableiten.

Als Arylreste kommen beispielsweise Reste mit 6-20 C-Atomen, wie Phenylen, Biphenylen oder Naphthylen in Frage.

Mögliche Arylen- und Aryloxy-reste lassen sich formal von den oben genannten Arylresten durch Entfernen eines weiteren H-Atomes bzw. Hinzufügen eines O-Atomes ableiten.

Bevorzugt sind Reste der folgenden Formeln:
für X₁ = 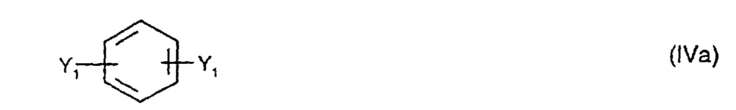 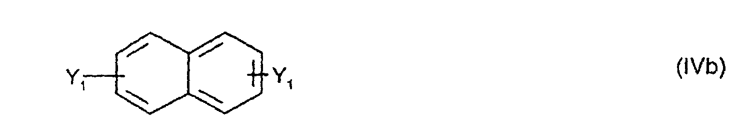 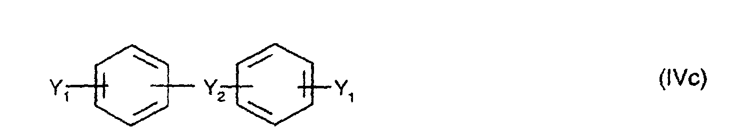 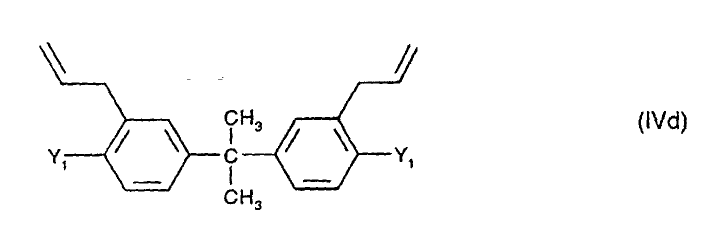 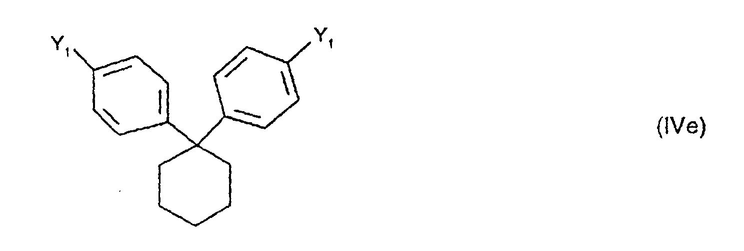 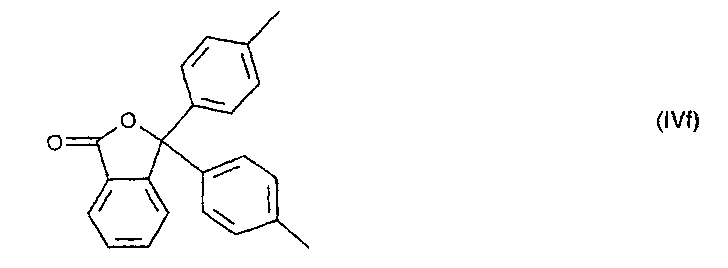 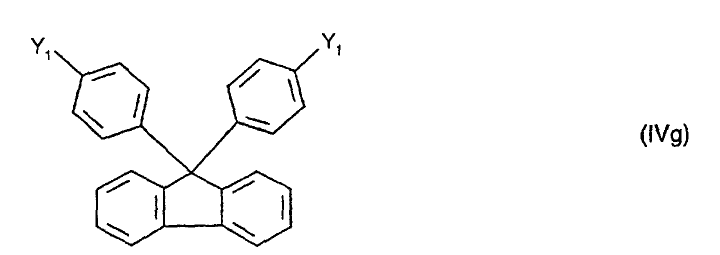 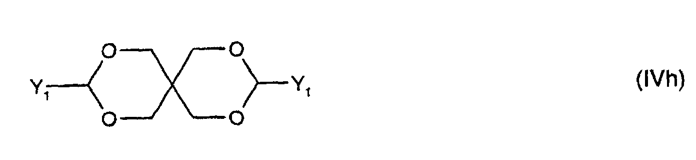 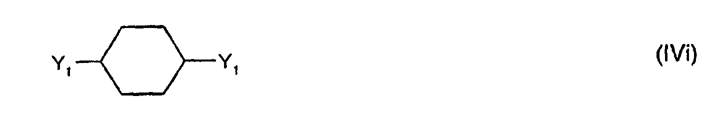 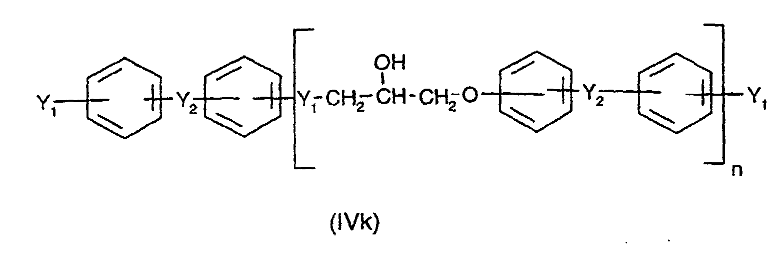 für X₂= 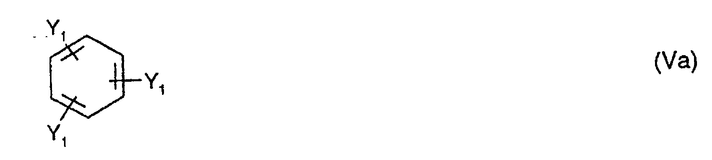 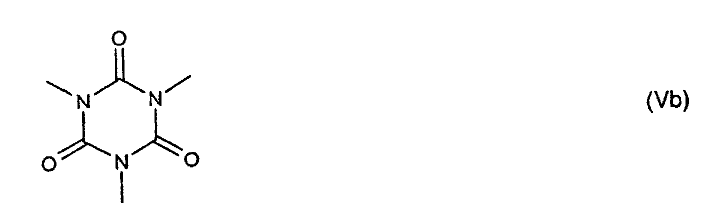 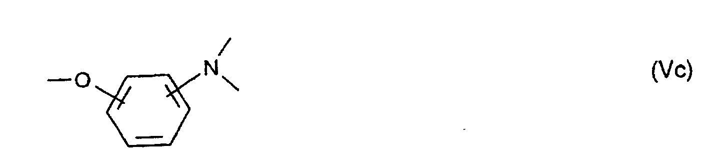 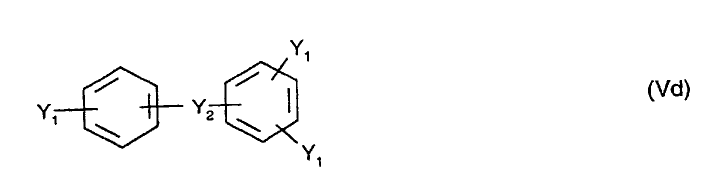 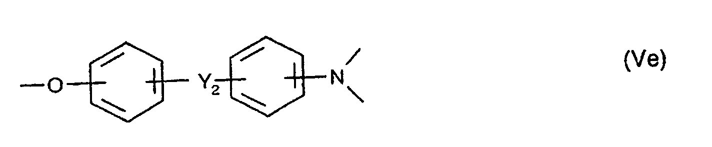 für X₃ = 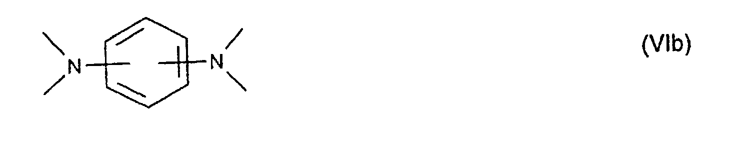 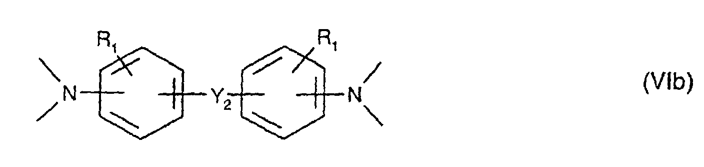 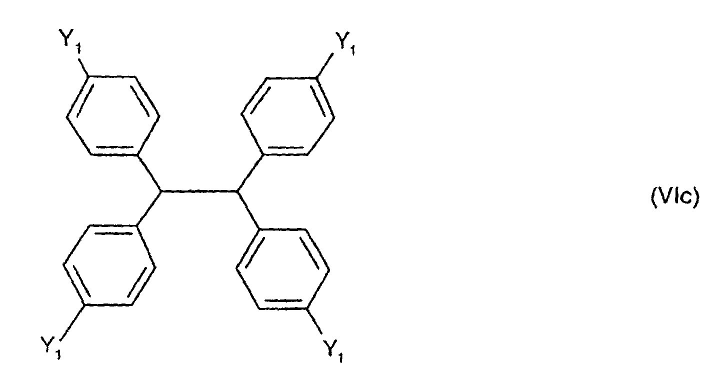 worin
Y₁ eine direkte Bindung, -O-, -S-, -C(O)O-,
Y₂ eine direkte Bindung, -SO₂-, -CO-, -S-, -SO-, CH₂-, -C(CH₃)_{2⁻} oder -C(CF₃)_{2⁻}
und
n = 1-10 ist.

Die aromatischen Ringe sind gegebenenfalls ein- oder mehrfach durch Alkyl, Aryl, Alkoxy, Aryloxy oder Halogen, wie oben näher erläutert, substituiert.

Insbesondere bevorzugt als Komponente b) sind die Verbindungen

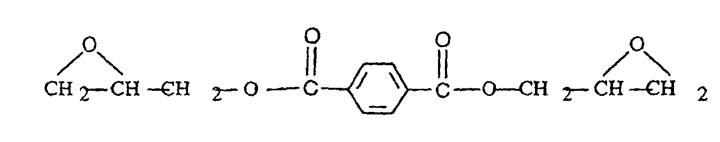

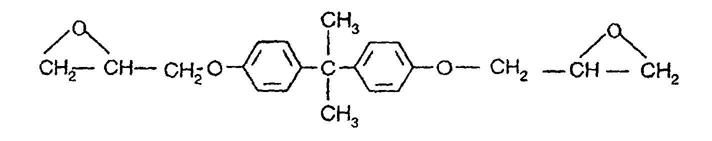

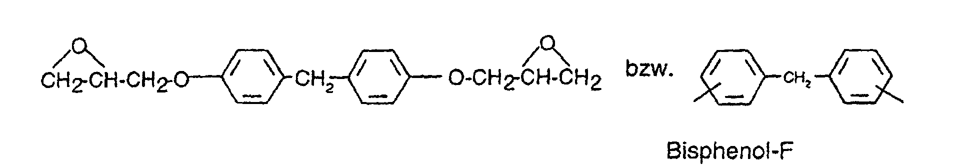

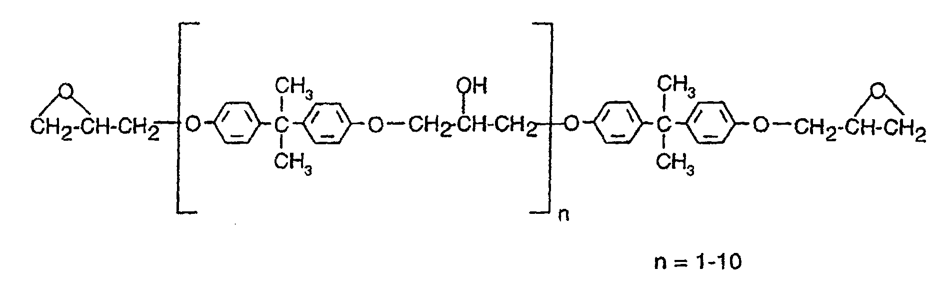

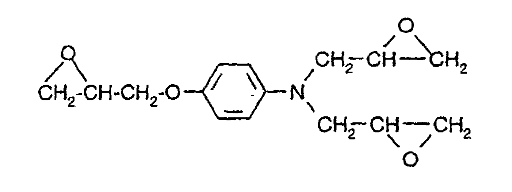

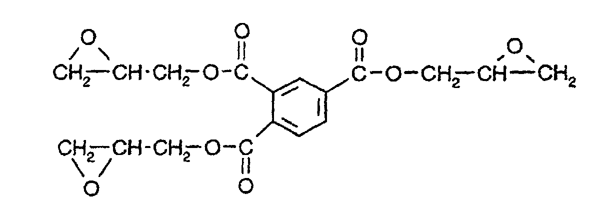

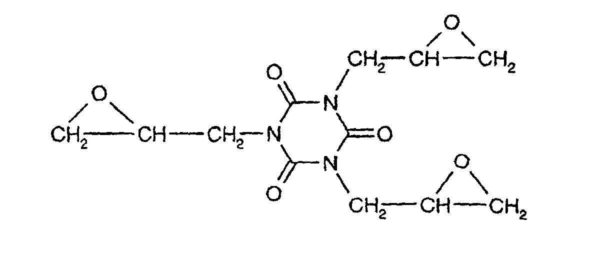

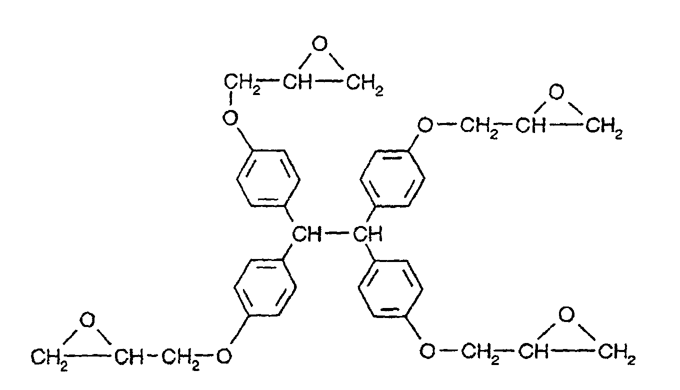

Die erfindungsgemässen Granulate können praktisch allen zu stabilisierenden Polymeren zugesetzt werden. Beispiele hierfür sind:
1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, Vlb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder π- oder σ-koordiniert sein können. Diese Metallkomplexe können frei oder auf Träger fixiert sein, wie beispielsweise auf aktiviertem Magnesiumchlorid, Titan(lll)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen la, lla und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE, LDPE/LLDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-lsobutylen-Copolymere, Ethylen-Buten-1-Copolymere, Ethylen--Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.
4. Kohlenwasserstoffharze (z.B. C₅-C₉) inklusive hydrierte Modifikationen davon (z.B. Klebrigmacherharze) und Mischungen von Polyalkylenen und Stärke.
5. Polystyrol, Poly-(p-methylstyrol), Poly-(α-methylstyrol).
6. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und - methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-lsopren-Styrol, Styrol-Ethylen/Butylen-Styrol oder Styrol-Ethylen/Propylen-Styrol.
7. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.
8. Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylenisophthalamid. Block-Copolymere der vorstehend genanntenPolyamide mit Polyolefinen, Olefin-Copolymeren, lonomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
17. Polyharnstoffe, Polyimide, Polyamid-imide, Polyetherimide, Polyesterimide, Polyhydantoine und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Polytrimethylenterephthalat, Poly-1,4-dimethylolcyclohexanterephthalat, Polyhydroxybenzoate, sowie Block-Polyether-ester, die sich von Polyethem mit Hydroxylendgruppen ableiten; Polyethylennaphthylat, Copolyester von Terephthalsäure, lsophthalsäure, Naphthalindicarbonsäure mit Ethylenglykol und/oder Cyclohexandimethanol; ferner mit Polycarbonaten oder MBS modifizierte Polyester.
19. Polycarbonate und Polyestercarbonate.
20. Polysulfone, Polyethersulfone und Polyetherketone.
21. Vemetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
22. Trocknende und nicht-trocknende Alkydharze.
23. Ungesättigte Polyesterharze, die sich von Copolyestern gsättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
24. Vernetzbare Acrylharze, die sich von substituierten Acrylsäureestern ableiten, wie z.B. von Epoxyacrylaten, Urethan-acrylaten oder Polyester-acrylaten.
25. Alkydharze, Polyesterharze und Acrylatharze, die mit Melaminharzen, Harnstoffharzen, lsocyanaten, lsocyanuraten, Polyisocyanaten oder Epoxidharzen vernetzt sind.
26. Vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-diglycidylethern, die mittels üblichen Härtern wie z.B. Anhydriden oder Aminen mit oder ohne Beschleunigern vernetzt werden.
27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
28. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PET, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Bevorzugte Polymere sind Polyolefine, insbesondere Polypropylen und Polyethylen in seinen verschiedenen Modifikationen.

Weitere Gegenstände der vorliegenden Erfindung ist ein Granulat erhältlich durch das erfindungsgemässe Verfahren sowie die Verwendung des Granulats zur Stabilisierung von organischen Polymeren, insbesondere von Polyethylen oder Polypropylen.

Ein weiterer Gegenstand der Erfindung ist ein organisches Polymer enthaltend ein erfindungsgemässes Granulat.

Die nachfolgenden Beispiele erläutern die Erfindung.

### A) Herstellung von Stabilisator-Blends durch Extrusion:

### Beispiel A1:

Araldit GT 7072 (70 Teile) und lrganox 1222 (30 Teile) werden über 2 gravimetrisch arbeitende Dosierwaagen und einem Durchsatz von 70 kg/h in einen Buss Co-kneter (Buss 70) eingetragen. Bei Versuchsbeginn sind folgende Extruderparameter eingestellt:
- Temperaturprofil:
   Zone 1: 50°C
   Zone 2: 60°C
   Austragsschnecke: 60°C
   Schneckenwelle: 50°C
   Düsenkopf: 120°C
- Drehzahl
   Kneter: 65 Upm
   Austragsschnecke: 60 Upm
   Heißabschlag: 500 Upm

Im Mischteil des Co-Kneters werden die Stabilisatoren plastifiziert und homogen dispergiert. Die Schmelze wird anschließend in der Austragsschnecke verdichtet, durch eine mit 20 Düsenlöchern (Durchmesser 2,5 mm) versetzte Düsenplatte gepresst und mit dem Heißabschlaggranulator zu Zylindergranulat geschnitten. Die Schmelze wird beim Schneiden mit einem Luft/Wasser-Gemisch zusätzlich abgekühlt. Die Granulate werden nach dem Schneiden zuerst vorentwässert und dann in einem Fließbetttrockner getrocknet und auf Raumtemperatur abgekühlt.

Die Granulate weisen eine einheitliche Produktform auf, sind staubfrei und lagerstabil (> 3 Monate). Eine Pulvermischung aus identischen Rohstoffen (gleiche Zusammensetzung) klumpt bereits nach kurzer Lagerdauer (< 4 Wochen).

### Beispiel A2:

Araldit GT 7072 (70 Teile) und eine Pulvermischung, zusammengesetzt aus den Rohstoffen Irganox 1010 (7.5 Teile), Irgafos 168 (7.5 Teile), Ca-stearat (3 Teile) und Calciumoxid (12 Teile), werden über 2 gravimetrisch arbeitende Dosierwaagen mit einem Durchsatz von 30 kg/h in einen Buss Co-kneter (Buss 70) eingetragen. Bei Versuchsbeginn sind folgende Extruderparameter eingestellt:
- Temperaturprofil:
   Zone 1: 60°C
   Zone 2: 70°C
   Austragsschnecke: 70°C
   Schneckenwelle: 60°C
   Düsenkopf: 90°C
- Drehzahl
   Kneter: 360 Upm
   Austragsschnecke: 95 Upm
   Heißabschlag: 100 Upm

Im Mischteil des Co-Kneters werden die Stabilisatoren plastifiziert und homogen dispergiert. Es werden nicht alle Komponenten aufgeschmolzen. Die Schmelze wird anschließend in der Austragsschnecke verdichtet, durch eine mit 20 Düsenlöchern (Durchmesser 2,5 mm) versetzte Düsenplatte gepresst und mit dem Heißabschlaggranulator zu Zylindergranulat geschnitten. Die Schmelze wird bei Schneiden mit einem Luft/Wasser-Gemisch zusätzlich abgekühlt. Die Granulate werden nach dem Schneiden zuerst vorentwässert und dann in einem Fließbetttrockner getrocknet und auf Raumtemperatur abgekühlt.

Die Granulate weisen eine einheitliche Produktform auf, sind staubfrei und lagerstabil.

### B) Anwendungsbeispiele

### Beispiel B1: Drucklagertest

Das nach Beispiel A2 hergestellte Granulat wird in einem Becherglas 3 Tage in einem Wärmeschrank bei 40°C gelagert. Das Granulat wird während dieser Zeit mit einem 800 g schweren Gewicht beaufschlagt. Nach der Entnahme aus dem Wärmeschrank lässt sich das Granulat aus dem Becherglas auf eine Metallplatte ausschütten. Agglomerierte Granulatkömer können mit dem Spatel leicht zerdrückt werden.

### Beispiel B2: Prüfung der Granulatqualität durch Wärmelagerung

Gemäss Beispiele A1 und A2 werden Stabilisator-Blends diverser Zusammensetzung hergestellt. Je nach eingesetzten Rohstoffen (Epoxid, Stabilisator) bzw. Anteilen bei gleichen Rohstoffen, wird das Material ganz oder aber nur teilweise im Extruder aufgeschmolzen. Weiterhin wird die Schmelze in Abhängigkeit vom eingesetzten Rohstoff beim Schneiden mit Luft, einem Luft/Wasser-Gemisch oder aber ausschließlich Wasser abgekühlt.

Die Prüfung des Granulats erfolgt wie nachstehend beschrieben:

50 g einer Mischung werden auf dem Boden einer Aluminiumschale homogen verteilt. Anschließend wird die Schale in einem Wärmeschrank 24 h bei der jeweiligen Prüftemperatur gelagert. Nach Beendigung des Versuches wird der Inhalt der Schale auf einer Metallplatte ausgeschüttet. Die Klebeneigung der Granulate wird dabei folgendermaßen eingestuft:
1 = Zerfällt durch Anklopfen
2 = Mit Spatel leicht zerdrückbar
3 = Tablettiert, mit Kraft zerdrückbar
4 = Zusammengesintert

Das Ergebnis ist in den Tabellen 1 und 2 dargestellt

**Tabelle 1:**

| lfd. Nr. | Zusammensetzung Stabilisatoren | Herstellverfahren | 24 h Wärmelagerung bei | | |
|---|---|---|---|---|---|
| | | | 30°C | 40°C | 50°C |
| B3 | Irganox 1222: Araldit GT 6071 33 Teile : 67 Teile | Extrusion | 1 | 2 | 3 |
| B4 | Irganox 1222 : Araldit GT 7072 30 Teile : 70 Teile | Extrusion | 1 | 1-2 | 3 |
| B5 | Irganox 1425 : Araldit GT 7072 20 Teile : 80 Teile | Extrusion | 1 | 1 | 2 |
| B6 | Irganox 1222 : Araldit GT 7072 30 Teile : 70 Teile | Extrusion | 1 | 1 | 2 |
| V1 | Vergleichsbeispiele Irganox 1222 : Araldit GT 6071 33 Teile : 67 Teile | Kompaktierung | 2 | 2 | 3 |
| V2 | Irganox 1222 : Araldit GT 6071 33 Teile : 67 Teile | Pulvermischung | 2 | 2 | 3 |

**Tabelle 2.**

| Lagerstabilität erfindungsgemäss hergestellter Additivgranulate | | |
|---|---|---|
| Lfd. Nr. | Stabilisatorzusammensetzung | 24 h Wärmelagerung bei 30 °C |
| B7 | 50 Teile Araldit GT 7072 10 Teile Ca-Stearat 10 Teile Irgafos 168 5 Teile Irganox 1010 12.5 Teile Chimassorb 944 12.5 Teile Tinuvin 622 | 1 |
| B8 | 70 Teile Araldit GT 7072 10 Teile Tinuvin 326 10 Teile Chimassorb 944 10 Teile Tinuvin 622 | 1 |
| B9 | 70 Teile Araldit GT 7072 10 Teile Chimassorb 81 10 Teile Chimassorb 944 10 Teile Tinuvin 622 | 1 |
| B10 | 70 Teile Araldit GT 7072 15 Teile DHT 4A (Hydrotalcit) 5 Teile Irganox 1010 10 Teile Irgafos 168 | 1 |
| B11 | 70 Teile Araldit GT 7072 15 Teile Irganox PS802 5 Teile Irganox 1010 10 Teile Irgafos 168 | 1 |
| B12 | 63 Teile Araldit GT 7072 10.8 Teile CaO 2.7 Teile Ca-Stearat 6.75 Teile Irganox 1010 6.75 Teile Irgafos 168 10 PE 520 (Polyethylenwachs) | 1 |
| B13 | 70 Teile Araldit GT 7072 12 Teile Ca-Stearat 12 Teile Irgafos 168 6 Teile Irganox 1076 | 1 |
| Klebeneigung | | |
| 1 = zerfällt durch anklopfen | | |

### C Ofenalterungsbeispiele

Die Wirksamkeit der staubfreien epoxidhaltigen Stabilisatorgranulate wird durch Einarbeitung in PP/EPDM (teillackiertes Altmaterial) und anschließende Prüfung untersucht.

Die in Tabelle 3 angeführten Zusätze werden gemäss Beispiel A2 zu einem Granulat verarbeitet, bzw. im Vergleichsversuch als Pulver gemischt und mit Hilfe eines gleichsinnig drehenden Zweischneckenextruders bei max. 260 °C und 100 U/min in das Polymer (PP/EPDM Altmaterial) eingearbeitet. Die Schmelze wird mit einem 200 µm Siebpaket filtriert und anschließend granuliert.

Das Polymergranulat wird dann zu Prüfkörpern bei max. 240 °C spritzgegossen.

Die Prüfkörper werden bei 135 °C (Tabelle 3) bzw. bei 150 °C (Tabelle 4) im Umlufttrockenschrank gealtert.

Die Alterung wird anhand der Schlagzugzähigkeit (Tabelle 3) nach DIN 53448 verfolgt, bzw. durch einen Biegeversuch bis zum Bruch (Tabelle 4) bestimmt.

**Tabelle 3:**

| Ofenalterung bei 135 °C | | | | | | |
|---|---|---|---|---|---|---|
| | Stabilisierung | Schlagzugzähigkeit nach | | | | |
| | | 0 h | 750 h | 1000 h | 1250 h | 1500 h |
| | | [kJ/m²] | | | | |
| Vergleich 1 | ohne Zusatz | 379 | 221 | 219 | 90 | 71 |
| Vergleich 2 | Mischung: 0.3500 % fester Bisphenol-A-diglycidylether, Araldit GT 7072 kompaktierte Stabilisatormischung 0.0600 % CaO 0.0150 % Ca-Stearat 0.0375 % lrganox 1010 0.0375 % Irgafos 168 | 375 | 393 | 260 | 259 | 214 |
| Beispiel C1 | Stabilisatorgranulat: 0.3500 % fester Bisphenol-A-diglycidylether, Araldit GT 7072 0.0600 % CaO 0.0150 % Ca-Stearat 0.0375 % lrganox 1010 0.0375 % Irgafos 168 | 414 | 401 | 337 | 314 | 286 |

**Tabelle 4:**

| Ofenalterung bei 150 °C | | |
|---|---|---|
| | Stabilisierung | Zeit bis zum Bruch |
| | | [Tage] |
| Vergleich 3 | ohne Zusatz | 11 |
| Vergleich 4 | Mischung: | |
| | 0.3500 % fester Bisphenol-A-diglycidylether, Araldit GT 7072 kompaktierte Stabilisatormischung | 14 |
| | 0.0600 % CaO | |
| | 0.0150 % Ca-Stearat | |
| | 0.0375 % lrganox 1010 | |
| | 0.0375 % Irgafos 168 | |
| Beispiel C2 | Stabilisatorgranulat: | |
| | 0.3500 % fester Bisphenol-A-diglycidylether, Araldit GT 7072 | |
| | 0.0600 % CaO | 15 |
| | 0.0150 % Ca-Stearat | |
| | 0.0375 % lrganox 1010 | |
| | 0.0375 % Irgafos 168 | |

Die Beispiele in Tabelle 3 und 4 zeigen, daß das Stabilisatorgranulat eine gute Stabilisierungswirkung hat. Die Materialeigenschaften werden länger auf höherem Niveau gehalten.

Überraschend werden bessere Werte erreicht als bei der physikalischen Mischung aus handelsüblichem festem Bisphenol-A-Diglycidylether und kompaktierter Stabilisatormischung (Vergleichsversuche 1-4).

### Verwendete Additive

Araldit GT 6071 : Bisphenol-A-diglycidylether, Epoxidzahl(Aeq./kg) 2,15-2,22, Erweichungspunkt 70-75°C.

Araldit GT 7072: Bisphenol-A-diglycidylether, Epoxidzahl(Aeq./kg) 1,68-1,75, Erweichungspunkt 82-90°C. 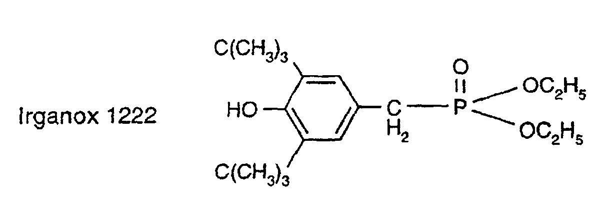 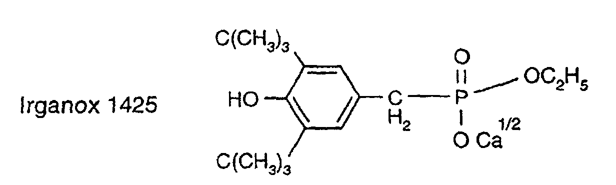 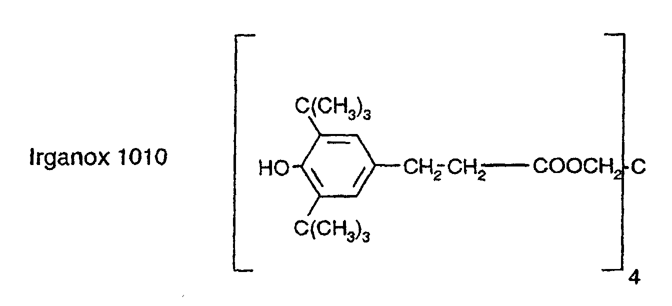 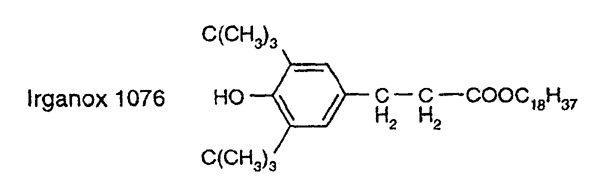 Irganox PS 802 Di-stearyl-thiodipropionat

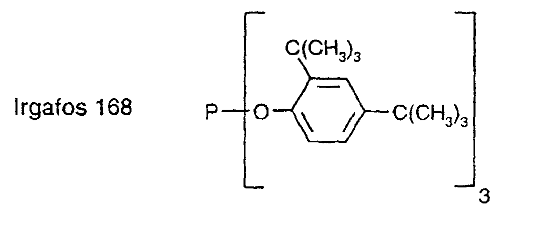

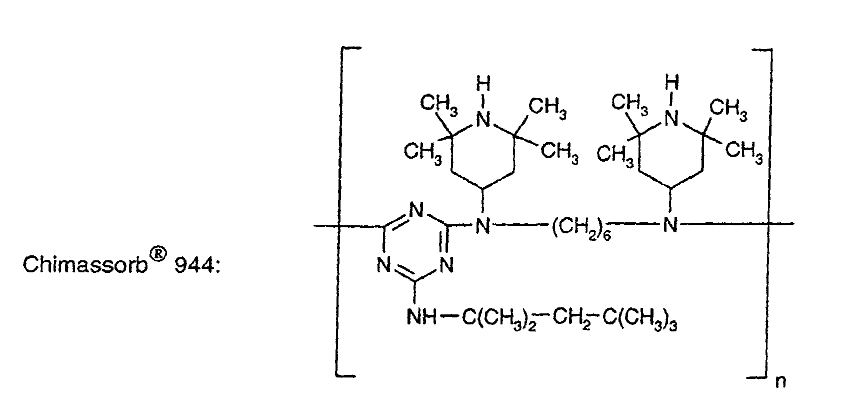

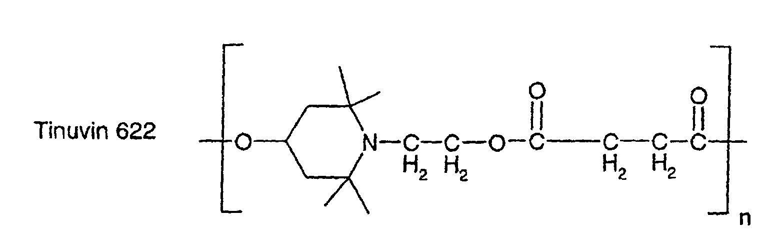

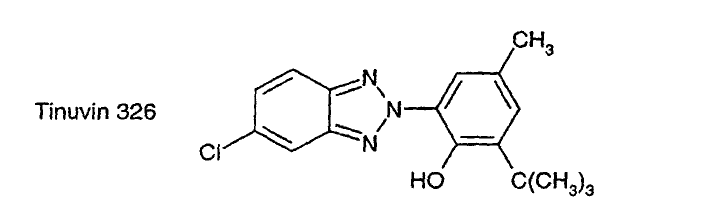

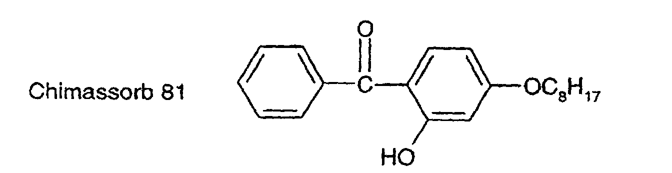

Die eingesetzten Produkte sind Handelsprodukte und die Namen eingetragene Warenzeichen der Firma CIBA Spezialitätenchemie AG

## Patentansprüche

1. Staubarmes Granulat von Kunststoff-Additiven, enthaltend
a) ein phenolisches Antioxidans, ein organisches Phosphit oder Phosphonit, ein Phosphonat, ein sterisch gehindertes Amin oder einen UV-Absorber einzeln oder ein Gemisch dieser Verbindungen und
b) mindestens eine bei Raumtemperatur feste Epoxidverbindung.

2. Granulat nach Anspruch 1, welches als Komponente b) ein multifunktionelles Epoxid enthält.

3. Granulat nach Anspruch 1, welches 10-90 Gew.-%, einer Epoxidverbindung enthält.

4. Granulat nach Anspruch 1, welches eine nach ISO 3435 definierte Komgrössenverteilung zwischen 1 mm bis 6mm aufweist.

5. Granulat nach Anspruch 1, welches eine lose Schüttdichte grösser 500g/l aufweist.

6. Granulat nach Anspruch 1, welches eine Rieselfähigkeit nach DIN 53492 von kleiner 15s (tR15) aufweist.

7. Granulat nach Anspruch 1, welches einen nach dem Heubachtest ermittelten Feinanteil von nicht mehr als 0,1 Gew.-% aufweist.

8. Granulat nach Anspruch 1, welches noch weitere Kunststoff-Additive aus der Gruppe der Hydrotalcite, Metalloxide oder -carbonate, Metallseifen, Antistatika, Antiblockmittel, Flammschutzmittel, Thioester, interne und externe Gleitmittel, Verarbeitungshilfsmittel oder Pigmente enthält.

9. Granulat nach Anspruch 1, welches aus 30-80 Gew.-% Epoxidverbindung, 5-25 Gew.-% eines Antioxidans vom Typ der sterisch gehinderten Phenole, 5-25 Gew.-% eines Phosphits oder Phosphonits, 10-40 Gew.-% CaO und 1-5 Gew.-% Ca-Stearat besteht.

10. Granulat nach Anspruch 1, welches aus 50-80 Gew.-% Epoxidverbindung und 50-20 Gew.-% eines Phosphonats besteht.

11. Granulat nach Anspruch 1, welches als phenolisches Antioxidans 3,5,3',5'-Tetra-tertbutyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid, lsooctyl-3,5-di-tert-butyl-4-hydroxybenzyl-mercaptoacetat, ,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol;
2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tertbutyl-4-hydroxyphenoxy)- 1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat;
4-Hydroxy-laurinsäureanilid, 4-Hydroxystearinsäureanilid, N-(3,5-di-tert-butyl-4-hydroxyphenyl)-carbaminsäureoctylester;
oder einen Ester der β-(3,5-Di-tert-butyl-4-hydroxyphenyl)-propionsäure mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris--(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan oder 4-Hydroxymethyl-1-phospha-2,6,7-trioxabicyclo-[2.2.2]-octan oder 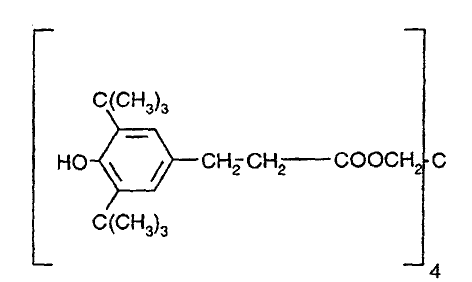 β-(3,5-Di-tert.-butyl-4-hydroxyphenyl) propionsäureester von Pentaerythrit 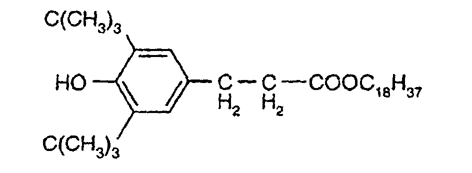 β-(3,5-Di-tert.-butyl-4-hydroxyphenyl) propionsäureoctadecylester 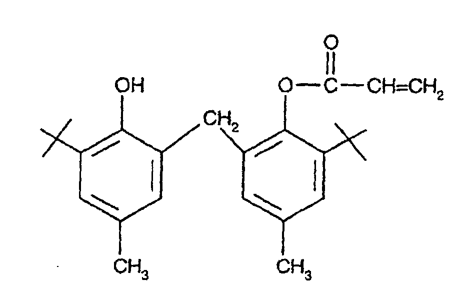 {2-Propensäure-2-(1,1-dimethylethyl)-6-[[3-(1,1-dimethylethyl)-2-hydroxy-5-methylphenyl]-methyl]-4-methylphenylester}; 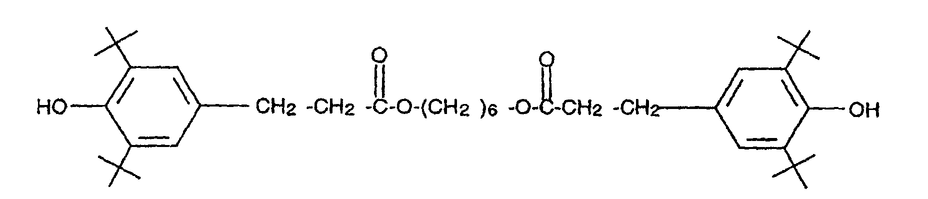 (3,5-Bis(1,1-dimethyl-ethyl)-4-hydroxy-phenylpropansäure-1,6-hexandiylester}; 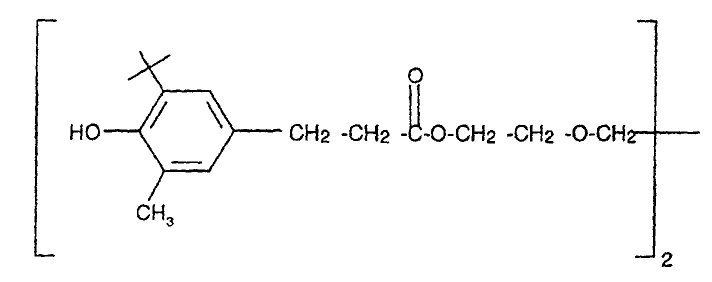 (3-(1,1-Dimethylethyl)-4-hydroxy-5-methyl-phenylpropansäure-1,2-ethandiylbis(oxy-2,1-ethandiyl)ester}; 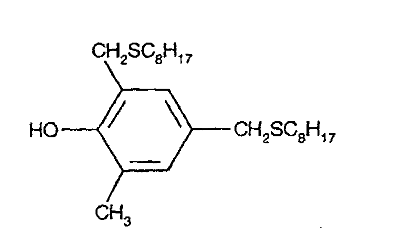 {2-Methyl-4,6-bis[(octylthio)methyl]-phenol}; 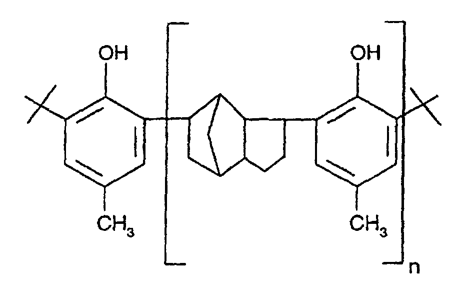 Butyliertes Reaktionsprodukt von para Kresol und Dicyclopentadien (mittleres Molekulargewicht 600-700) 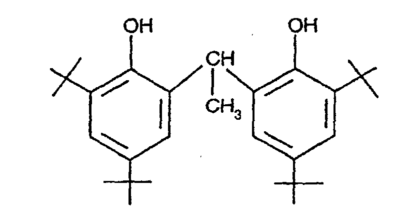 {2,2'-Ethyliden-bis-(4,6-di-tert.butylphenol)}; 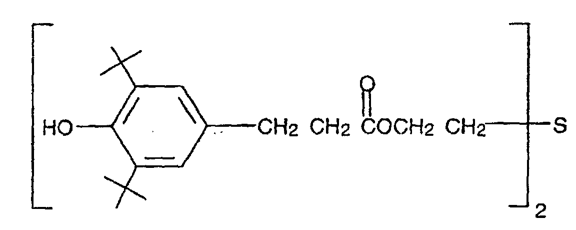 {3,5-Bis(1,1-dimethylethyl)-4-hydroxy-phenylpropansäure-thiodi-2,1-ethandiylester}; 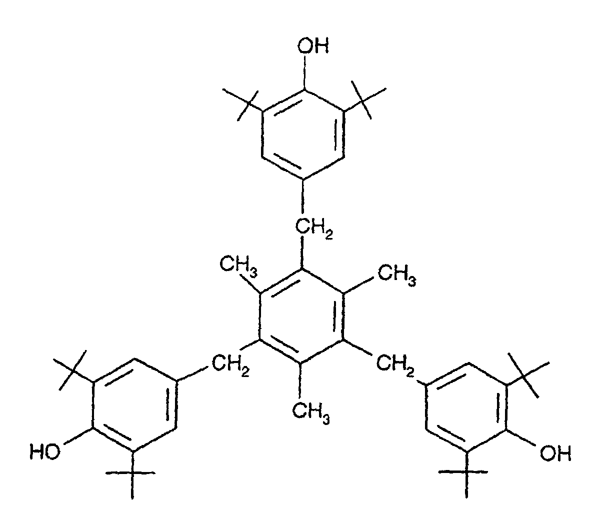 {4,4',4"-[(2,4,6-Trimethyl-1,3,5-phenyltriyl)tris-(methylen)]tris[2,6-bis(1,1-dimethylethyl)phenol}; 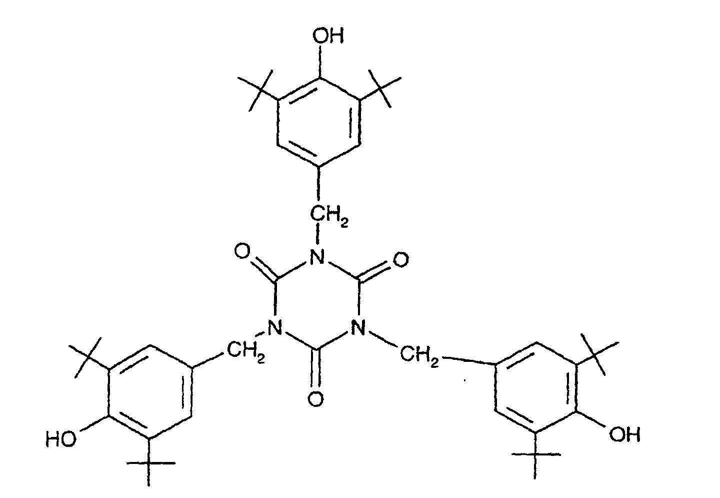 {1,3,5-Tris[[3,5-bis(1,1-dimethylethyl)-4-hydroxyphenyl]methyl]-1,3,5-triazin-2,4,6(1H,3H,5H)-trion}
enthält.

12. Granulat nach Anspruch 1, welches als Phosphonat Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat oder das Ca-Salz des 3,5-Di-tert-butyl-4-hydroxybenzyl-phosphonsäuremonoethylesters enthält.

13. Granulat nach Anspruch 1, welches als Phosphite oder Phosphonite Triphenylphosphit, Diphenylalkylphosphite, Phenyldialkylphosphite, Tris(diphenylalkylphosphit)amine, Tris--(nonylphenyl)-phosphit, Trilaurylphosphit, Trioctadecylphosphit, Distearyl-pentaerythritdiphosphit, Tris-(2,4-di-tert.butylphenyl)-phosphit, Bis-(2,4-di-tert.butylphenyl)-pentaerythritdiphosphit, Tristearyl-sorbit-triphosphit, Tetrakis-(2,4-di-tert.butylphenyl)-4,4'biphenylen-diphosphonit, 3,9-Bis-(2,4-di-tert.butyl-4-methylphenoxy)-2,4,8,10-tetraoxa-3,9-diphosphaspiro[5.5]undecan, 3,9-Tris-(2,4,6-tris-tert.butylphenoxy)-2,4,8,10-tetraoxa-3,9-diphosphaspiro[5,5]undecan, 2,4,6-Tris-tert.-butylphenyl-2-butyl-2-ethyl-1,3-propandiolphosphit oder 2,2'-Ethyliden-bis-(4,6-di-tert.butylphenyl)-fluorophosphit enthält.

14. Granulat nach Anspruch 1, welches als zusätzliches Additiv ein Oxid der Metalle der zweiten Haupt- oder Nebengruppe enthält.

15. Granulate nach Anspruch 1, welche als Epoxidverbindung eine Epoxid ausgewählt aus der Gruppe bestehend aus 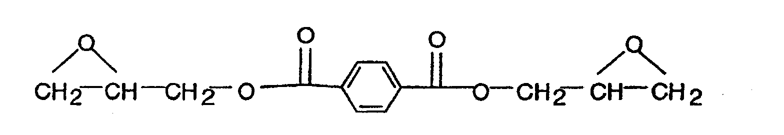 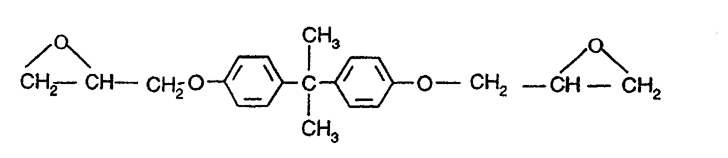 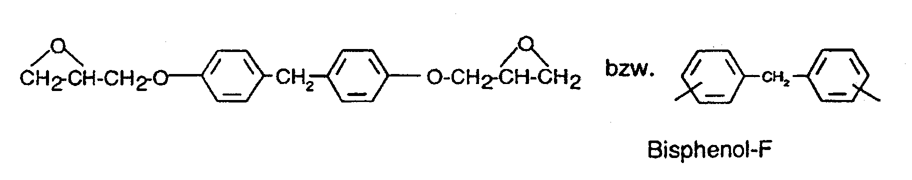 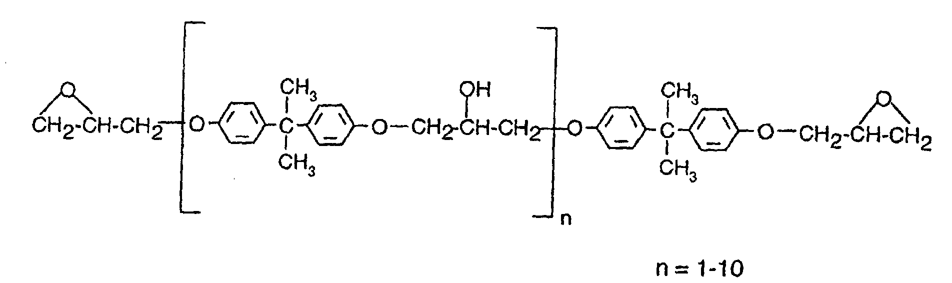 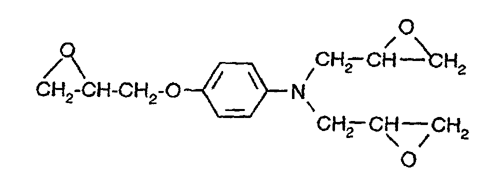 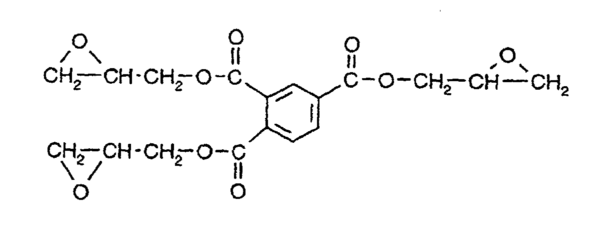 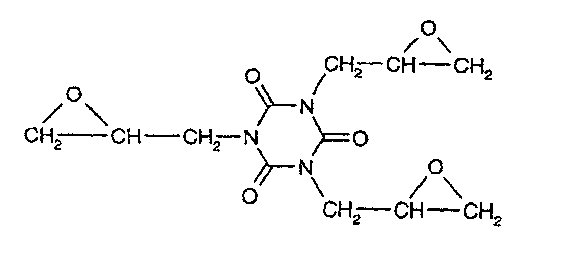 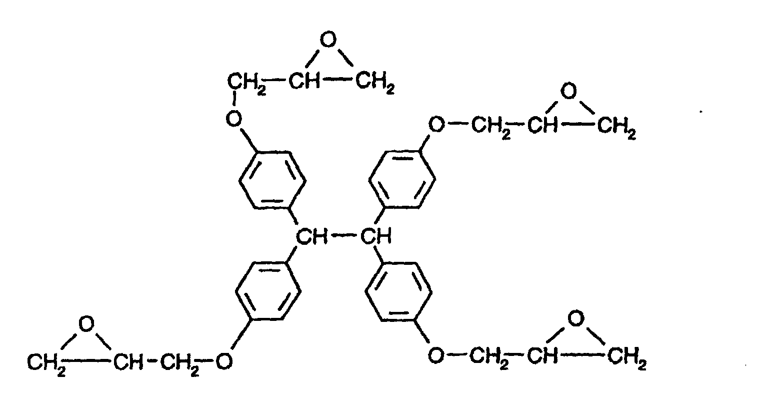 enthalten.

16. Verfahren zur Herstellung von Granulat von Kunststoff-Additiven, **dadurch gekennzeichnet, dass** man
a) ein phenolisches Antioxidans, ein organisches Phosphit oder Phosphonit, ein Phosphonat, ein sterisch gehindertes Amin oder einen UV-Absorber einzeln oder ein Gemisch dieser Verbindungen und
b) mindestens eine bei Raumtemperatur feste multifunktionelle Epoxidverbindung soweit erwärmt, dass mindestens 80 Gew.-% der Epoxidverbindung geschmolzen ist, die Schmelze durch eine mit Düsen oder Löchern versehene Platte, wobei der Düsen- oder Lochdurchmesser zwischen 1 und 10 mm beträgt, presst und die so erhaltenen Stränge im plastischen Zustand zu Granulaten schneidet.

17. Verfahren nach Anspruch 16, **dadurch gekennzeichnet, dass** die Temperatur vor der Austrittsdüse (am Düsenkopf) zwischen 60-160° C beträgt.

18. Granulat erhältlich durch das Verfahren nach Anspruch 16.

19. Verwendung des Granulats nach Anspruch 1 zur Stabilisierung von organischen Polymeren.

## Claims

1. Low-dust granules of plastics additives, comprising
a) a phenolic antioxidant, an organic phosphite or phosphonite, a phosphonate, a sterically hindered amine or a UV absorber, individually, or a mixture of these compounds, and
b) at least one epoxy compound which is solid at room temperature.

2. Granules according to claim 1, which comprise a polyfunctional epoxide as component b).

3. Granules according to claim 1, which comprise 10-90% by weight of an epoxy compound.

4. Granules according to claim 1, which have a particle see distribution of between 1 mm and 6 mm as defined in accordance with ISO 3435.

5. Granules according to claim 1, which have a loose bulk density of greater than 500 g/l.

6. Granules according to claim 1, which have a free flow in accordance with DIN 53492 of less than 15 s (tR15).

7. Granules according to claim 1, which have a fine fraction as determined by the Heubach test of not more than 0.1% by weight.

8. Granules according to claim 1, which comprise further plastics additives from the group of the hydrotalcites, metal oxides, metal carbonates, metal soaps, antistats, antiblocking agents, flame retardants, thioesters, internal and external lubricants, processing aids and pigments.

9. Granules according to claim 1, which consist of 30-80% by weight of epoxy compound, 5-25% by weight of an antioxidant of the sterically hindered phenol type, 5-25% by weight of a phosphite or phosphonite, 10-40% by weight of CaO and 1-5% by weight of calcium stearate.

10. Granules according to claim 1, which consist of 50-80% by weight of epoxy compound and of 50-20% by weight of a phosphonate.

11. Granules according to claim 1, which comprise as phenolic antioxidant 3,5,3',5'-tetra-tert-butyl-4,4'-dihydroxydibenzyl ether, octadecyl 4-hydroxy-3,5-dimethylbenzylmercaptoacetate, tris(3,5-di-tert-butyl-4-hydroxybenzyl)-amine, bis(4-tert-butyl-3-hydroxy-2,6-dimethylbenzyl) dithioterephthalate, bis(3,5-di-tert-butyl-4-hydroxybenzyl) sulfide, isooctyl 3,5-di-tert-butyl-4-hydroxybenzylmercaptoacetate, 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol;
2,4-bisoctylmercapto-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris(3,5-di-tert-butyl-4-hydroxybenzyl) isocyanurate, 1,3,5-tris(4-tert-butyl-3-hydroxy-2,6-dimethylbenzyl) isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)hexahydro-1,3,5-triazine, 1,3,5-tris(3,5-dicyclohexyl-4-hydroxybenzyl) isocyanurate;
4-hydroxylauranilide, 4-hydroxystearanilide, octyl N-(3,5-di-tert-butyl-4-hydroxyphenyl)carbamate;
or an ester of β-(3,5-di-tert-butyl-4-hydroxyphenyl)propionic acid with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxalamide, 3-thiaundecanol, 3-thiapentadecanol, trimethylhexanediol, trimethylolpropane, 4-hydroxymethyl-1-phospha-2,6,7-trioxabicydo[2.2.2]octane or 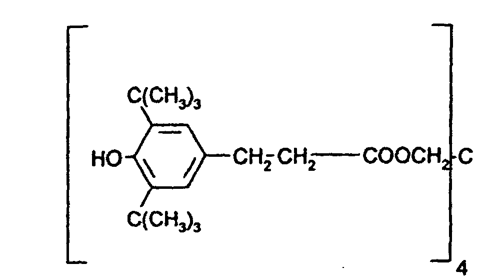 β-(3,5-di-tert-butyl-4-hydroxyphenyl)propionic ester of pentaerythritol 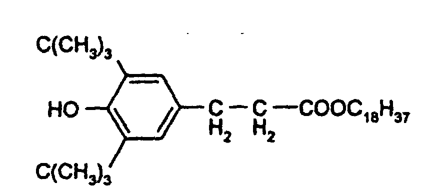 octadecyl β-(3,5-di-tert-butyl-4-hydroxyphenyl)propionate 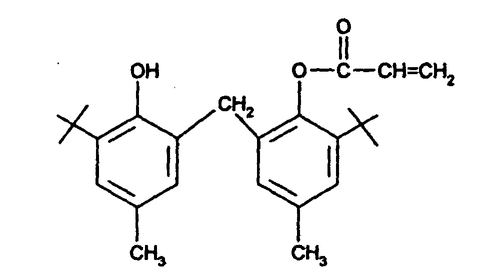 2-(1,1-dimethylethyl)-6-[[3-(1,1-dimethylethyl)-2-hydroxy-5-methylphenyl]methyl]-4-methylphenyl 2-propenoate; 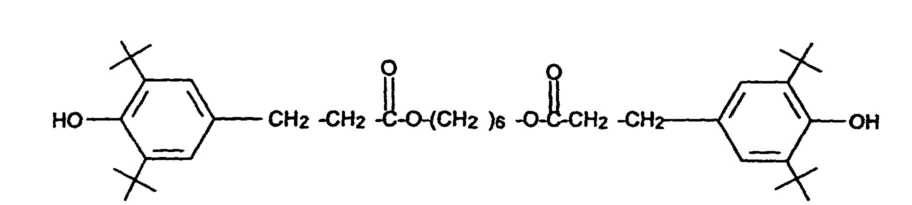 1,6-hexanediyl 3,5-bis(1,1-dimethylethyl)-4-hydroxyphenylpropanoate; 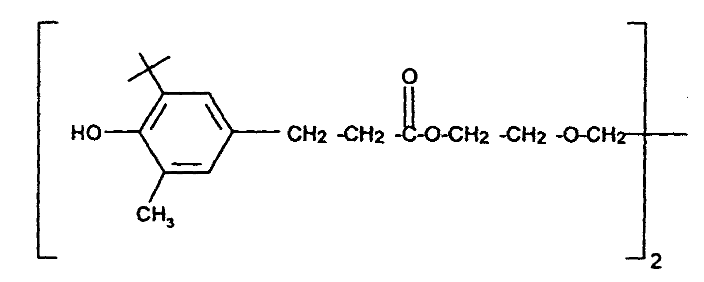 1,2-ethanediylbis(oxy-2,1-ethanediyl) 3-(1,1-dimethylethyl)-4-hydroxy-5-methyl-phenylpropanoate; 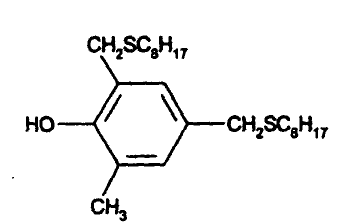 {2-methyt-4,6-bis[(octylthio)methyl]phenol}; 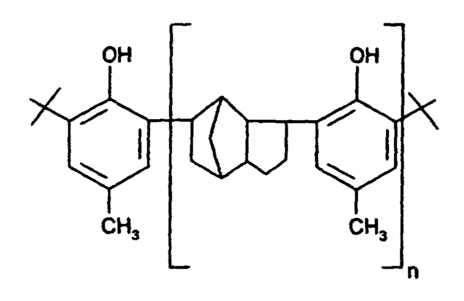 butylated reaction product of para-cresol and dicyclopentadiene (average molecular weight 600-700) 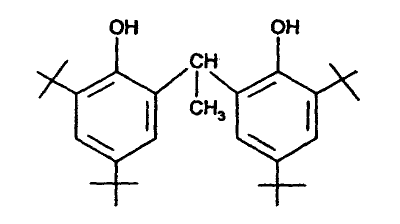 2,2'-ethylidene-bis-(4,6-di-tert-butylphenol); 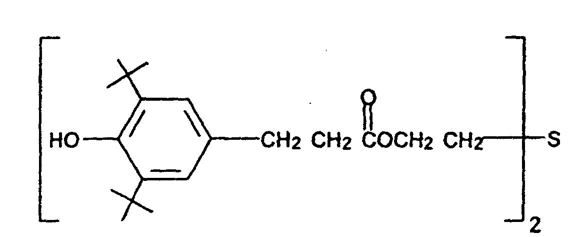 thiodi-2,1-ethanediyl 3,5-bis(1,1-dimethylethyl)-4-hydroxyphenylpropanoate; 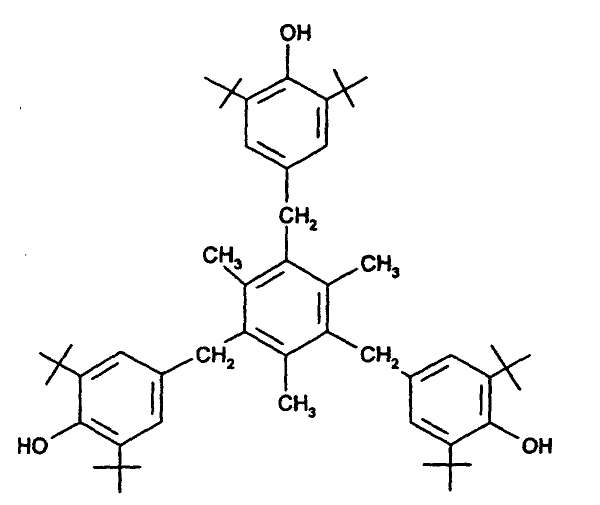 4,4',4"-[(2,4,6-trimethyl-1,3,5-phenyltriyl)tris (methylene)]tris[2,6-bis(1,1-dimethylethyl)-phenol]; 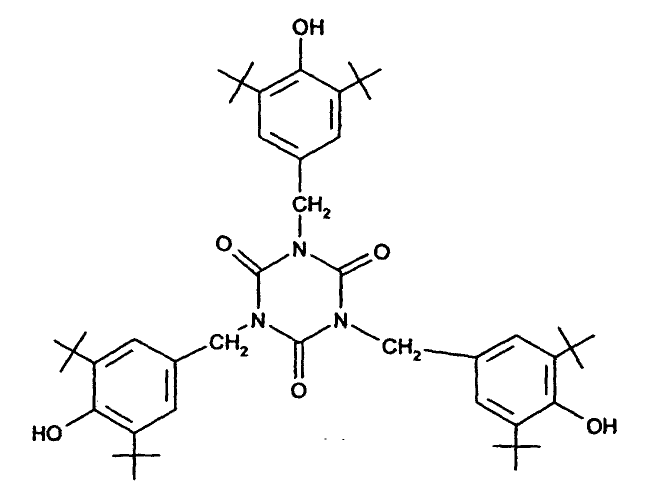 1,3,5-tris[[3,5-bis(1,1-dimethylethyl)-4-hydroxyphenyl]methyl]-1,3,5-triazine-2,4,6(1H,3H,5H)-trione.

12. Granules according to claim 1, which comprise as phosphonate dimethyl 2,5-di-tert-butyl-4-hydroxybenzyl-phosphonate, diethyl 3,5-di-tert-butyl-4-hydroxybenzylphosphonate, dioctadecyl 3,5-di-tert-butyl-4-hydroxybenzylphosphonate, dioctadecyl-5-tert-butyl-4-hydroxy-3-methylbenzyl-phosphonate and the calcium salt of 3,5-di-tert-butyl-4-hydroxybenzylphosphonic acid monoethyl ester.

13. Granules according to claim 1, which comprise as phosphites or phosphonites triphenyl phosphite, diphenyl alkyl phosphites, phenyl dialkyl phosphites, tris(diphenylalkylphosphito)amines, tris(nonylphenyl) phosphite, trilauryl phosphite, trioctadecyl phosphite, distearyl pentaerythrityl diphosphite, tris(2,4-di-tert-butylphenyl) phosphite, bis(2,4-di-tert-butylphenyl) pentaerythrityl diphosphite, tristearyl sorbityl triphosphite, tetrakis(2,4-di-tert-butylphenyl) 4,4'-biphenylenediphosphonite, 3,9-bis(2,4-di-tert-butyl-4-methylphenoxy)-2,4,8,10-tetraoxa-3,9-diphosphaspiro[5.5]undecane, 3,9-tris(2,4,6-tris-tert-butylphenoxy)-2,4,8,10-tetraoxa-3,9-diphasphaspiro[5.5]undecane, 2,4,6-tris-tert-butylphenyl 2-butyl-2-ethyl-1,3-propanediyl phosphite and 2,2'-ethylidenebis(4,6-di-tert-butylphenyl) fluorophosphite.

14. Granules according to claim 1, which comprise as additional additive an oxide of metals of the second main group or sub group.

15. Granules according to claim 1, which comprise as epoxy compound an epoxide selected from the group consisting of 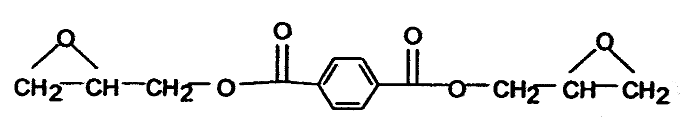 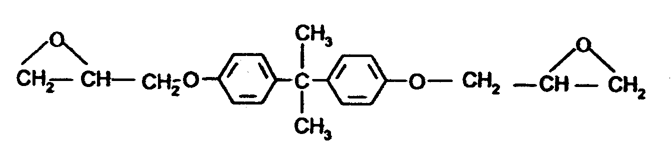 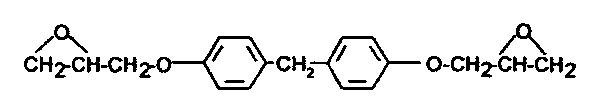 or

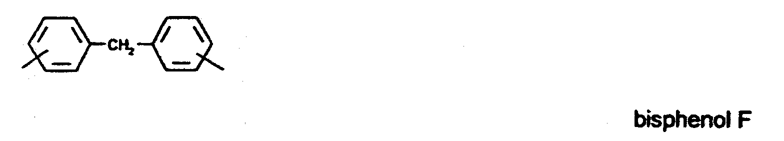

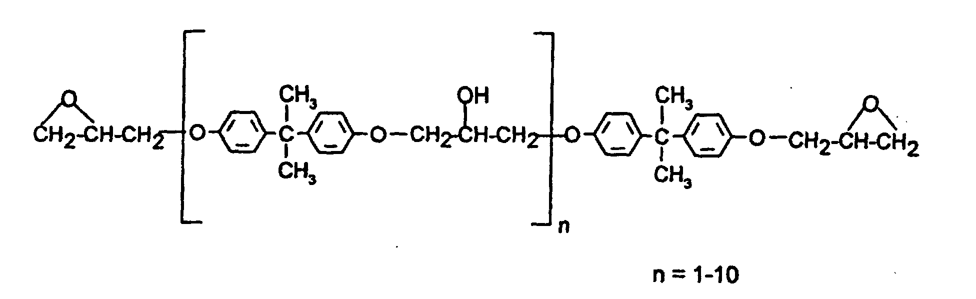

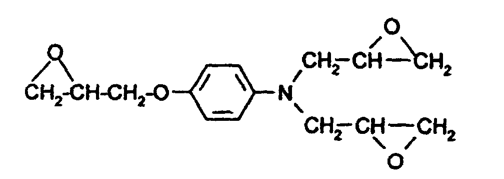

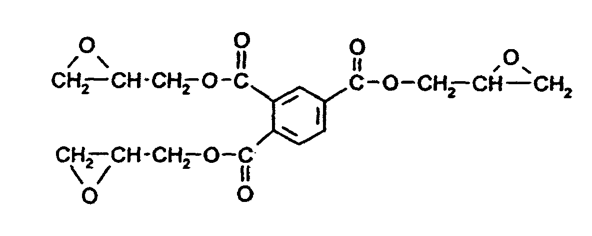

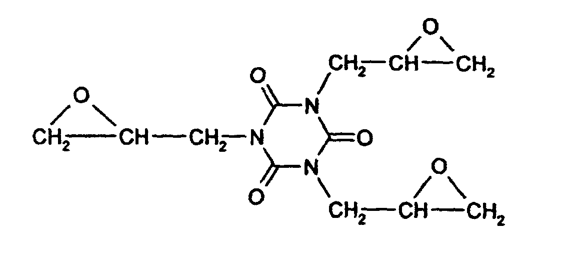

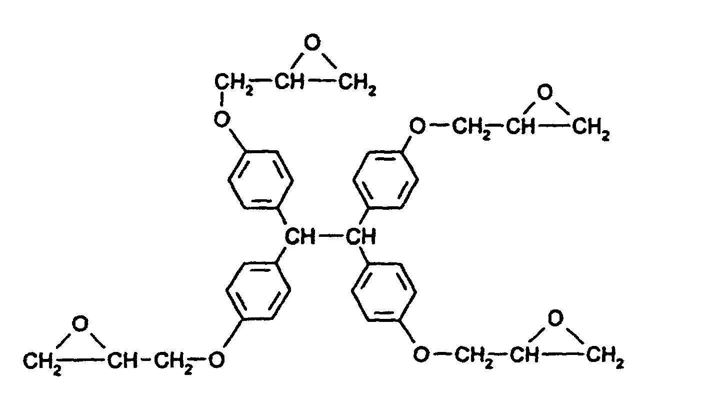

16. A process for preparing plastics additive granules, which comprises heating
a) a phenolic antioxidant, an organic phosphite or phosphonite, a phosphonate, a sterically hindered amine or a UV absorber, individually, or a mixture of these compounds, and
b) at least one polyfunctional epoxy compound which is solid at room temperature to an extent such that at least 80% by weight of the epoxy compound has melted, pressing the melt through a plate provided with dies or perforations, the die or perforation diameter being between 1 and 10 mm, and chopping the resulting strands in the plastic state to form granules.

17. A process according to claim 16, wherein the temperature before the outlet die (at the die head) is between 60-160° C.

18. Granules obtainable by a process according to claim 16.

19. The use of granules according to claim 1 for stabilizing organic polymers.

## Revendications

1. Granulé d'additifs pour matières synthétiques, pauvre en poussière, renfermant
a) un antioxydant phénolique, un phosphite ou phosphonite organique, un phosphonate, une amine à encombrement stérique ou un absorbeur d'UV ou un mélange de ces composés et
b) au moins un composé époxyde solide à température ambiante.

2. Granulé selon la revendication 1 renfermant en tant que composant b) un époxyde multifonctionnel.

3. Granulé selon la revendication 1 présentant une teneur de 10 à 90 % en poids en un composé époxyde.

4. Granulé selon la revendication 1 présentant une distribution granulométrique comprise entre 1 mm et 6 mm définie selon ISO 3435.

5. Granulé selon la revendication 1 présentant une masse volumique en vrac supérieure à 500 g/l.

6. Granulé selon la revendication 1 présentant une coulabilité inférieure à 15s (tR15) selon DIN 53492.

7. Granulé selon la revendication 1 présentant un taux de fines pas plus de 0,1 % en poids selon le test de Heubach.

8. Granulé selon la revendication 1 renfermant encore d'autres additifs de matières synthétiques pris dans le groupe comprenant des hydrotalcites, des oxydes ou carbonates métalliques, des savons métalliques, des antistatiques, des agents anti-blocage, des agents ignifugeants, des thioesters, des lubrifiants internes et externes, des adjuvants de transformation ou pigments.

9. Granulé selon la revendication 1 constitué par 30 à 80 % en poids de composé époxyde, 5 à 25 % en poids d'un antioxydant de type phénols à encombrement stérique, 5 à 25 % en poids d'un phosphite ou phosphonite, 10 à 40 % en poids de CaO et 1 à 5 % en poids de stéarate de Ca.

10. Granulé selon la revendication 1 constitué par 50 à 80 % en poids de composé époxyde et 50 à 20 % en poids d'un phosphonate.

11. Granulé selon la revendication 1 renfermant en tant qu'anti-oxydant phénolique l'éther 3,5,3',5'-tétra-tert-butyl-4,4'-dihydroxydibenzylique, le 4-hydroxy-3,5-diméthylbenzyl-mercapto-acétate d'octadécyle, la tris-(3,5-di-tert-butyl-4-hydroxy-benzyl)aminé, le dithiotéréphthalate de bis-(4-tert-butyl-3-hydroxy-2,6-diméthylbenzyle), le sulfure de bis-(3,5-di-tert-butyl-4-hydroxy-benzyle), le 3,5-di-tert-butyl-4-hydroxybenzyl-mercapto-acétate d'isooctyle, le 1,3,5-tris-(3,5-di-tert-butyl-4-hydroxybenzyl)-2,4,6-triméthyl-benzène, le 1,4-bis-(3,5-di-tert-butyl-4-hydroxybenzyl)-2,3,5,6-tétra-méthylbenzène, le 2,4,6-tris-(3,5-di-tert-butyl-4-hydroxybenzyl)-phénol ;
la 2,4-bis-octylmercapto-6-(3,5-di-tert-butyl-4-hydroxyanilino)-1,3,5-triazine, la 2-octylmercapto-4,6-bis-(3,5-di-tert-butyl-4-hydroxyanilino)-1,3,5-triazine, la 2-octylmercapto-4,6-bis-(3,5-di-tert-butyl-4-hydroxyphénoxy)-1,3,5-triazine, la 2,4,6-tris-(3,5-di-tert-butyl-4-hydroxyphénoxy)-1,2,3-triazine, l'isocyanurate de 1,3,5-tris-(3,5-di-tert-butyl-4-hydroxybenzyle), l'isocyanurate de 1,3,5-tris-(4-tert-butyl-3-hydroxy-2,6-diméthylbenzyle), la 2,4,6-tris-(3,5-di-tert-butyl-4-hydroxyphényléthyl)-1,3,5-triazine, la 1,3,5-tris-(3,5-di-tert-butyl-4-hydroxy-phénylpropionyl)-hexahydro-1,3,5-triazine, l'isocyanurate de 1,3,5-tris-(3,5-dicyclohexyl-4-hydroxybenzyle) ;
le 4-hydroxyanilide d'acide laurique, le 4-hydroxyanilide d'acide stéarique, le N-(3,5-di-tert-butyl-4-hydroxyphényl)-carbamate d'octyle,
ou un ester de l'acide β-(3,5-di-tert-butyl-4-hydroxyphényl)-propionique avec le méthanol, l'éthanol, l'octanol, l'octadécanol, le 1,6-hexanediol, le 1,9-nonanediol, l'éthylèneglycol, le 1,2-propanediol, le néopentylglycol, le thiodiéthylèneglycol, le diéthylèneglycol, le triéthylèneglycol, le pentaérythritol, l'isocyanurate de tris-(hydroxyéthyle), le diamide d'acide N,N'-bis-(hydroxyéthyl)-oxalique, le 3-thiaundécanol, le 3-thiapentadécanol, le triméthylhexanediol, le triméthylolpropane ou le 4-hydroxyméthyl-1-phospha-2,6,7-trioxabicyclo-[2.2.2]-octane ou 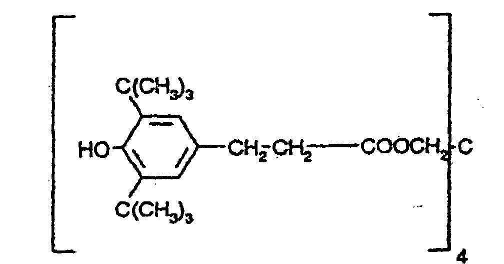 β-(3,5-di-tert-butyl-4-hydroxyphényl)propionate de pentaérythritol 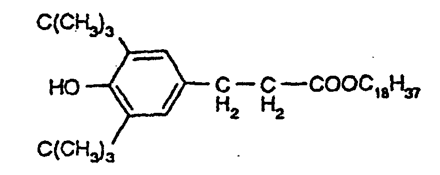 β-(3,5-di-tert-butyl-4-hydroxyphényl)propionate d'octadécyle 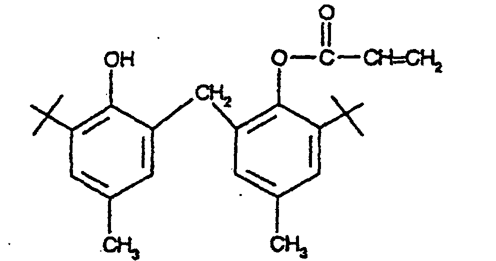 {2-propénoate de 2-(1,1-diméthyléthyl)-6-[[3-(1,1-diméthyléthyl)-2-hydroxy-5-méthylphényl]-méthyl]-4-méthylphényle} 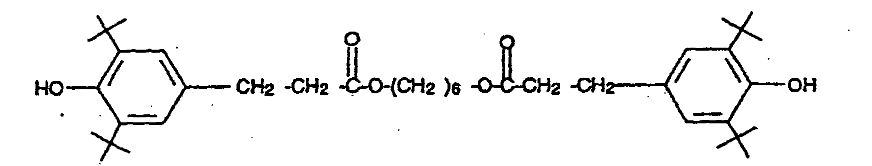 {3,5-bis(1,1-diméthyl-éthyl)-4-hydroxy-phényl-propanoate de 1,6-hexanediyle} 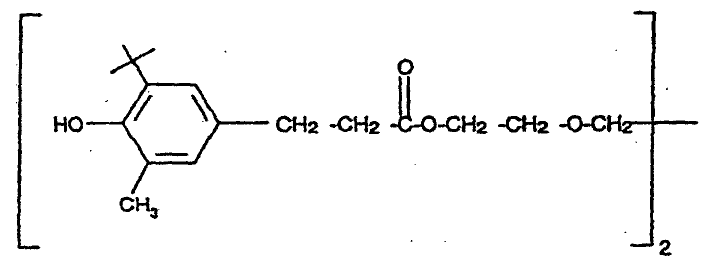 {3-(1,1-diméthyléthyl)-4-hydroxy-5-méthyl-phényl-propanoate de 1,2-éthanediylbis(oxy-2,1-éthanediyle)} 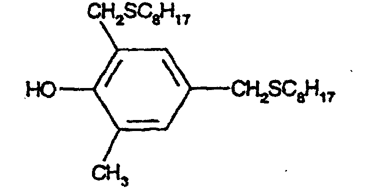 {2-méthyl-4,6-bis[(octylthio)méthyl]-phénol} 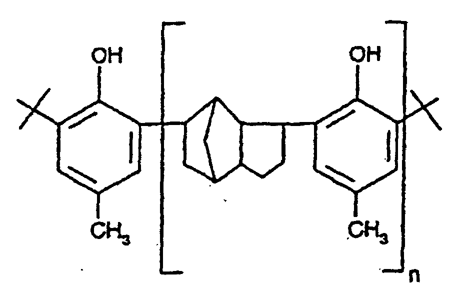 Produit réactionnel butylé de para-crésol et de dicyclopentadiène (poids moléculaire moyen de 600 à 700) 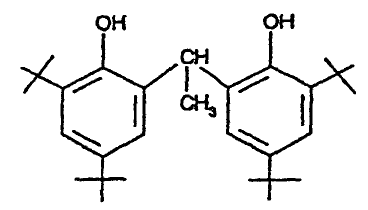 {2,2'-éthylidène-bis-(4,6-di-tert-butylphénol)} 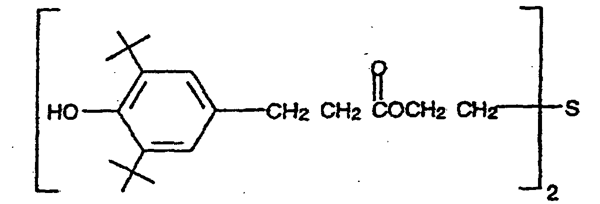 {3,5-bis(1,1-diméthyléthyl)-4-hydroxy-phénylpropanoate de thiodi-2,1-éthanediyle} 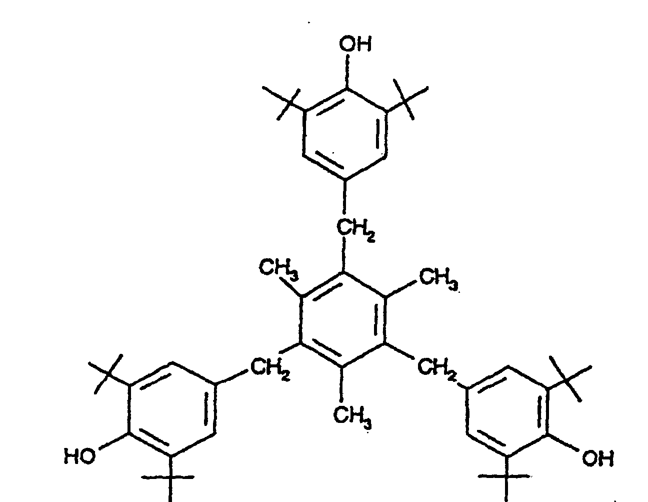 {4,4',4"-[(2,4,6-triméthyl-1,3,5-phényltriyl)tris-(méthylène)]tris[2,6-bis(1,1-diméthyléthyl)phénol]} 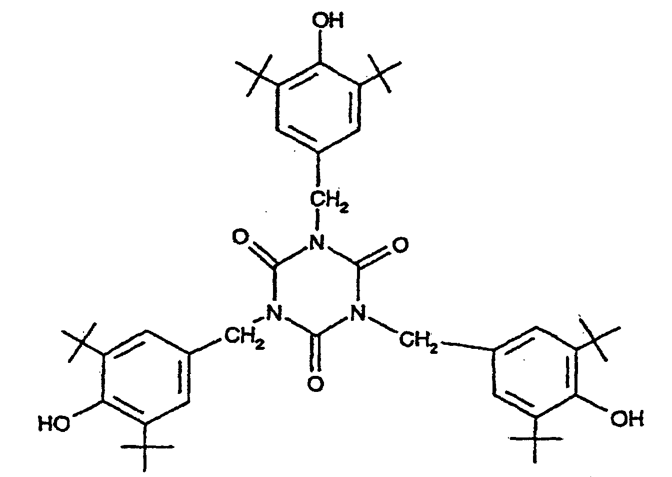 {1,3,5-tris[[3,5-bis(1,1-diméthyléthyl)-4-hydroxy-phényl]méthyl]-1,3,5-triazine-2,4,6(1H,3H,5H)-trione}.

12. Granulé selon la revendication 1 renfermant en tant que phospohonate le 2,5-di-tert-hutyl-4-hydroxyhenzylphosphonate de diméthyle, le 2,5-di-tert-butyl-4-hydroxybenzylphosphonate de diéthyle, le 3,5-di-tert-butyl-4-hydroxybenzylphsophonate de dioctadécyle, le 5-tert-butyk-4-hydroxy-3-méthylbenzylphosphonate de dioctadécyle ou le sel de Ca du 3,5-di-tert-butyl-4-hydroxybenzyl-phosphonate de monoéthyle.

13. Granulé selon la revendication 1 renfermant en tant que phosphites ou phosphonites le phosphite de triphényle, les phosphites de diphénylalkyle, les phosphites de phényldialkyle, des tris(diphénylalkylphosphit)amines, le phosphite de tris-(nonylphényle), le phosphite de trilauryle, le phosphite de trioctadécyle, le diphosphite de distéaryl-pentaérythritol, le phosphite de tris-(2,4-di-tert-butylphényle), le diphosphite de bis-(2,4-di-tert-butylphényl)-pentaérythritol, le triphosphite de tristéaryl-sorbitol, le diphosphonite de tétrakis-(2,4-di-tert-butylphényl)-4,4'-biphénylène, le 3,9-bis-(2,4-di-tert-butyl-4-méthylphénoxy)-2,4,8,10-tétraoxa-3,9-diphosphaspiro[5.5]undécane, le 3,9-tris-(2,4,6-tris-tert-butylphénoxy)-2,4,8,10-tétraoxa-3,9-diphosphaspiro[5,5]undécane, le phosphite de 2,4,6-tris-tert-butylphényl-2-butyl-2-éthyl-1,3-propandiol ou le fluorophosphite de 2,2'-éthylidène-bis-(4,6-di-tert-butylphényle).

14. Granulé selon la revendication 1, qui renferme en tant qu'additif supplémentaire un oxyde des métaux du deuxième groupe principal ou sous-groupe.

15. Granulés selon la revendication 1, qui renferment en tant que composé époxyde un époxyde pris dans le groupe comprenant

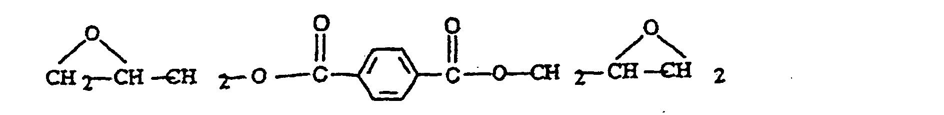

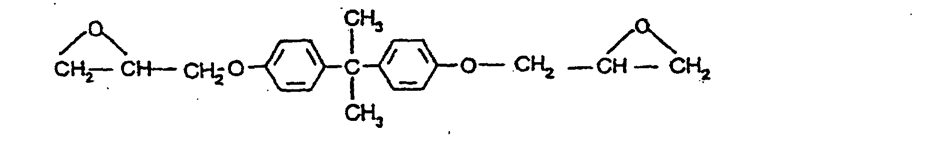

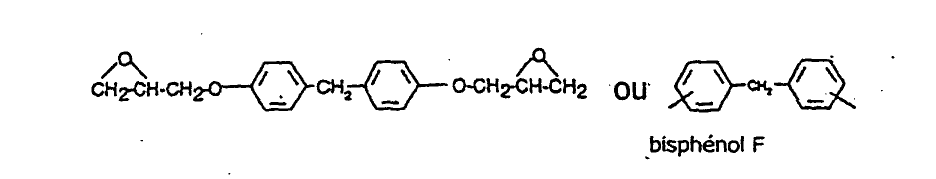

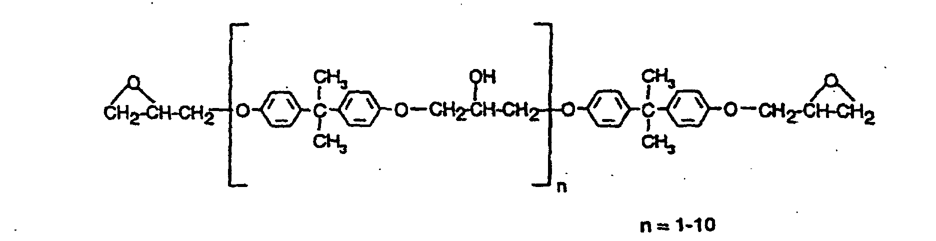

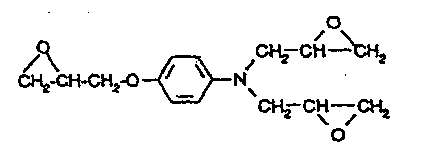

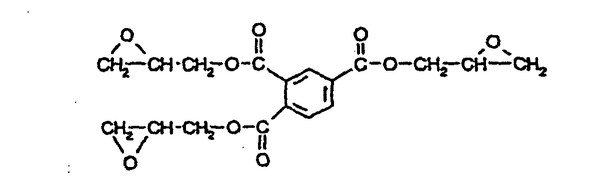

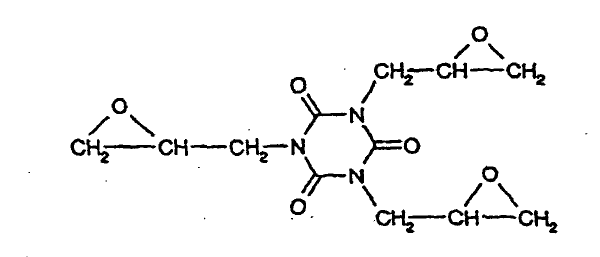

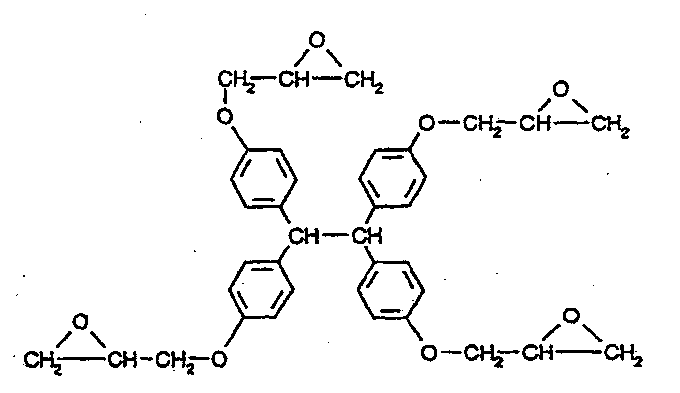

16. Procédé pour la préparation de granulé d'additifs de matières synthétiques, **caractérisé en ce que**
a) on chauffe un antioxydant phénolique, un phosphite ou phosphonite organique, un phosphonate, une amine à encombrement stérique
ou un absorbeur d'UV individuellement ou un mélange de ces composés et
b) au moins un composé époxyde multifonctionnel solide à température ambiante jusqu'à ce qu'au moins 80 % en poids du composé époxyde soient fondus, on presse la matière fondue à travers une plaque munie de buses ou de trous, le diamètre des buses ou des trous étant compris entre 1 et 10 mm, et on coupe les boudins ainsi obtenus à l'état plastique pour obtenir des granulés.

17. Procédé selon la revendication 16, **caractérisé en ce que** la température avant la buse de sortie (à la tête de buse) est comprise entre 60 et 160°C.

18. Granulé que l'on peut obtenir à l'aide du procédé de la revendication 16.

19. Utilisation du granulé selon la revendication 1 pour la stabilisation de polymères organiques.
